(19) Europäisches Patentamt
European Patent Office
Office européen des brevets

(11) **EP 1 386 710 B1**

(12) **EUROPEAN PATENT SPECIFICATION**

(45) Date of publication and mention
of the grant of the patent:
**27.06.2007 Bulletin 2007/26**

(21) Application number: **02722939.2**

(22) Date of filing: **07.05.2002**

(51) Int Cl.:
*B29C 35/12* (2006.01)    *B29C 35/02* (2006.01)
*B29C 39/06* (2006.01)    *B29C 39/38* (2006.01)
*H05B 6/60* (2006.01)    *H05B 6/50* (2006.01)
*H05B 6/52* (2006.01)    *H05B 6/54* (2006.01)

(86) International application number:
**PCT/JP2002/004437**

(87) International publication number:
**WO 2002/090081 (14.11.2002 Gazette 2002/46)**

(54) **METHOD OF MANUFACTURING HOT FORMED OBJECTS, AND DEVICE FOR CONTINUOUS HIGH-FREQUENCY HEATING**

VERFAHREN ZUR HERSTELLUNG HEISSGEFORMTER GEGENSTÄNDE SOWIE VORRICHTUNG ZUR HOCHFREQUENZDURCHLAUFERWÄRMUNG

PROCEDE DE FABRICATION DES OBJETS FORMES A CHAUD, ET DISPOSITIF DE CHAUFFAGE CONTINU PAR HAUTE FREQUENCE

(84) Designated Contracting States:
**AT BE CH CY DE DK ES FI FR GB GR IE IT LI LU MC NL PT SE TR**

(30) Priority: **09.05.2001 JP 2001139254
09.05.2001 JP 2001139256
09.05.2001 JP 2001139257**

(43) Date of publication of application:
**04.02.2004 Bulletin 2004/06**

(73) Proprietors:
• **Nissei Kabushiki Kaisha
Osaka-shi,
Osaka 541-0041 (JP)**
• **Yamamoto Vinita Kabushiki Kaisha
Osaka-shi,
Osaka-fu 543-0002 (JP)**

(72) Inventors:
• **Tamura, Tomoya,
c/o Nissei Kabushiki Kaisha
Osaka-shi, Osaka 541-0041 (JP)**
• **Okuda, Naoyuki,
c/o NISSEI KABUSHIKI KAISHA
Osaka-shi, Osaka 541-0041 (JP)**
• **Otani, Yoshiyuki,
c/o Nissei Kabushiki Kaisha
Osaka-shi, Osaka 541-0041 (JP)**
• **Kosaka, Tsutomu,
c/o Nissei Kabushiki Kaisha
Osaka-shi, Osaka 541-0041 (JP)**
• **Shinomiya, Yasuo,
c/o Nissei Kabushiki Kaisha,c
Osaka-shi, Osaka 541-0041 (JP)**
• **Haruta, Toshitaka,
c/o Nissei Kabushiki Kaisha
Osaka-shi, Osaka 541-0041 (JP)**
• **Karasawa, Taizo,
c/o Nissei Kabushiki Kaisha
Osaka-shi, Osaka 541-0041 (JP)**
• **Akesaka, Yoshio,
c/o Yamamoto Vinita Kabushiki Kaisha
Osaka-shi, Osaka 543-0002 (JP)**
• **Yanagitani, Masato,
c/o Yamamoto Vinita Kabushiki Kaisha
Osaka-shi, Osaka 543-0002 (JP)**
• **Nagata, Tsuneo,
c/o Yamamoto Vinita Kabushiki Kaisha
Osaka-shi, Osaka 543-0002 (JP)**
• **Yamamoto Yasuji,
c/o Yamamoto Vinita Kabushiki Kaisha
Osaka-shi, Osaka 543-0002 (JP)**

(74) Representative: **Bentz, Jean-Paul et al
Novagraaf Technologies
Cabinet Ballot
122, rue Edouard Vaillant
92593 Levallois-Perret Cedex (FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**EP 1 386 710 B1**

(56) References cited:
EP-A- 0 535 445          EP-A- 0 891 849
EP-A1- 0 891 849         CH-A- 242 728
CH-A- 349 720            DE-B- 1 029 921
GB-A- 985 442            GB-A- 2 040 802
JP-A- 8 132 450          JP-A- 58 089 960
JP-A- 61 177 119         US-A- 2 401 991
US-A- 4 906 172

• PATENT ABSTRACTS OF JAPAN vol. 2003, no. 06, 3 June 2003 (2003-06-03) -& JP 2003 038106 A (NISSEI CO LTD), 12 February 2003 (2003-02-12)
• PATENT ABSTRACTS OF JAPAN vol. 2003, no. 05, 12 May 2003 (2003-05-12) -& JP 2003 031349 A (NISSEI CO LTD; YAMAMOTO VINITA CO LTD), 31 January 2003 (2003-01-31)

**Description**

TECHNICAL FIELD

The present invention relates to a method for manufacturing heated and molded articles by heating raw materials fed in molds, especially a method for manufacturing heated and molded articles, including a process for dielectrically heating raw materials by applying high-frequency alternating current to molds. In addition, the present invention relates to an apparatus and a method for high-frequency heating to heat objects placed between electrodes by applying high-frequency alternating current, especially a continuous and contactless dielectric heating apparatus and a continuous and contactless high-frequency heating method, wherein the objects can be dielectrically heated by applying high-frequency alternating current to the continuously moving electrodes with no contact, for example, which can be desirably used as a method for manufacturing the heated and molded articles.

BACKGROUND ART

A high-frequency heating method has been known as an art capable of effectively performing heat treatment on an object to be heated. More particularly, a high-frequency heating method is, in general, a method to dielectrically heat the object by applying high-frequency alternating current (hereinafter referred to as high frequency) to a pair of opposite electrodes which the object is placed between. This art has an advantage not only that the object can be uniformly heated, but also that it is easier to control heating, by using dielectric heating.

Generally, in the heating technique using high frequency, the position of the heating electrodes is almost fixed. When the objects to be heated are transferred to the heating electrodes and stopped therein, high frequency is applied for heating. For example, this high-frequency heating technique is used for manufacturing plywood or veneer, disclosed in (A) "Patent No. Hei 11-42755 (publication dated February 16, 1999)" of the Japanese unexamined patent application publication.

The above art (A) uses an apparatus equipped with two high-frequency heating parts; a first high-frequency heating part performing high-frequency heating, where a plate-type material to be heated is placed between a pair of plate-type opposite electrodes (heating electrodes or electrodes), and a second high-frequency heating part performing high-frequency heating where a material to be heated is placed between an upper latticed electrode and a lower latticed electrode, consisting of bar-type electrodes placed in parallel facing to a surface of the plate-type material to be heated.

For example, an adhesive is applied to a surface on a core material consisting of a wood frame and a metal frame, and another surface material is attached to the core material to make materials to be heated. The materials are transferred to the first high-frequency heating part by a conveyer in order to be applied to high frequency heating, and then transferred to the second high-frequency heating part in order to be applied to high frequency heating again.

Thus, in this art, high-frequency heating is performed on the material to be heated by combination of different heating electrodes, not only by high-frequency heating. Even if a core material included in the material to be heated, consists of several kinds of materials having a different electrical property, it is possible to effectively attach a surface material to the core material by performing a combination of high-frequency heating parts with a different heating property.

The high-frequency heating part in the above art (A), will be particularly explained below. A pair of electrodes is used in combination both on the first high-frequency heating part and on the second high-frequency heating part. One electrode is a feeder electrode block connected to a power source section, and the other electrode is a grounding electrode block connected to the earth. Each of the blocks may consist of an electrode or electrodes.

When high frequency is applied, the objects to be heated are placed between the blocks being insulated from each other. Accordingly, high frequency applied between the blocks can heat the objects.

By the way, an art for manufacturing molded articles by using molds such as metal molds, portioning raw materials for molding (raw materials) in the molds and heating (hereinafter referred to as a method for heating molds), has been widely used, as in US-A-5 591 491.

The above method for heating molds has been widely used also for manufacturing molded and baked confectioneries including edible containers such as cones, Monaka, and wafers, etc. In a technical field of manufacturing the molded and baked confectioneries, various kinds of starch is a main ingredient. A mixture of water and starch, for example, viscose dough or slurry dough, is used.

A technical field of molding the watery mixture primarily containing starch through the method for heating molds, is applied not only to make the molded and baked confectioneries, but also to make biodegradable molded articles. In this specification, the articles attained by heating and molding the watery mixture primarily containing starch, for example, molded and baked confectioneries and biodegradable molded articles, are referred to as baked and molded articles.

In the above method for heating molds disclosed in US-A-5 591 491, an external heating method that metal molds are simply heated and raw materials are heated and molded through thermal conduction, was conventionally utilized. However, the conventional external heating method needs a long molding time with less production efficiency.

It also causes uneven baking and thereby uneven molded articles due to unequal temperature inside or between molds. Thus, in recent years the above-mentioned high-frequency heating method has been widely used as the method for heating molds.

In general, the high-frequency heating method is a method to dielectrically heat raw materials by applying high frequency to molds (equivalent to heating electrodes), which has advantages of uniformly heating and molding raw materials and easy heating control.

The above-mentioned method to temporarily suspend the objects to be heated for application of high frequency is effective for objects of relatively large size and relatively high unit cost, such as plywood or veneer, as the above-mentioned art (A). However, this method is ineffective for objects of relatively small size and relatively low unit cost, as the above molded articles.

To solve the above problems, the applicants previously proposed an art using a continuous manufacturing process that many molds are continuously transferred and heated in order to improve production efficiency in production of biodegradable molded articles by high-frequency heating, disclosed in (B) "Patent No. Hei 10-230527 (publication dated September 2, 1998)" of the Japanese unexamined patent application publication.

In the production of baked and molded articles including baked and molded confectioneries, the continuous manufacturing process that many metal molds are continuously transferred and heated, is generally used to improve production efficiency. According to the above art (B), in the continuous manufacturing process, no contact on method is adopted that high frequency is applied to heating electrodes (i.e. generically called heating units including metal molds or molds) without direct contact on thereof.

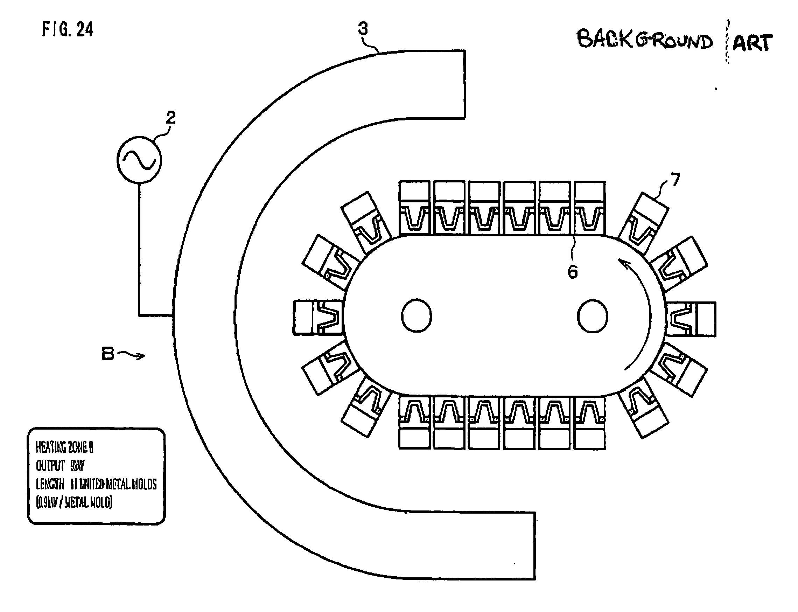

For example, as shown in Fig. 24, in the manufacturing apparatus disclosed in the above unexamined patent application publication, the metal molds 7 are moved to the direction of the arrow shown in the figure by a conveyer 6 (moving means or conveyer means) disposed in no-end plate-type layout. In a heating zone B (heating area) performing dielectric heating, a power feeding section 3 (power feeding means) is placed along the conveyer 6. Also, a power receiving section (power receiving means) matching to the power feeding section 3 with no contact is provided on the metal molds 7 (not shown in Fig.24). The power feeding section 3 and the power receiving section constitute a high-frequency power feeding and receiving section.

When the metal molds 7 wherein the raw materials are fed are transferred by the conveyer 6 and reach the heating zone B, high frequency is applied to the metal molds 7 from the power feeding section 3 with no contact, and the raw materials inside the metal molds 7 (raw materials for molding) are dielectrically heated. In result, the raw materials can be heated effectively and steadily, and the molded articles can be made with excellent moldability and physical property.

Namely, in the above art (B), it is possible to apply high frequency to the continuously moving metal molds 7 from the power feeding section 3 provided in the heating zone B. Thus, when applying high frequency, it is possible to dielectrically heat the raw materials inside the metal molds 7 without suspending the application. In result, the manufacturing process can be easily controlled and production efficiency of the biodegradable molded articles is also improved.

Especially, in the continuous manufacturing process according to the above art (B), a "no contact on" method is used that high frequency is applied to heat the metal molds 7, i.e., the heating electrodes, without direct contact on with the power feeding section 3, giving an advantage that generation of a spark can be restrained between the power feeding section 3 and the metal molds 7 in the heating zone.

Thus, it is possible not only to heat all of the objects to be heated uniformly through high-frequency heating, transferring and continuously heating the objects by the moving means, but also to reduce a heating time for some kinds of objects.

In the large-scale manufacturing apparatus, the apparatus becomes very large on a whole. Moreover, for the purpose of improving production efficiency, not only in the large-scale apparatus, but also in many apparatuses, a united metal mold is used which consists of many metal molds 7, for example, placed in parallel and transferred by the conveyer 6. Thus, the number of metal molds 7 transferred to the heating zone B significantly increases accordingly.

Therefore, if the manufacturing apparatus becomes larger, the number of raw materials in the metal molds 7 significantly increases. In the heating zone B, a larger output of high frequency must be applied in proportion to the number of raw materials.

More particularly, for example, in a small manufacturing apparatus, as shown in Fig. 24, twenty-two metal molds 7 are mounted on an outer periphery of the conveyer 6, and eleven metal molds 7 may be heated in the heating zone B. If a high-frequency output applied from the power source section 2 is set at 9 kW, the high-frequency output applied to each of the metal molds 7 is about 0.8 kW.

In this case, since the high-frequency output is not so large in the entire heating zone B, large high-frequency energy does not concentrate even if high frequency is localized on a certain position in the heating zone B. Accordingly, overheating or a spark is not generated, and there is little influence on the production of the molded articles. In other words, the art disclosed in the above Japanese unexamined patent application publication is a very preferable art for a small-scale manufacturing apparatus.

On the other hand, in a large-scale manufacturing apparatus, a high-frequency output in the entire heating zone becomes very large, and high-frequency energy increasingly concentrates on part of the heating zone. In result, concentration of high-frequency energy, which is not almost found in a small-scale manufacturing apparatus, causes overheating, a spark or dielectric breakdown. It is thus difficult to use the art disclosed in the above-mentioned unexamined patent application publication for a large-scale manufacturing apparatus.

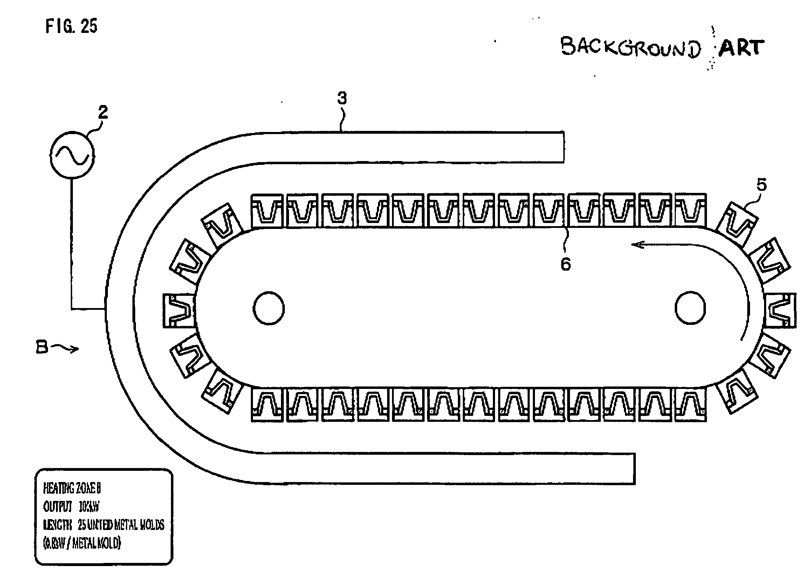

More particularly, as shown in Fig. 25, thirty-six united metal molds 5 are mounted on an outer periphery of the conveyer 6 and twenty-five united metal molds 5 may be heated in the heating zone B. If the united metal mold 5 is, for example, a unit consisting of five metal molds 7, an output from the power source section 2 should be set at 100kW to apply about 0.8kW high frequency to each of the metal molds 7, as the above small manufacturing apparatus. In the above example, it is simply calculated that high-frequency energy up to more than 10 times as that of the small manufacturing apparatus may be concentrated.

In addition, in the large-scale manufacturing apparatus, a length of the power feeding section 3 located in the heating zone B is longer than that for a small-scale manufacturing apparatus. For example, a length of the power feeding section 3 equals to eleven metal molds 7 in Fig. 24, while it equals to twenty-five metal molds 7 (united metal molds 5) in Fig. 25. Depending on a shape of the power feeding section 3, a high-frequency potential is more likely to be localized, thereby practically making it difficult to provide the power feeding section 3 longer than a specific length.

Namely, high-frequency energy more than what can be simply calculated from the length (width) of the heating zone B or the number of united metal molds 5 is more likely to concentrate. To prevent the concentration of high-frequency energy, it is necessary to limit a length of the power feeding section 3, that is, a length of the heating zone B, and thereby significantly reducing efficiency of heating and molding.

Further reference is made to US 4 906 172.

DISCLOSURE OF INVENTION

After full consideration, the applicants of the present invention learned that the above objectives can be accomplished and the present invention can be completed by dividing a heating area into sub-areas.

Therefore, a method for manufacturing heated and molded articles in accordance with claim 1 is disclosed.

In this method, when high-frequency alternating current (high frequency) is continuously and contactless applied to the continuously moving molds , the heating area wherein high frequency is applied, is divided into sub-areas, each of which has power source means and power feeding means, thereby restraining or preventing concentration of high-frequency energy in the heating zone. In result, overheating or dielectric breakdown is effectively prevented, and heated and molded articles can be produced very efficiently and steadily.

Additionally, is also considered a continuous high-frequency heating apparatus in accordance with claim 21.

According to the above structure, when high-frequency alternating current (high frequency) is continuously applied to the continuously moving heating units, the heating area wherein high frequency is applied, is divided into sub-areas, each of which has power source means and power feeding means, thereby preventing concentration of high-frequency energy in the heating area. In result, it is possible to prevent overheating of the object to be heated or dielectric breakdown effectively and to perform very quality heating treatment.

Another objects, features, and merits will appear more fully from the following description. Also, advantages of the present invention will be apparent from the following description taken in connection with the accompanying drawings.

BRIEF DESCRIPTION OF DRAWINGS

Fig. 1 is a diagrammatic illustration showing an example of an outlined structure of a manufacturing apparatus used in a manufacturing method in accordance with an embodiment in the present invention.

Fig. 2 is a circuit diagram showing an outlined structure of the manufacturing apparatus shown in Fig. 1.

Fig. 3 (a) and (b) are perspective views showing an example of united metal molds used for the manufacturing apparatus shown in Fig. 1.

Fig. 4 (a) and (b) are perspective views showing another example of united metal molds used for the manufacturing apparatus shown in Fig. 1.

Fig. 5 is a bird's-eye view showing an example of a configuration of cone cups as molded articles made by a manufacturing method in accordance with the present invention. Fig. 5 (b) is a cross sectional view as seen along the line D-D of Fig. 5 (a).

Fig. 6 (a) is a bird's-eye view of an example of a configuration of a waffle cone as a molded article made by a manufacturing method in accordance with the present invention. Fig. 6 (b) is a cross sectional view as seen along the line E-E of Fig. 6 (a).

Fig. 7 (a) is a bird's-eye view showing an example of a configuration of a tray as a molded article made by a manufacturing method in accordance with the present invention. Fig. 7 (b) is a cross sectional view as seen along the line F-F of Fig.7 (a).

Fig. 8 (a) and (b) are diagrammatic illustrations showing an example of a layout of the conveyer included in the manufacturing apparatus shown in Fig. 1.

Fig. 9 (a) and (b) are diagrammatic illustrations showing an example of a structure for a gas heating section as external heating means included in the manufacturing apparatus shown in Fig. 1.

Fig. 10 (a), (b), and (c) are diagrammatic illustrations showing an example of a structure of a power feeding and receiving section included in the manufacturing apparatus shown in Fig. 1.

Fig. 11 (a) and (b) are diagrammatic illustrations showing an example of a more specific structure of the power feeding and receiving section shown in Fig. 10.

Fig. 12 is a diagrammatic illustration showing another example of an outlined structure of the manufacturing apparatus shown in Fig. 1.

Fig. 13 is a diagrammatic illustration showing still another example of an outlined structure of the manufacturing apparatus shown in Fig. 1.

Fig. 14 is a diagrammatic illustration showing an example of an outlined structure of a manufacturing apparatus used in a manufacturing method in accordance with another embodiment in the present invention.

Fig. 15 is a diagrammatic illustration showing another example of an outlined structure of the manufacturing apparatus shown in Fig. 14.

Fig. 16 is a diagrammatic illustration showing another example of an outlined structure of the manufacturing apparatus shown in Fig. 14.

Fig. 17 is a diagrammatic illustration showing an example of an outlined structure of a manufacturing apparatus used in a manufacturing method in accordance with still another embodiment in the present invention.

Fig. 18 is a diagrammatic illustration showing another example of an outlined structure of the manufacturing apparatus shown in Fig. 17.

Fig. 19 (a) and (b) are diagrammatic illustrations showing an example of a structure of the gas heating section as external heating means included in the manufacturing apparatus shown in Fig. 18.

Fig. 20 (a) and (b) are diagrammatic illustrations showing an example of a disposition of a conveyer included in a manufacturing apparatus used in a manufacturing method in accordance with still another embodiment in the present invention.

Fig. 21 (a) and (b) are diagrammatic illustrations showing another example of a disposition of the conveyer included in the manufacturing apparatus used in the manufacturing method in accordance with still another embodiment in the present invention.

Fig. 22 (a) and (b) are diagrammatic illustrations showing still another example of a disposition of the conveyer included in the manufacturing apparatus used in the manufacturing method in accordance with still another embodiment in the present invention.

Fig. 23 (a) and (b) are diagrammatic illustrations showing still another example of the layout for the conveyer included in the manufacturing apparatus used in the manufacturing method in accordance with still another embodiment in the present invention.

Fig. 24 is a diagrammatic illustration showing an example of an outlined structure of a conventional manufacturing apparatus.

Fig. 25 is a diagrammatic illustration showing an example of an outlined structure in case that the conventional manufacturing apparatus is made larger.

Fig. 26 is a diagrammatic illustration showing an example of an outlined structure of a manufacturing apparatus used in a manufacturing method in accordance with still another embodiment in the present invention.

Fig. 27 is a diagrammatic illustration showing another example of an outlined structure of the manufacturing apparatus shown in Fig. 26.

Fig. 28 (a) and (b) are diagrammatic illustrations showing a condition in case that plate-type power receiving sections are inserted in the neighborhood of an inlet at a rail-shaped power feeding section shown in Fig. 10 (a) to (c).

Fig. 29 (a) and (b) are diagrammatic illustrations showing a condition in case that plate-type power receiving sections are inserted in the neighborhood of an inlet at a rail-shaped power feeding section for a manufacturing apparatus used in a manufacturing method in accordance with still another embodiment in the present invention.

Fig. 30 (a) and (b) are diagrammatic illustrations showing another example of a condition in case that plate-type power receiving sections are inserted in the neighborhood of an outlet at a rail-shaped power feeding section for a manufacturing apparatus shown in Fig. 29 (a) and (b).

Fig. 31 (a) and (b) are diagrammatic illustrations showing a condition in case that the plate-type power receiving sections are inserted in the neighborhood of an outlet at the rail-shaped power feeding section shown in Fig. 10 (a) to (c).

Fig. 32 (a) and (b) are diagrammatic illustrations showing a condition in case that plate-type power receiving sections are inserted in the neighborhood of an outlet at a rail-shaped power feeding section for a manufacturing apparatus used in a manufacturing method in accordance with still another embodiment in the present invention.

Fig. 33 (a) and (b) are diagrammatic illustrations showing another example of a condition in case that the plate-type power receiving sections are inserted in the neighborhood of an inlet at the rail-shaped power feeding section for the manufacturing apparatus shown in Fig. 32 (a) and (b).

Fig. 34 (a) is a diagrammatic illustration showing a change in the number of power receiving sections inserted into the rail-shaped power feeding section including R-member for a manufacturing apparatus used in a manufacturing method in accordance with still another embodiment in the present invention. Fig. 34 (b) is a graph showing a change in anode current accompanying a change in the number of the power receiving sections inserted.

Fig. 35 (a) is a diagrammatic illustration showing a change in the number of power receiving sections inserted in a rail-shaped power feeding section including R-member for a manufacturing apparatus used in a manufacturing method in accordance with still another embodiment in the present invention. Fig. 35 (b) is a graph showing a change in anode current accompanying a change in the number of the power receiving sections inserted.

Fig. 36 (a) is a diagrammatic illustration showing a change in the number of the power receiving sections inserted in the rail-shaped power feeding section consisting of straight-line members for the manufacturing apparatus used in the manufacturing method in accordance with still another embodiment in the present invention. Fig. 36 (b) is a graph showing a change in anode current accompanying a change in the number of the power receiving sections inserted.

Fig. 37 is a diagrammatic illustration showing an example of an outlined structure for a heating apparatus in accordance with still another embodiment in the present invention.

Fig. 38 (a) and (b) are diagrammatic illustrations showing an example of a layout for the conveyer included in the heating apparatus shown in Fig. 37.

Fig. 39 is a diagrammatic illustration showing an example of an outlined structure of a heating apparatus in accordance with still another embodiment in the present invention.

Fig. 40 is a diagrammatic illustration showing an example of an outlined structure of a heating apparatus in accordance with still another embodiment in the present invention.

## BEST MODE FOR CARRYING OUT THE INVENTION

### EMBODIMENT 1

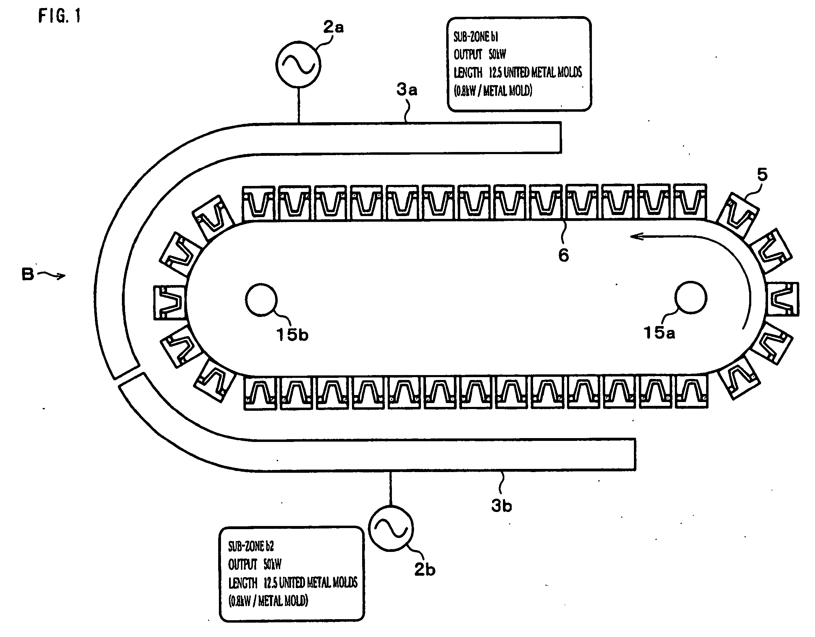

An embodiment of the present invention is explained below referring to Fig. 1 to Fig. 13.

In a method for manufacturing heated and molded articles in accordance with the present invention, continuously transferring the molds wherein raw materials for molding are placed, passing through an area where high-frequency alternating current is applied (heating zone), and heating and molding the raw materials by generating dielectric heating, in particular, the heating zone is divided into sub-zones, each of which has a power source section (an oscillator).

Also, in a continuous high-frequency heating apparatus in accordance with the present invention, continuously transferring objects to be heated with electrodes, passing through an area where high-frequency alternating current is applied (heating zone), and generating dielectric heating on the objects, this heating zone is divided into sub-zones, each of which has a power source section (oscillator).

The present invention may be used as long as dielectric heating is generated on the objects to be heated by applying high-frequency alternating current, especially heat treatment is continuously and efficiently performed on the objects.

For example, the above heat treatment is used for; food processing, including cooking, heat sterilization, heating and molding for baked confectioneries, defrosting of frozen foods and materials, heat maturation and cure (for defrosting thick foods and materials); wood processing, including drying wood, heat bonding and heat pressing for making wood products; resinification, including dissolution of resin, melting and bonding of resin films, and heat pressing and molding of resin.

In the following description including this embodiment, an example is given wherein as heat treatment, dielectric heating is performed for heating and molding the raw materials by applying high-frequency alternating current, especially for manufacturing heated and molded articles continuously and efficiently. More specifically, the present invention is explained giving an example of mass and efficient production of edible containers such as cone cups for ice cream and Monaka, baked and molded confectioneries made in a specific shape such as cookies, biscuits and wafers, or biodegradable molded articles mainly composed of starch. However, the present invention is not limited to those above.

In the following description, molded articles attained by heating and molding a starchy and watery mixture mainly composed of starch such as baked and molded confectioneries and biodegradable molded articles are referred to as baked and molded articles. Accordingly, the starchy and watery mixture corresponds to the object to be heated. Also, in this embodiment, as described below, molds are electrically conductive electrodes and the raw materials for molding are the above watery mixture containing water. Thus, high-frequency alternating current generates dielectric heating, and the electro-conductive heating is also performed whereby electric current directly flows in the watery mixture, raising temperature thereof. In the following description, the term "dielectric heating" includes not only the above dielectric heating in narrow sense, but also the electro-conductive heating performed at the same time.

Also, in the following description, an apparatus and a method for continuous high-frequency heating in accordance with the present invention are used for manufacturing the baked and molded articles, which may be referred to as a manufacturing apparatus and a manufacturing method, respectively. High- frequency alternative current may be referred to as high frequency. The heated and molded articles are simply referred to as molded articles.

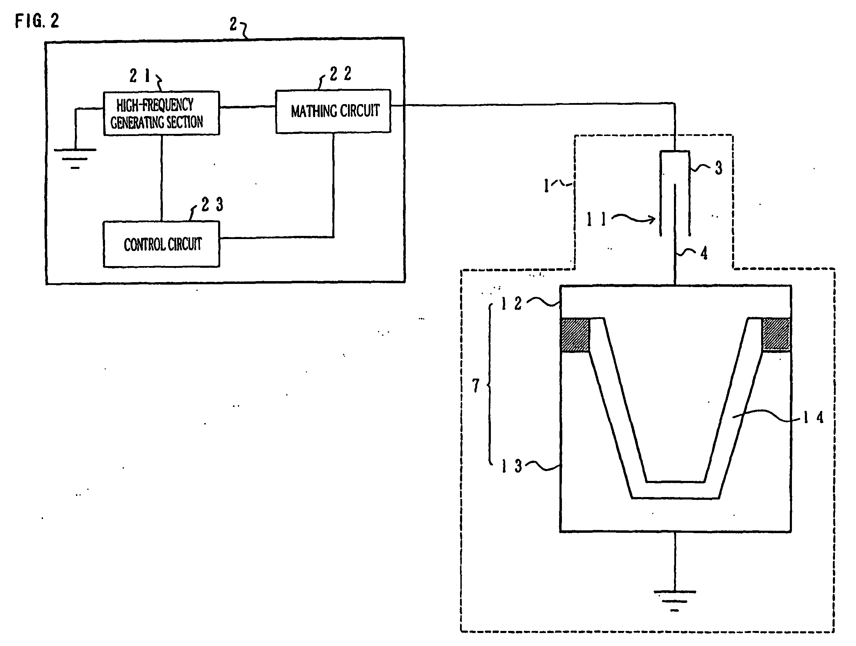

The manufacturing apparatus used in this embodiment has a heating section 1 and a power source section (power source means) 2, as shown in the outlined circuit diagram of Fig. 2. The heating section 1 includes a power feeding section 3 and metal molds (molds) 7 in correspondence therewith. The power source section 2 includes a high-frequency generating section 21, a matching circuit 22, and a control circuit 23. In the metal molds 7, the raw materials 14 are fed. For convenience, just one of the metal molds 7 is shown in Fig. 2.

The structure of the above high-frequency generating part (oscillator) 21 is not specifically limited as long as it generates high frequency. For example, a publicly known device such as a vacuum tube type oscillator may be used. This oscillator may include the matching circuit 22 or the control circuit 23.

For example, the matching circuit 22 may have a variable condenser or a variable coil. The matching circuit 22 varies electrostatic capacity or inductance depending on the raw materials 14 to be heated, thereby attaining an optimal high-frequency output or tuning. The variable condenser or variable coil may be a publicly known variable condenser or variable coil, and is not specifically limited. In addition, the matching circuit 22 is not limited to the above structure equipped with a variable condenser or a variable coil.

Publicly known control means may be used for the control circuit 23 as long as a high-frequency output in the heating section 1, that is, high frequency applied to the heating zone (heating area) described below is properly controlled.

The metal mold 7 included in the heating section 1 can be divided into a pair of electrodes 12 and 13 where the raw materials 14 as objects to be heated are placed in between. As described below, the electrode block 12 has a power receiving section 4, constituting a power feeding and receiving section 11 with a power feeding section 3. The electrode blocks 12 and 13 are insulated from each other, and dielectric heating is generated on the raw materials 14 by high frequency applied through the power feeding and receiving section 11.

Out of the electrode blocks 12 and 13, the electrode block 12 is a feeder electrode connected to the power feeding and receiving section 11, and the electrode block 13 is a grounding electrode grounded to the earth. The structure of the feeder electrode and the grounding electrode, that is, these electrode blocks 12 and 13 are not specifically limited as long as the electrically conductive mold is formed in combination of the electrode blocks. In general, metal molds 7 consisting of several kinds of metals are used. The shape of the metal molds 7 is not specifically limited as long as it corresponds to the shape of the molded articles.

In other words, the metal molds 7 are preferably used as the electrically conductive molds used in this embodiment. The metal molds 7, regardless of the shape, can be divided into two electrode blocks 12 and 13 in order to correspond to the above feeder electrode and grounding electrode.

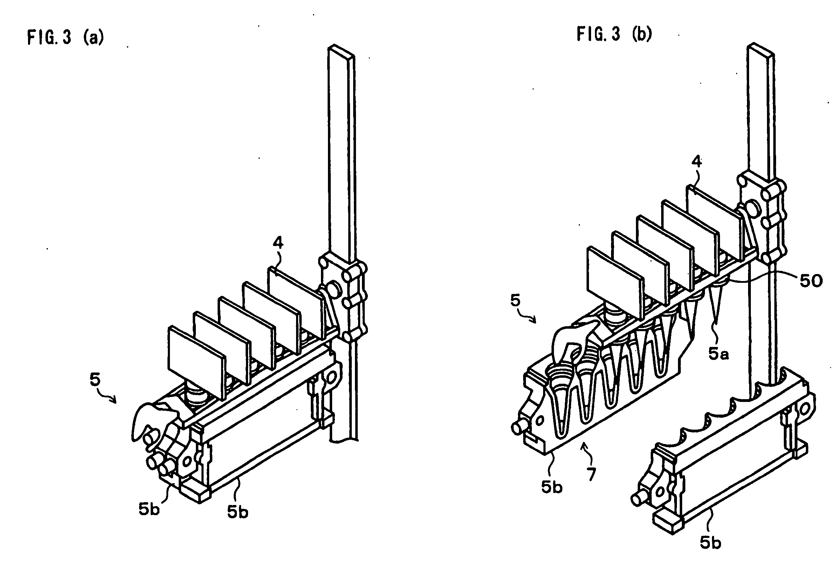

More specifically, for example, if the molded articles are cone cups for serving ice cream or soft serve products, united metal molds (united molds) 5 can be used which the metal molds 7 for cone cups (five in the figure) are combined and arranged in line, shown in Fig. 3 (a) and (b). The united metal mold 5, as shown in Fig. 3(b), is divided into three in total; an inside metal mold half 5a to mold an inside surface of the cone cups and two outside metal mold halves 5b and 5b to mold an outside surface of the cone cups. The inside metal mold half 5a is formed in rough conical shape corresponding to an inner space of the cone cups, while an outside metal mold halves 5b and 5b are equally divided into two along the longitudinally extending side of the cone cups in order to easily pick up the conical cone cups extending to one side.

Thus, in the structure of Fig. 3 (a) and (b), the united metal mold 5 is divided into three for picking up the cone cups. Also in this case, it consists of two blocks so that the inside metal mold half 5a corresponds to the feeder electrode (electrode block 12) and two outside metal mold halves 5b and 5b correspond to the grounding electrode block (electrode block 13). In addition, in the inside metal mold half 5a, the plate-type power receiving section 4 is provided in correspondence with each of the metal molds 7.

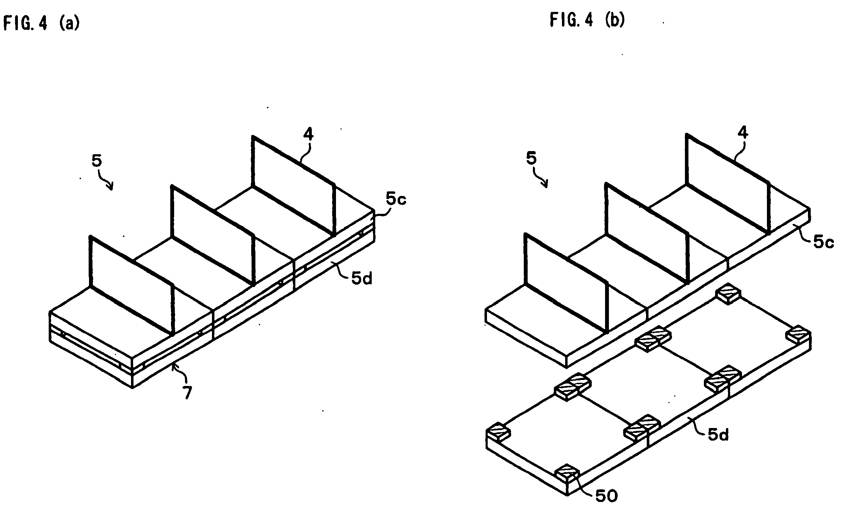

Or, as shown in Fig. 4 (a) and (b), in case of making plate-shaped molded articles, the united metal mold 5 that the plate-type metal molds 7 (three in the figure) are combined and arranged in line, may be used. This structure consists of a combination of two metal mold halves; an upper metal mold half 5c and a lower metal mold half 5d. The upper metal mold half 5c and the lower metal mold half 5d correspond to the feeder electrode block (electrode block 12) and the grounding block (electrode block 13), respectively. Additionally, in the upper metal mold half 5c, the plate-type power receiving section 4 is provided in correspondence with each of the metal molds 7.

Thus, the united metal mold 5 (or metal mold 7) serving as the electrode blocks 12 and 13 used in the present invention, which is a combination of many metal molds 7, can transfer many metal molds 7 to the heating zone at one time. In result, production efficiency of the molded articles can be improved.

Also, the above united metal mold 5 may consist of more than three metal mold halves depending on a shape of the molded articles or a method for picking up the molded articles after molding. Also in this case, the united metal mold 5 can be always divided into the feeder electrode block (electrode block 12) and the grounding electrode block (electrode block 13). Thus, it is possible to properly apply high frequency to the raw materials 14 for molding (hereinafter referred to as raw materials).

The united metal mold 5 serves as the electrode blocks 12 and 13 in the mold 7, where high frequency is applied. Therefore, the feeder electrode block (electrode block 12) and the grounding electrode block (electrode block 13) constituting the united metal mold 5, do not come in contact on directly with the raw materials in between. More particularly, an insulator 50 is provided between each of the blocks. The insulator 50 is not particularly limited as long as it is used to prevent the feeder electrode block from contacting on the grounding electrode block. In general, various kinds of insulators may be used, or a space may be formed instead of the insulators.

The united metal mold 5 in this embodiment may have a steam exhaust (not shown) to adjust internal pressure. In baked and molded articles attained by heating and molding a starchy and watery mixture described below, since a dough as the raw materials 14 contains starch and water, steam must be exhausted out of the metal mold 7 with the progress of heating and molding. However, steam cannot be sometimes exhausted due to some shapes of the metal mold 7. Then, by providing the steam exhaust in the metal molds 7, it is possible to escape steam from the metal mold 7 and to adjust internal pressure properly. The structure of the above steam exhaust is not particularly limited as long as it is constructed in the shape, size, number and position that steam can be uniformly and efficiently escaped from the metal mold 7.

In addition, depending on a property of the raw materials 14 and molded articles, the entire heating section 1 including the united metal molds 5 may form a chamber and may be constructed so that a vacuum pump can reduce internal pressure.

In this embodiment, the molded articles manufactured in accordance with the present invention, are the baked and molded articles such as baked and molded confectioneries including edible containers, for example, cone cups, and biodegradable molded articles, as described above. The shape of the baked and molded articles is not particularly limited, and various shapes of baked and molded articles may be made depending on usage. Of course, the baked and molded articles are not limited to the baked articles, and other molded articles may be made.

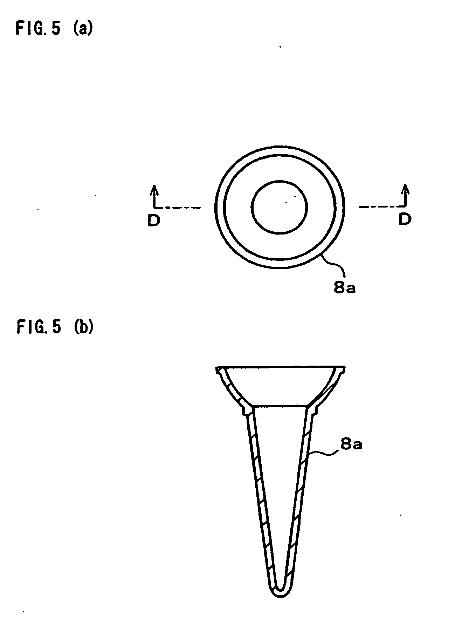

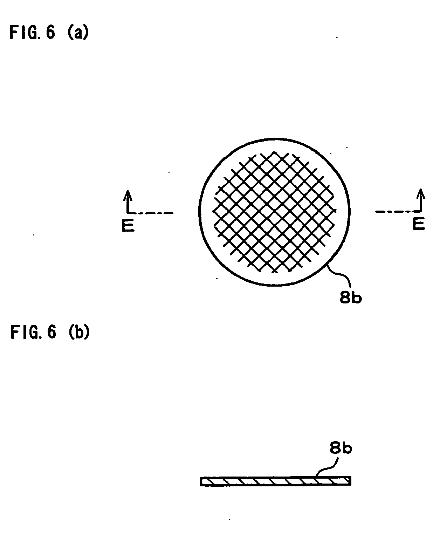

For example, the cone cups may be a conical cone cup 8a shown in Fig. 5 (a) and (b), or a disc-shaped waffle cone 8b shown in Fig. 6 (a) and (b). The size of these cones is not particularly limited.

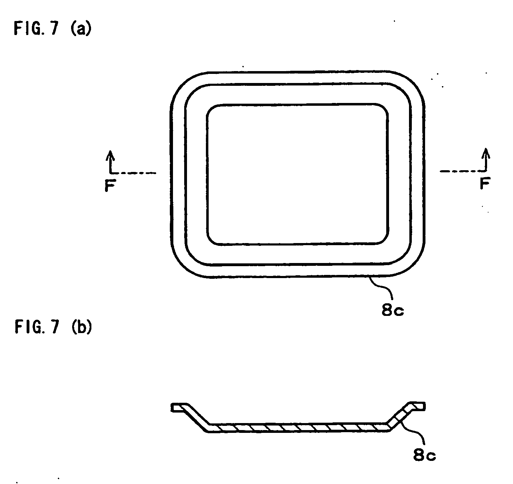

The biodegradable molded articles may be a plate-shaped tray 8c in a square shape with a flange formed in surroundings and shown in Fig. 7 (a) and (b), but not limited to this embodiment. In particular, the biodegradable molded articles have a wide range of usage and still more varieties of shapes, unlike edible containers such as the cone cups.

The raw materials 14 of the baked and molded articles are not particularly limited. In this embodiment, starch is a main ingredient, and by adding various sub ingredients to starch depending on the usage, adding water and mixing, a starchy and watery mixture in a dough having plasticity or in a slurry having fluidity can be preferably used.

For example, in the case of baked and molded confectioneries including edible containers such as the cone cups, flour is generally used as starch of the main ingredient. Other starch such as cornstarch may be used. In addition, various additives, for example, seasonings such as salt and sugar, anti-sticking agents such as oil and fat, flavorings, colorings, stabilizers, inflating agents, thickening agents, flavor enhancers, can be used as sub ingredients. These sub ingredients may be selected depending on the kind of baked and molded confectioneries, and are not particularly limited to those above.

Similarly, in case of the biodegradable molded articles, starch is a main ingredient, and filling agents such as diatomite and cellulose, binding agents such as gums, anti-sticking agents such as oil and fat, and colorings can be added as sub ingredients. However, these sub ingredients are not specifically limited to those above. Furthermore, as starch of the main ingredient, not only starch deriving from general plants (refined starch) and agricultural products containing starch such as flour (coarse-ground starch), but also chemical modified starch attained by chemically treating starch such as cross-linked starch, can be used.

In the present invention, for example, in order to mold the molded articles, heating is continuously performed by transferring the metal molds 7 (united metal molds 5) wherein the raw materials 14 are portioned. Thus, the united metal molds 5 can be continuously transferred by moving means. The moving means is not particularly limited, but in consideration with productivity of the molded articles, a conveyer (conveyer means) represented by a belt conveyer is preferably used.

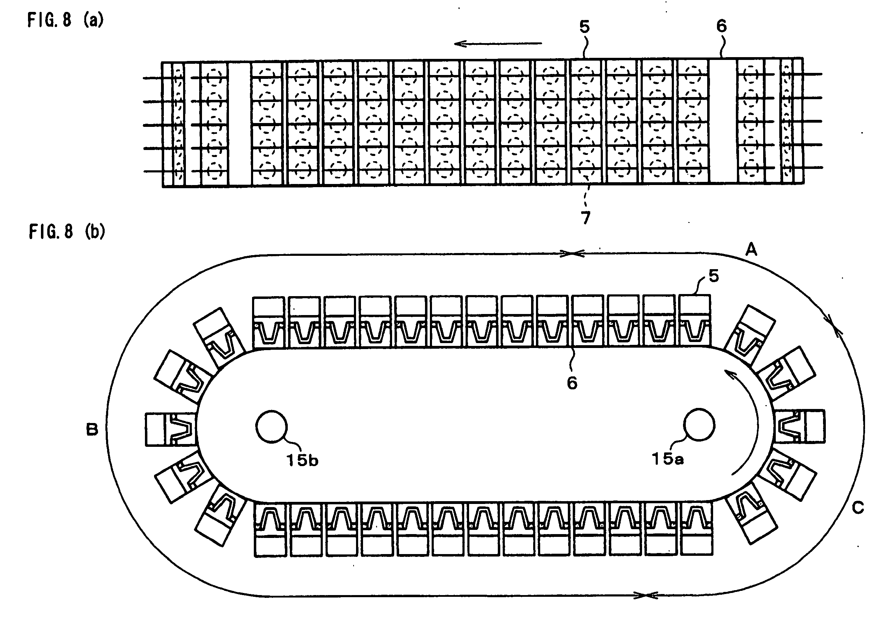

For instance, in this embodiment, a belt-type conveyer 6 is used which is stretched in rough plate shape by at least two supporting axes 15a and 15b, and which is rotatable as an endless track, as shown in Fig. 8. The direction in which the conveyer 6 is stretched, is not particularly limited. In this embodiment, the conveyer 6 is horizontally stretched.

By using this conveyer 6, the united metal molds 5 can be transferred to the heating zone efficiently with improved production efficiency of the baked and molded articles. In addition, it is possible to reduce an installation space for the manufacturing apparatus since the conveyer 6 can move continuously and rotatably as an endless track.

In the descriptions below, the conveyer 6 that is stretched as shown in Fig. 8 has a layout of no-end plate shape. The conveyer 6 may be stretched rotatably by the supporting axes, and it is not limited to the above no-end plate shape.

In the manufacturing apparatus used in this embodiment, the united metal molds 5 (thirty-six in Fig. 8) are mounted on the entire periphery of the conveyer 6. Since the metal molds 7 (five in Fig. 8) are disposed in line as the united metal molds 5, and are mounted on the periphery of the conveyer 6 so that the longitudinally extending sides may be paralleled one another. The structure of the conveyer 6 is not particularly limited as long as it can resist a rise in temperature of the united metal molds 5 due to heating and can smoothly transfer the united metal molds 5 mounted on the entire periphery of the conveyer 6.

The method for manufacturing the molded articles in accordance with the present invention includes at least three processes; a raw material feeding process for pouring the raw materials 14 into the metal molds 7 (united metal molds 5), a heating process for heating and molding by applying high frequency to the metal molds 7 (united metal molds 5) wherein the raw materials 14 are fed in order to generate dielectric heating, and a pickup process for picking up the molded articles from the metal molds 7 (united metal molds 5) after heating and molding. Therefore, an area where these processes are performed, that is, a process zone is preset also in the manufacturing apparatus shown in Fig. 8.

In the no-end plate-type conveyer 6 shown in Fig. 8, a raw material feeding zone A is provided on the upper side of the end at the side of a supporting axis 15a (right end in Fig. 8). A heating zone B is set in the subsequent area to the raw material feeding zone A in the rotating direction of the conveyer 6 (direction of the arrow in the figure) and in an area occupying most of the periphery of the conveyer 6 which includes the end at the side of a supporting axis 15b, and in the subsequent area to the heating zone B, a pickup zone C is provided in an area adjacent to the raw material feeding zone A on the lower side of the end at the side of the supporting axis 15a.

The heating zone B may have a structure as shown in Fig. 2 and it may be equipped with high-frequency heating means to generate dielectric heating on the united metal molds 5 by applying high frequency. It is preferable that external heating means is provided depending on the kinds of raw materials 14.

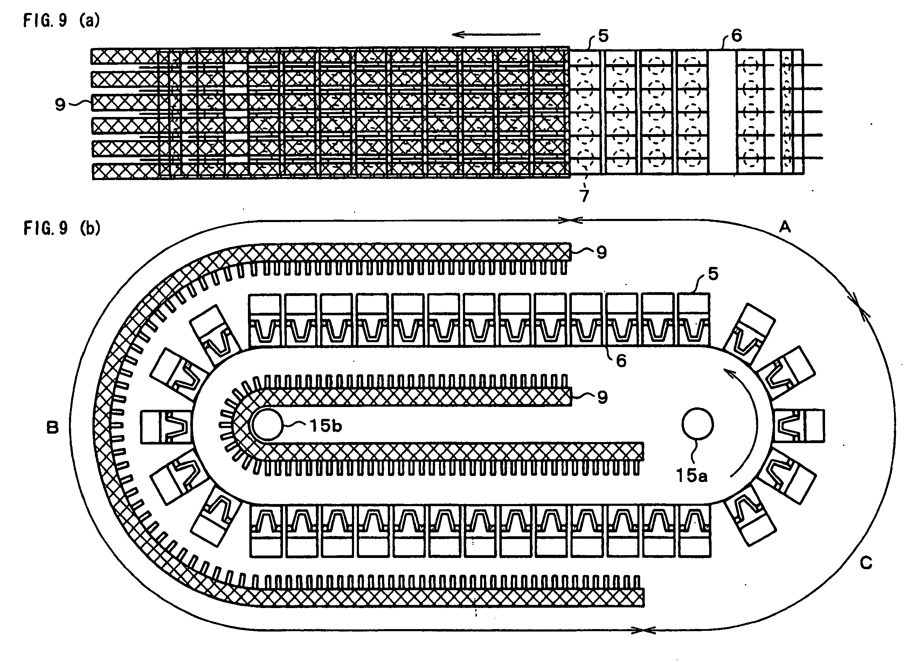

The external heating means may be used as long as the raw materials 14 in the united metal molds 5 can be heated through thermal conduction by heating the united metal molds 5 from the outside. In general, as shown in Fig. 9 (a) and (b), the gas heating section 9 may be provided along the shape in which the conveyer 6 is stretched across the heating zone B.

In external heating, the raw materials 14 are heated through thermal conduction by heating the united metal molds 5 from the outside to maintain the united metal molds 5 at a definite temperature (temperature of the metal molds). In result, it is very preferable, not only that the gas heating section 9 is disposed on the outer periphery of the conveyer 6 as shown in Fig. 9 (a) and (b), but also that the gas heating section 9 is disposed on the inner periphery of the conveyer 6, as shown in Fig. 9 (b). Thus, more uniform heating is possible, since external heating is performed from the upper and lower sides of the united metal molds 5.

For the above gas heating section 9, a publicly known structure used for manufacturing baked and molded articles can be preferably used, and the structure is not particularly limited. For convenience of clarifying the disposition of the gas heating section 9, the power feeding section 3 is not shown in Fig. 9 (a) and (b), as Fig. 8.

In the present invention, especially in case that the molded articles are baked and molded confectioneries including edible containers, it is preferable that not only dielectric heating but also external heating is used in the heating zone B.

When both dielectric heating and external heating are used in the heating zone, rapid heating of the raw materials 14 deriving from dielectric heating and moderate heating through thermal conductivity deriving from external heating are simultaneously performed in the starchy and watery mixture as the raw materials 14. In result, not only the starchy and watery mixture can be more steadily and fully heated, but also various properties can be preferably given to the baked and molded confectioneries by baking (baking and molding) the starchy and watery mixture due to both uses of dielectric heating and external heating.

More specifically, the properties may be structure of the molded articles, emergent effects from additives, and baked condition, but are not limited to those above. The level at which these properties are given to the molded articles depends on a balance between dielectric heating and external heating. The balance of these heating methods should be controlled depending on the varieties of raw materials 14, and it is not particularly limited.

The structure of the molded articles may be thickness of a surface texture, density of an inner texture, a condition of an inner cellular wall, and traces of deposit. In general, if a ratio of external heating to dielectric heating is lower, that is, a ratio of dielectric heating is higher; the surface texture becomes thinner; the inner texture becomes denser; the inner cellular wall becomes thinner; and the traces of deposit become thinner. On the other hand, if a ratio of external heating to dielectric heating is higher; the surface texture becomes thicker; the inner texture becomes coarser; the inner cellular wall becomes thicker; and the traces of deposit become thicker.

Emergent effects of the additives may be, for example, emergent effects of colorings or flavorings. In most cases, edible containers are colored after baking and molding by adding a red coloring to the starchy and watery mixture. When a ratio of dielectric heating is higher, a little brownish red color appears with good coloration. On the other hand, if a ratio of external heating is higher, the colorings are likely to fade, resulting in poor coloration. In case of the red colorings, a red color does not appear properly, resulting in a brownish color. In case of flavorings, if the ratio of dielectric heating is higher, good flavor is left over. If a ratio of external heating is higher, flavor is not properly left over due to spoilage or vaporization of aroma ingredients included in the flavoring.

In general, the baked condition may be a baked color or roasted smell, that is, whether a good baked color or roasted smell is attained or not. If a ratio of dielectric heating is higher, the baked color or roasted smell is light or weak. If a ratio of external heating is higher, the baked color or roasted smell becomes darker or stronger.

The external heating temperature in the gas heating section 9 is not particularly limited since it depends on the kinds of raw materials 14. For example, in case of the heated and molded confectioneries, heating temperature is controlled based on the temperature of the above metal molds. In general, it is preferable that external heating is performed at from 110˚C to 230˚C. Depending on a target property of the molded articles, the temperature of the metal molds may be set within the above range accordingly.

In the present invention, the high-frequency heating means is provided to generate dielectric heating by applying high frequency in the heating zone B. The high-frequency heating means includes the power source section 2 and the power feeding section (power feeding means) 3. In addition, as described above, the united metal mold 5 has the power receiving section (power receiving means) 4 to continuously receive high frequency from the power feeding section 3 during transference. The power feeding section 3 and the power receiving section 4 constitute the power feeding and receiving section 11. (Refer to Fig. 2.)

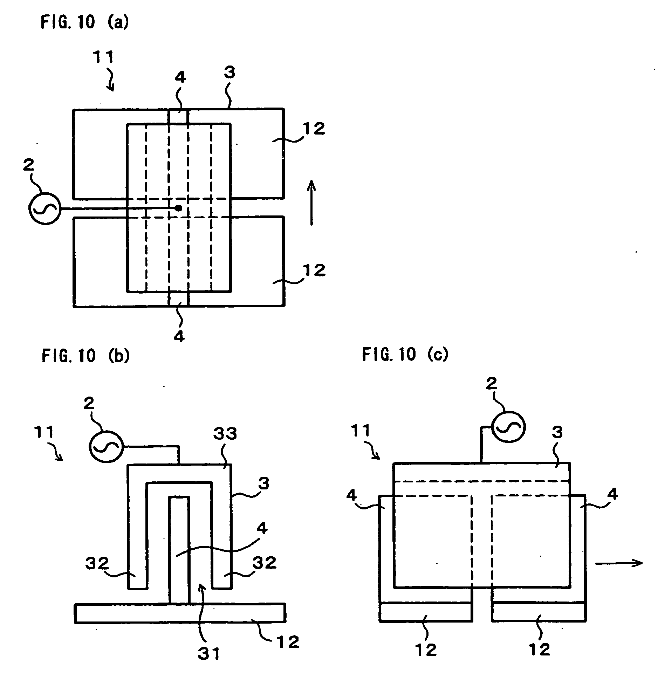

The structure of the power feeding section 3 is not particularly limited. For example, the power feeding section 3 consists of electrically conductive materials such as metals and as shown in Fig. 10 (b), it has a rough U-shape in the section and a concave 31 at the center. In other words, the shape has a rough U-shaped section formed by bending a rectangular plate-type member on the two lines in parallel with the longitudinally extending sides to form opposite sides 32 and 32 and a top surface 33 connected thereto.

On the other hand, the structure of the power receiving section 4 in correspondence with the power feeding section 3 is not particularly limited as long as it can receive high frequency with no contact with the power feeding section 3. For example, as shown in Fig. 10 (a), (b), and (c), the plate-type power receiving section 4 which is inserted with no direct contact on between the above opposite sides 32 and 32 may be used. This power receiving section 4 may consist of electrically conductive materials such as metals, as the power feeding section 3.

Since the power feeding section 3 is provided along the configuration in which the conveyer 6 is stretched across the entire heating zone B, it can be represented that the power feeding section 3 is disposed in a rail-shaped structure having a rough U-shaped section. Additionally, the power receiving section 4 is connected to the electrode block 12 in the configuration in correspondence to this rail-shaped power feeding section 3.

For example, as shown in Fig. 10 (a), (b), and (c), in the united metal mold 5, the power receiving section 4 is provided in the metal mold half (inside metal mold half 5a or upper metal mold half 5c) serving as the power feeder electrode block (electrode block 12). More specifically, in the united metal mold 5 as shown in Fig. 3 (a) and (b), or in the united metal molds 5 shown in Fig. 4 (a) and (b), the power receiving section 4 is individually provided for the five or three metal molds 7 constituting the united metal mold 5. In this case, the power feeding sections 3 are also disposed in parallel in correspondence to each of the metal molds 7.

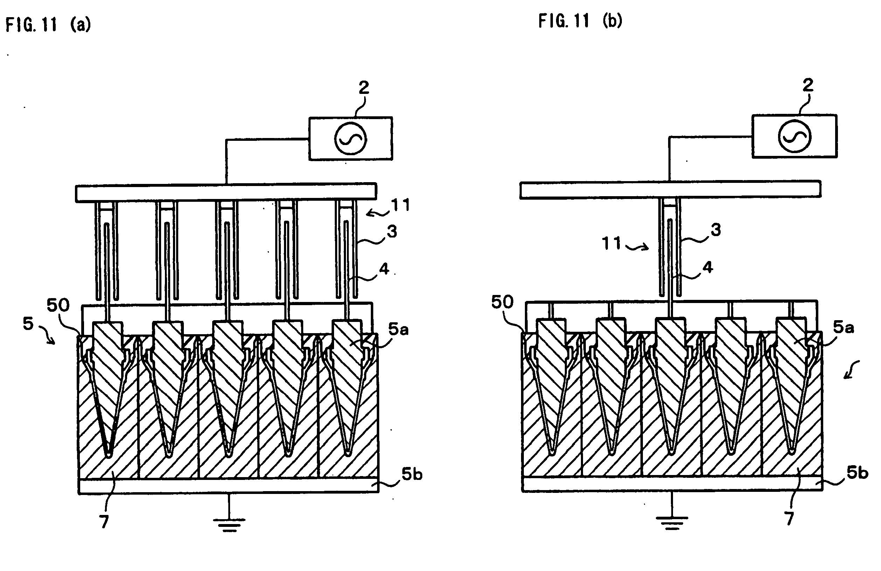

Furthermore, as shown in Fig. 3 (a) and (b), in the structure of the united metal mold 5 consisting of the five metal molds 7, the rail-shaped power feeding section 3 is also disposed in five lines in parallel as shown in Fig. 11 (a).

Or, since the united metal mold 5 is a unit consisting of the five metal molds 7, it can be constructed so that as shown in Fig. 11 (b), for example, the power receiving section 4 is provided only in the central metal mold 7 to apply high frequency to the other four metal molds 7. In this case, it is possible to simplify the structure of the manufacturing apparatus since the rail-shaped power feeding section 3 can be disposed in one line only.

Thus, in this embodiment, the power feeding and receiving section 11 is constituted by a combination of the rail-shaped power feeding section 3 forming a rough U-shaped section, and the plate-type power receiving section 4. When the united metal molds 5 enter in the heating zone B by transference of the conveyer 6, the plate-type power receiving section 4 is inserted in the concave 31 of the rail-shaped power feeding section 3 (between the opposite sides 32 and 32) with no contact. Then, with the transference of the conveyer 6, the power receiving section 4 moves along the rail-shaped power feeding section 3 (in the direction of the arrow in Fig. 10 (a) and (c)).

In the above condition, the power receiving section 4, the sides 32 and 32 surrounding it, and a space therein, form a condenser in the concave 31 of the power feeding section 3. In result, power starts to be supplied to the united metal molds 5 from the power source section 2, and a heating and drying process starts through dielectric heating. The heating and drying process smoothly and steadily continues until the united metal molds 5 pass through the heating zone B, that is, until the power receiving section 4 leaves the concave 31 in the power feeding section 3.

In other words, in the present invention, it is preferable that with the plate-type power receiving section 4, and the power feeding section 3 having a surface opposite to the power receiving section 4, high-frequency alternating current is applied with no contact by placing the above plate-type power receiving section 4 opposite to the above surface of the power feeding section 3. In addition, it is preferable that the sides 32 and 32 which oppose each other are provided as the above opposite surface. Therefore, the power feeding section 3 may not have a rough U-shaped section, and may be a plate type having the side 32 only.

The structure of the power feeding section 3 and the power receiving section 4 is not limited to those above. Namely, depending on a formula of the raw materials 14 or a finished shape of the molded articles, the configuration of the power feeding section 3 and the power receiving section 4 may be changed or by adding other members, dielectric heating may be generated differently. For example, an insulator may be placed between the power receiving section 4 and the sides 32 and 32 to improve a capacity of the condenser.

Therefore, in the present invention, power supply with no contact means that the power feeding section 3 and the power receiving section 4 (electrode block 12) do not come in contact directly. If the power feeding and receiving section 11 supplies power with no contact, the electrodes do not directly contact on each other, and generation of a spark can be prevented in the heating zone.

In the manufacturing apparatus used in this embodiment, as shown in Fig. 1, the united metal molds 5 (for example, the united metal mold 5 for the cone cup 8a shown in Fig. 3 (a) and (b)) are mounted entirely on the outer periphery of the conveyer 6 (refer to Fig. 8) disposed in a no-end plate-shaped layout. In addition, the rail-shaped power feeding section 3 (refer to Fig. 10 and 11) constituting part of the heating section 1 is disposed on the position corresponding to the heating zone B in the conveyer 6. By a rotative movement of the conveyer 6, the united metal molds 5 move to the direction of the arrow in the figure (counterclockwise in Fig. 1) and heating starts when the united metal molds reach the heating zone B.

In this embodiment, as shown in Fig. 1, it is possible to apply high frequency to the twenty-five united metal molds 5 in the entire heating zone B. It is preferable that in the gas heating section 9 shown in Fig. 9, external heating can be performed. The whole length of the power feeding section 3 and the gas heating section 9 provided in the heating zone B is equivalent to that of the twenty-five united metal molds 5.

The united metal molds 5 are intended for making the above cone cups 8a shown in Fig. 3 (a) and (b), and one hundred twenty-five metal molds 7 can be heated in the entire heating zone B. If a high-frequency output from the power source section 2 is preset to apply 100 kW in the entire heating zone B, a high-frequency output applied to each of the metal molds 7 is 0.8 kW.

In the present invention, the high-frequency heating means provided in the heating zone B is divided into a plurality of means. Namely, a plurality of high-frequency heating means including the power source section 2 and the power feeding section 3 is provided in the heating zone B, and the high-frequency heating means constitute one heating zone B in combination.

In the structure shown in Fig. 1, the heating zone (heating area) B is divided into two sub-zones (sub-areas) b1 and b2. The sub-zones b1 and b2 have the power source sections 2a and 2b and the power feeding sections 3a and 3b, respectively. More specifically, the previous area in the direction of the rotative movement of the conveyer 6 corresponds to the sub-zone b1 and the subsequent area corresponds to the sub-zone b2.

As mentioned above, in the large-scale manufacturing apparatus to heat one hundred twenty-five metal molds 7, an output of the high-frequency generating section 21 will be very high, for example, 100kW. In addition, due to the no-end plate-type conveyer 6, the heating zone B is disposed to cover the end at the side of the supporting axis 15b of the conveyer 6, thereby making the heating zone B longer. Then, when high frequency is applied in the heating zone B, it is likely to be localized on a certain position, whereon large high-frequency energy is likely to be concentrated.

Moreover, as mentioned above, if the raw materials 14 are a watery mixture containing water, an electrical property of the raw materials 14 significantly varies with a change of moisture content by heating. Accordingly, high frequency is more likely to be localized with the change of an electrical property of the raw materials 14, and high-frequency energy is more likely to be concentrated.

If high-frequency energy concentrates on a certain position as described above, some of the united metal molds 5 are likely to be excessively heated (overheating), which gives problems of poorer moldability of the raw materials 14 or poorer properties of the molded articles attained. In addition, since an output of the high-frequency generating section 21 is originally high, concentration of high-frequency energy may cause not only overheating but also a spark and even dielectric breakdown.

In the conventional art, since the manufacturing apparatus is small (refer to Fig. 24), concentration of high-frequency energy gives no problem. If the manufacturing apparatus becomes larger to increase production efficiency, the above problems are found.

On the other hand, in the prevent invention, the heating zone B is divided, for example, into two sub-zones b1 and b2. A high-frequency output in each of the sub-zones b1 and b2 is also divided from the total output. Accordingly, it is possible to effectively restrain or prevent concentration of high-frequency energy and to prevent overheating or dielectric breakdown.

In the example shown in Fig. 1, the heating zone B is divided into two sub-zones b1 and b2 having an equal length and an equal output. More specifically, the whole length of the heating zone B is equivalent to that of the twenty-five united metal molds 5, which means each of the sub-zones b1 and b2 have a length equivalent to the twelve point five united metal molds 5. Namely, the power feeding section 3a provided in the sub-zone b1, and the power feeding section 3b installed in the sub-zone b2, have the same length, each of which can apply high frequency to twelve point five united metal molds 5 (sixty-two point five metal molds 7 in total).

Also, since a high-frequency output in the entire heating zone B is 100 kW, a high-frequency output from the power source sections 2a and 2b provided in the sub-zones b1 and b2, respectively, is preset at 50 kW. Therefore, the output of the entire heating zone B is still 100 kW, and the high-frequency output applied to each of the metal molds 7 is still 0.8 kW. (Refer to Fig. 25.)

In this embodiment, a way of to divide the heating zone B is not particularly limited as long as it is divided into two. In other words, a division of the heating zone B can be varied depending on a method of applying high frequency to the metal molds 7 (united metal molds 5), a layout of the conveyer 6, and properties and characteristics of the raw materials 14 and the finished molded articles.

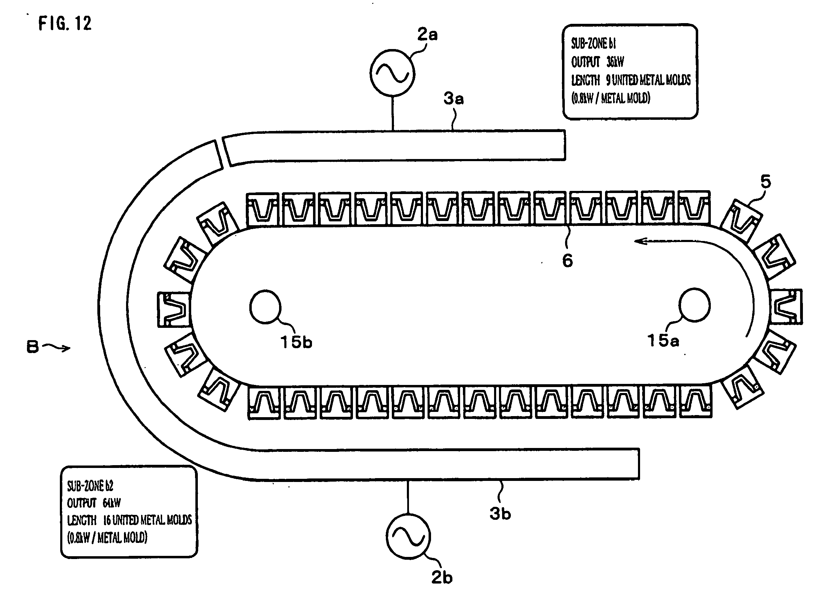

For example, as shown in Fig. 12, the heating zone B is divided into two sub-zones b1 and b2 as the example of Fig. 1. A length of the sub-zone b1 (length of the power feeding section 3a) may be equivalent to that of nine united metal molds 5, and an output from the power source section 2a may be 36kW. In addition, a length of the sub-zone b2 (length of the power feeding section 3b) may be equivalent to that of sixteen united metal molds 5 and an output from the power source section 2b may be 64 kW.

In this case, in the sub-zones b1 and b2, high frequency can be applied to the forty-five metal molds 7 in total and the eighty metal molds 7 in total, respectively. However, total output in the entire heating zone B is still 100 kW and the output to each of the metal molds 7 is still 0.8 kW.

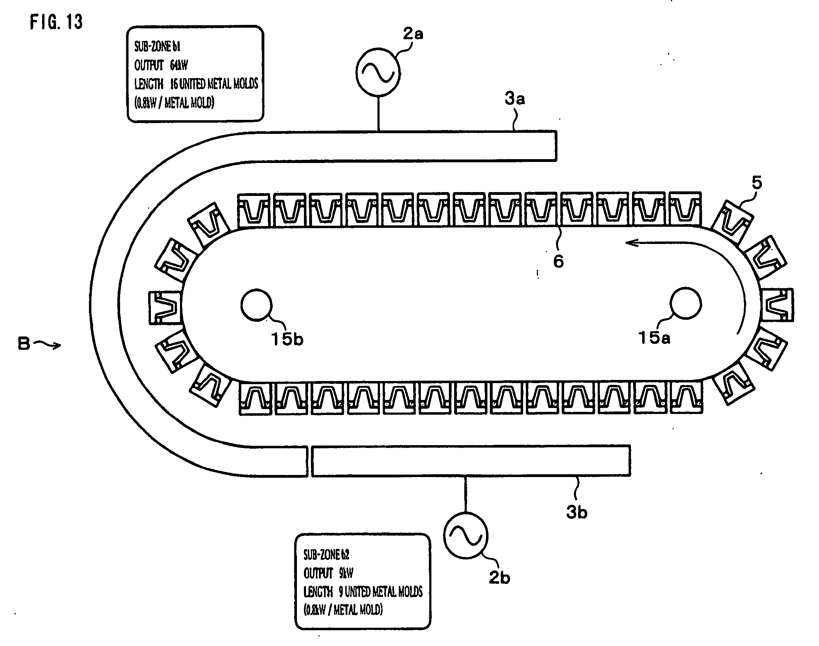

By contraries, as shown in Fig. 13, a length of the sub-zone b1 may be equivalent to that of sixteen united metal molds 5, and an output from the power source section 2a may be 64 kW. Also, a length of the sub-zone b2 may be equivalent to the nine united metal molds 5, and an output from the power source section 2b may be 36 kW. In this case, in the sub-zones b1 and b2, high frequency can be applied to the eighty metal molds 7 in total and the forty-five metal molds 7 in total, respectively. The output in the entire heating zone B is still 100 kW, and the output to each of the metal molds 7 is still 0.8 kW.

An example of a process for manufacturing molded articles in accordance with the present invention is explained below, giving an example of production of the cone cups 8a. The watery mixture is used as the raw materials 14 and the united metal molds 5 are used as the metal molds 7 shown in Fig. 3 (a) and (b). Of course, the present invention is not limited to the example of this manufacturing process.

First of all, after closing the two outside metal mold halves 5b and 5b constituting the grounding electrode block (electrode block 13), out of the metal mold halves constituting the united metal mold 5, the raw materials 14 are poured into the metal molds 7. Then, the inside metal mold half 5a constituting the feeder electrode block (electrode block 12) and outside metal mold halves 5b and 5b are locked (a raw material feeding process). This raw material feeding process is performed in the raw material feeding zone A in Fig. 8.

The united metal molds 5 wherein the raw materials 14 are fed, are ready for heating and molding the raw materials 14. The united metal molds 5 are transferred from the raw material feeding zone A to the heating zone B by the rotative movement of the conveyer 6. In the heating zone B, high frequency is applied with no contact from the power source sections 2a and 2b through the power feeding and receiving section 11 to start dielectric heating as well as external heating in the gas heating section 9 (a heating process). Since the heating zone B, as shown in Fig. 1, is divided into the sub-zones b1 and b2, concentration of high-frequency energy is not generated as mentioned above, whereby the raw materials 14 can be efficiently and steadily heated, dried and molded.

After the united metal molds 5 pass through the heating zone B, heating, drying and molding processes are completed. Then, the inside metal mold half 5a and the outside metal mold halves 5b and 5b constituting the united metal mold 5 are separated and the molded articles inside (cone cups 8a) are picked up (a pickup process). A series of manufacturing processes are now completed.

The above manufacturing processes are not particularly limited to those above, and other processes such as a stabilizing process (or a high-frequency heat delaying process) may be added.

For instance, it is preferable that in manufacturing the baked and molded articles including edible containers such as the cone cups 8a, a stabilizing process to hold the raw materials 14 in the metal molds 7 (united metal molds 5) for a definite period of time for stabilization, may be added before a heating process.

As mentioned above, it is preferable that not only dielectric heating but also external heating is performed in manufacturing baked and molded confectioneries. Even though the external heating means including the gas heating section 9 is provided only in the heating zone B, the metal molds 7 (united metal molds 5) are continuously transferred by the rotative movement of the conveyer 6. Therefore, the metal molds 7 are not almost cooled either in the raw material feeding zone A or in the pickup zone C for the whole manufacturing apparatus.

For example, in the heating zone B, when external heating is performed to raise the temperature of the metal molds to 180˚C, it is still maintained at almost 180˚C even after the united metal molds 5 (metal molds 7) are transferred by the conveyer 6 and reach the pickup zone C and the raw material feeding zone A. It can be represented that the heating zone B covers even the raw material feeding zone A and the pickup zone C if external heating is also used together with dielectric heating.

If the raw materials 14 poured into the metal molds 7 are left alone therein for a definite period of time before applying high frequency in the heating zone B, external heating is moderately performed on the raw materials 14 through thermal conduction from the metal molds 7 of high temperature. This moderate heating completes an initial change of the raw materials 14. Afterwards, when high frequency is applied to the metal molds 7, dielectric heating is properly performed on the raw materials 14 inside the metal molds 7. In result, moldability of the raw materials 14 and properties of the molded articles attained can be improved.

By stabilizing the raw materials 14, high frequency is not applied to the raw materials 14 in the period of time when the electrical property changes most significantly. Thus, it is possible to further prevent concentration of high-frequency energy with less change in the electrical property of the raw materials 14 even if a larger high-frequency output is applied in the heating zone B.

In this embodiment, the stabilizing process is included in the raw material feeding process. The latter part in the raw material feeding zone A following the heating zone B is a stabilizing zone, which is not shown in the zoning of Fig. 8. Accordingly, in the raw material feeding zone A, the raw materials 14 are actually poured in the former part, and they are left alone for stabilization in the latter part.

Thus, in the present invention, the heating zone to apply high frequency is divided into sub-zones, each of which has a power source section and a power feeding section, which can restrain or prevent concentration of high-frequency energy in the heating zone. In result, overheating or dielectric breakdown is effectively prevented, with improved moldability of the raw materials and improved properties of the molded articles attained.


EMBODIMENT 2

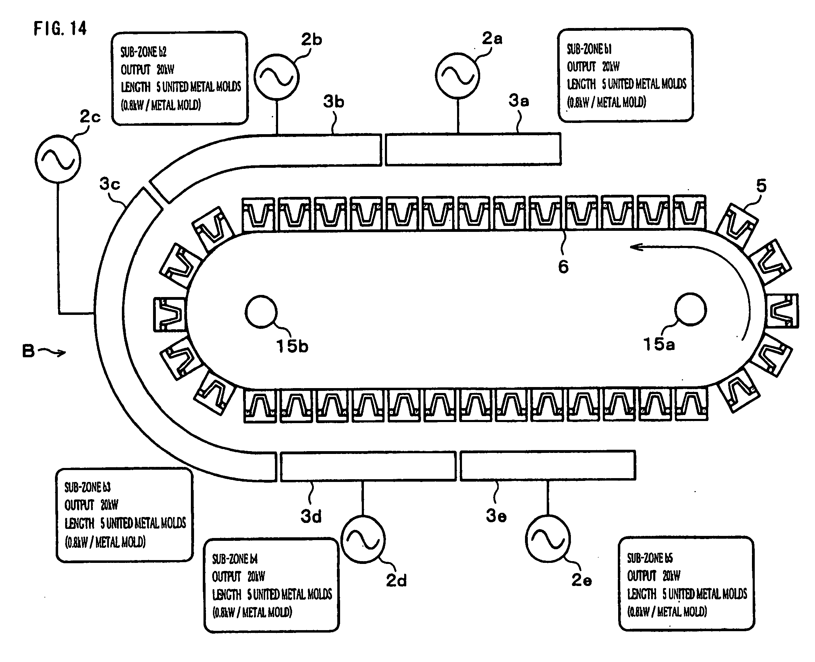

The following description explains another embodiment of the present invention referring to Fig. 14 to Fig. 16, but the present invention is not limited to this embodiment. For convenience, the same numbers are shown for the members having the same function as the members used in the above embodiment 1, with the explanation left out.

In the above embodiment 1, the heating zone B is divided into two. In this embodiment, the heating zone B is divided into more than three.

More specifically, for example, as shown in Fig. 14, the heating zone B is divided into five sub-zones, b1, b2, b3, b4 and b5 from the previous part based on the moving direction of the conveyer 6. Each of the sub-zones has power source sections 2a, 2b, 2c, 2d, and 2e as well as a power feeding sections 3a, 3b, 3c, 3d, and 3e, respectively.

A way to divide the heating zone B, that is, a length of each of the sub-zones (length from the power feeding sections 3a to 3e) or a high-frequency output from the power source sections 2a to 2e is not particularly limited as long as concentration of high-frequency energy can be retrained or prevented. As the above embodiment 1, the heating zone B may be simply divided into three sub-zones with an equal output and an equal length, or may be divided to apply the same high-frequency output to each of the metal molds 7 even with a different output and a different length.

However, it is more preferable that a different output of high frequency is applied in each of the sub-zones depending on the raw materials 14 and properties of the finished molded articles. In this case, a heating and drying process is performed in each sub-zone at a different level, whereby not only concentration of high-frequency energy can be restrained or prevented, but also moldability of the raw materials 14 and properties of the molded articles attained can be further improved.

For example, it is not preferable that a very large output of high frequency is applied to the starchy and watery mixture, since an electrical property (property for high frequency) significantly changes at an initial stage of heating and molding. At a last stage of heating and molding whereat heating and drying is almost completed, adding an excessive heat causes overheating, resulting in poorer property of the molded articles (e.g. cone cups 8a).

As the above embodiment 1, when the heating zone B is equally divided, as shown in Fig. 14, a length from the sub-zones b1 to b5 is equivalent to that of the five united metal molds 5, respectively. An output from the power source sections 2a to 2e is 20 kW, respectively. In this way of division, high frequency is applied to twenty-five metal molds 7 in each of the sub-zones, while the output in the entire heating zone B is still 100 kW, and the output to each of the metal molds is still 0.8 kW.

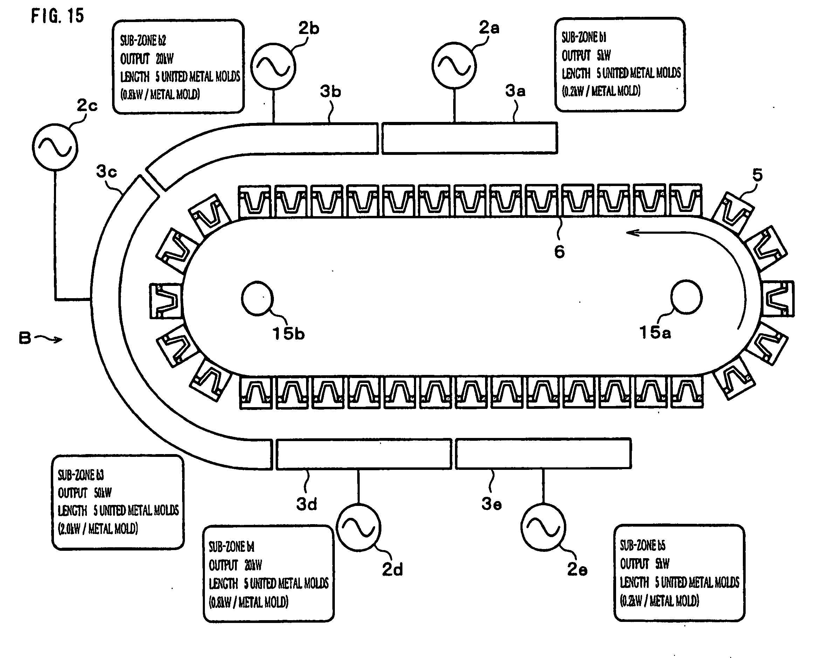

On the other hand, as shown in Fig. 15, an output from the power source sections 2a to 2e in each of the sub-zones may be individually changed depending on properties of the raw materials 14 and the cone cups 8a. More specifically, a length of the sub-zones b1 to b5 is still equivalent to that of the five united metal molds 5, respectively, that is, high frequency is still applied to the twenty-five metal molds 7. However, in the way of division shown in Fig. 15, an output in the sub-zones b1 and b5 is all 5 kW, and an output in the sub-zones b2 and b4 is all 20 kW, and an output in the sub-zone b3 is 50 kW.

In other words, in the above way of division, a high-frequency output is gradually raised from the sub zones b1 and b2 at an initial stage of heating process through the sub zone b3 at an intermediate stage. On the other hand, high frequency is gradually reduced from the sub-zone b3 through the sub zone b5 at a final stage.

Also in the above way of division, the output in the entire heating zone B is still 100 kW, but in the sub-zones b1 and b5, the output to each of the metal molds 7 is reduced to 0.2 kW. In the sub-zones b2 and b4, the output to each of the metal molds 7 is 0.8 kW, as the way of division in Fig. 14. In the sub-zone b3, the output to each of the metal molds 7 is increased to 2.0 kW. In result, when the raw materials are heated and molded, it is possible to reduce heat generation at an initial stage and a last stage, and to increase heat generation at an intermediate stage. Therefore, it is possible to restrain and prevent concentration of high-frequency energy with further improved moldability of the raw materials 14 and properties of the molded articles.

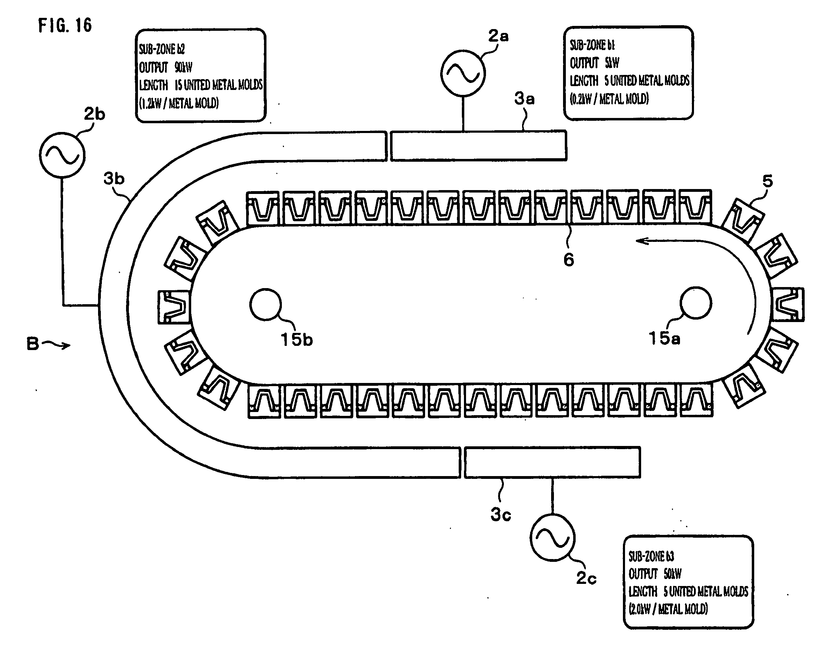

In the example shown in Fig. 15, though a high-frequency output from the power source sections 2a to 2e is changed, a length of each of the sub-zones may be changed. For example, as shown in Fig. 16, in dividing the heating zone B into three to make the sub-zones b1, b2, and b3 from the previous part based on the moving direction of the conveyer 6, a length of the sub-zones b1 and b3 (length of the power feeding sections 3a and 3c) may be made equivalent to that of five united metal molds 5, and an output from the power source sections 2a and 2c may be set at 5kW. Also, a length of the sub-zone b2 (length of the power feeding section 3b) may be made equivalent to that of the fifteen united metal molds 5 and an output from the power source section 2b may be set at 90 kW. In the sub-zones b1 and b3, high frequency is applied to the twenty-five metal molds 7 and in the sub-zone b2, high frequency is applied to the seventy-five metal molds 7.

In this way of division, the whole length of the heating zone B is still equivalent to that of the twenty-five united metal molds 5, while the length of the sub-zone b2 is substantially three times as that of the sub-zones b1 and b3. Also, though the output in the entire heating zone B is still 100 kW, the output to each of the metal molds 7 in the sub-zones b1 and b3 decreases to 0.2 kW, and the output to each of the metal molds 7 in the sub-zone b2 increases to 1.2 kW.

In the above way of division, not only a high-frequency output but also a length of the sub-zone is changed. Therefore, it is possible not only to lessen a heat capacity at an initial stage and a last stage of heating and molding the raw materials 14, but also to set a shorter period of time to lessen the heat capacity by shortening a length of the sub-zones b1 and b3. In addition, it is possible to set a longer period of time for an intermediate stage requiring the heat capacity enough for heating and drying by lengthening the sub-zone b2.

In result, it is possible to add a heat capacity to the raw materials more properly, whereby not only concentration of high frequency can be restrained or prevented, but also moldability of the raw materials 14 and properties of the molded articles can be further improved.

As mentioned above, in this embodiment, in addition to dividing the heating zone into more than three sub-zones, conditions for applying high frequency are differently made by the sub-zone. Accordingly, it is possible to apply a different level of heat capacity for a different period of time depending on properties of the raw materials and the molded articles. In result, more effective heating and molding can be realized with more efficient production of high quality molded articles.

It is preferable that the above conditions for applying high frequency include at least one of the conditions; a high-frequency output in the entire sub-zone, a high-frequency output applied to each of the metal molds, and a length of each of the sub-zones. By changing one of these conditions in each of the sub-zones, a heating condition can be changed by the sub-zone. In result, concentration of high frequency can be restrained or prevented, and moldability of the raw materials and properties of the molded articles can be further improved.

EMBODIMENT 3

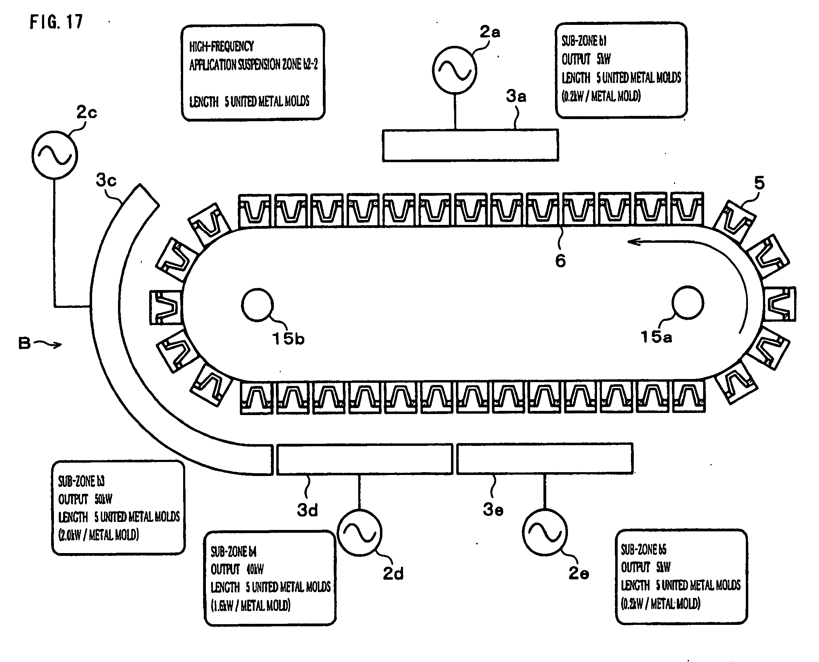

Still another embodiment of the present invention is described below referring to Fig. 17 and Fig. 18 as well as Fig. 26 and Fig. 27. The present invention is not limited to this embodiment. For convenience of explanation, the same numbers are shown for the members having the same function as the members used in the above embodiments 1 and 2 with the explanation left out.

In the above embodiments 1 and 2, even if the heating zone B is divided into sub-zones, both dielectric heating through the high-frequency heating means and external heating through the external heating means are used in the entire heating zone B. This embodiment includes an area where external heating is only performed, by providing a high-frequency application suspension zone where no high-frequency alternating current is applied, in part of the heating zone B.

More specifically, in this embodiment, as shown in Fig. 17, the heating zone B is basically divided into five sub-zones explained in the above embodiment 2, where the gas heating section 9 explained in the above embodiment 1 (refer to Fig. 9) is provided across the entire heating zone B. In an area corresponding to the sub-zone b2, the power source section 2b and power feeding section 3b are not provided but the high-frequency application suspension zone b2-2 is provided.

The gas heating section 9 described in the above embodiment 1 is only provided in the above high-frequency application suspension zone b2-2. Consequently, moderate heating can be performed through external heating only in the previous part to the sub-zone b3 requiring the highest heat capacity, thereby heating the raw materials 14 more properly. This high-frequency application suspension zone b2-2 can be also referred to as an external heating zone where external heating is only performed.

The above high-frequency application suspension zone b2-2 also corresponds to an area where an electrical property of the starchy and watery mixture as the raw materials 14 changes most significantly. It is possible to prevent concentration of high-frequency energy by not applying high frequency in the above high-frequency application suspension zone.

In the way of division shown in Fig. 17, since high frequency is not applied in the above high-frequency application suspension zone b2-2, the heating zone B is substantially divided into four sub-zones from a viewpoint of dividing a high-frequency output.

In other words, as the way of division shown in Fig. 15, a length of the above sub-zones b1, b2-2, b3, b4 and b5 is all equivalent to that of the five united metal molds 5. A high-frequency output from the power source sections 2a, 2c, 2d, 2e are all 5 kW in the sub-zones b1 and b5 (an output to each of the metal molds 7 is 0.2 kW), and 50 kW in the sub-zone b3 (an output to each of the metal molds 7 is 2.0 kW). However, a high-frequency output in the entire heating zone B is 100 kW. Thus, in this embodiment, the heating zone B is substantially divided into four sub-zones excepting the high-frequency application suspension zone b2-2.

Out of the above sub-zones b1 and b3 to b5, the sub-zone b4 is an area where a higher heat capacity is preferable. An output in the sub-zone b4 may be set at 50 kW (an output to each of the metal molds 7 is 1.6 kW). Since the sub-zone b4 is located in an area subsequent to the sub-zone b3 requiring the highest heat capacity and in an area previous to the sub-zone b5 performing a final heating and drying process, a higher output of high frequency may be applied in the sub-zone b4.

On the other hand, in the sub-zones b1 and b5, it is not preferable to increase a high-frequency output, since much heat capacity is not required, as mentioned in the above embodiment 2. In the sub-zone b3, since a high-frequency output is preset enough high, it is not preferable to increase the high-frequency output, which may cause overheating.

An example of a process for manufacturing molded articles in accordance with a manufacturing method in this embodiment is explained below. Basically, there are only three processes explained in the above embodiment 1; a raw material feeding process, a heating process, and a pickup process. In addition to these processes, external heating is performed during the heating process.

The united metal molds 5 wherein the raw materials 14 are fed by the raw material feeding process, are transferred to the heating zone B by the rotative movement of the conveyer 6. First, high frequency is applied together with external heating in the sub-zone b1 to perform "slight" heating at an initial stage. Next, in the external heating zone b2-2, external heating is only performed, since high frequency is not applied to perform dielectric heating. Accordingly, the raw materials 14 are moderately heated through thermal conduction.

At the time when the united metal molds 5 move from the external heating zone b2-2 to the sub-zone b3, the raw materials 14 are stabilized by moderate heating and matured (cured), as the stabilizing process in the embodiment 1. Thus, even if the largest output of high frequency is applied in the sub-zone b3, an electrical property of the raw materials 14 changes less and the raw materials are stabilized, since an initial change of the raw materials 14 are already completed in the united metal molds 5. In result, it is possible to reduce a spark in the sub-zone b3 and to improve moldability of the raw materials 14.

Afterwards, the largest output of high frequency next to the output in the sub-zone b3 is applied in the sub-zone b4 and a heating and drying process goes on efficiently. Finally, a "slight" heating and drying process is performed as a finish in the sub-zone b5, and molding of the molded articles is completed.

Thus, in the present invention, a zone where no high frequency is applied, may be provided in the heating zone B. Furthermore, in case that both dielectric heating and external heating are used, it is possible to include the external heating zone in the heating zone B. Especially, it is possible to attain improved moldability and desirable properties of the finished products (molded articles) by providing the high-frequency application suspension zone depending on the raw materials 14.

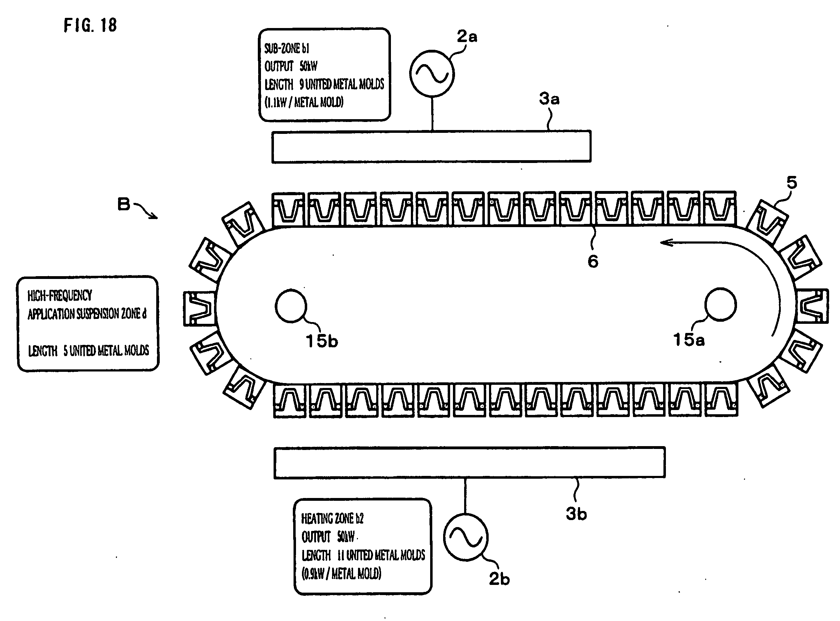

Or, in this embodiment, as shown in Fig. 18, the heating zone B may be divided into the sub-zones b1 and b2. The high-frequency application suspension zone d may be provided between the sub-zones b1 and b2, and the gas heating section 9 may not be provided in the high-frequency application suspension zone d.

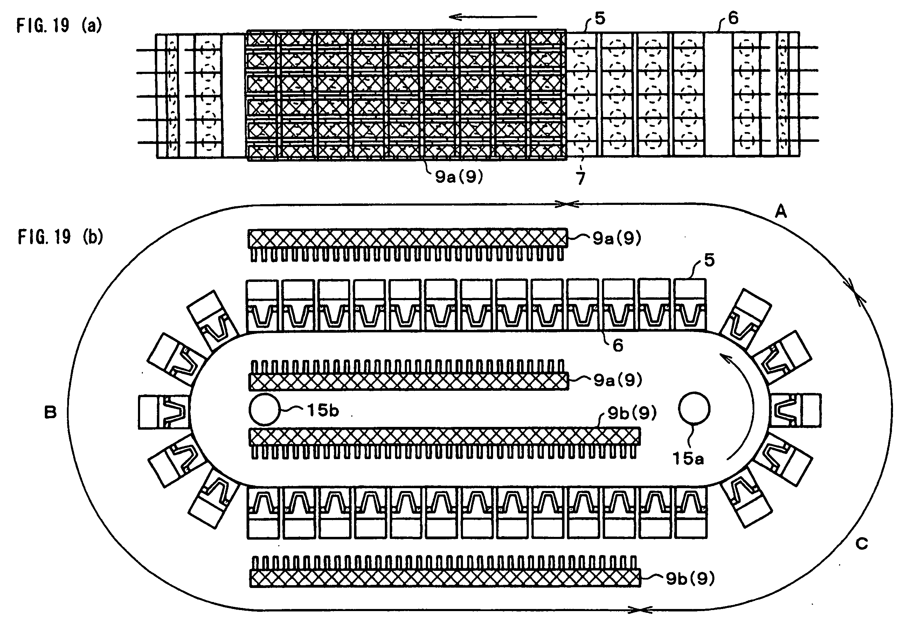

Namely, the sub-zones b1 and b2 have the power source sections 2a and 2b as well as the power feeding sections 3a and 3b, respectively, and also have the gas heating sections 9a and 9b, respectively, as shown in Fig. 19.

However, in the high-frequency application suspension zone d, not only the power source section 2 and the power feeding section 3 but also the gas heating section 9 is not provided.

More specifically, the above sub-zone b1 is provided in an area subsequent to the raw material feeding zone A, having a length equivalent to that of the nine united metal molds 5, which can apply high frequency to the forty-five metal molds 7 in total. Also, a high-frequency output from the power source section 2a in the sub-zone b1 is 50 kW and an output to each of the metal molds 7 is 1.1 kW. In addition, as described above, the gas heating section 9a equivalent to the length of the sub-zone b1 is provided.

On the other hand, the sub-zone b2 is provided in an area previous to the pickup zone C having a length equivalent to that of the eleven united metal molds 5, which can apply high frequency to the fifty-five metal molds 7 in total. Also, a high-frequency output from the power source section 2b in the sub-zone b2 is 50 kW, and the output to each of the metal molds 7 is 0.9 kW. In addition, as described above, the gas heating section 9b equivalent to the length of the sub-zone b1 is provided.

Furthermore, the high-frequency application suspension zone d is provided between the sub-zones b1 and b2 and near the end of the supporting axis 15b of the conveyer 6, having a length equivalent to that of the five united metal molds 5. In this high-frequency application suspension zone d, either high frequency or external heating is not applied to twenty-five metal molds 7 in total. In other words, the high-frequency application suspension zone d is a zone to suspend heating.

If case that the conveyer 6 is no-end plate type, the conveyer 6 is curved as an arc near the supporting axes 15a and 15b stretching the conveyer 6, whereby the power feeding section 3 and the gas heating section 9 are disposed curvedly. In the curved area (referred to as R-area), high frequency is more likely to be localized, and the structure of the manufacturing apparatus becomes relatively complicated by making or disposing the power feeding section 3 and the gas heating section 9 in the configuration corresponding to the R-area.

On the other hand, in this embodiment, the R-area corresponds to an area to suspend heating where no high frequency is applied. Since high frequency is not applied to the area where it is likely to be localized, it is possible to prevent concentration of high-frequency energy more steadily.

In addition, as described in the above embodiment 1, in case that external heating is also used, the temperature of the united metal molds does not almost decrease. Even if all heating is suspended in the R-area, the raw materials 14 inside the united metal molds 5 are continuously heated through external heating.

Therefore, the high-frequency application suspension zone d becomes the external heating zone as the above high-frequency application suspension zone b2-2 shown in Fig. 17. In result, the raw materials 14 are stabilized through moderate heating and matured (cured). If high frequency is applied to the raw materials 14 after maturation in the sub-zone b2, it is possible to improve moldability of the raw materials 14 and properties of the molded articles

Moreover, it is possible to design a manufacturing apparatus that does not have the power feeding section 3 or the gas heating section 9 in the R-area since the above high-frequency application suspension zone d is not equipped with any heating means. In result, it is possible to simplify the structure of the manufacturing apparatus.

In this embodiment, it is also possible to further improve quality of the molded articles by providing the high-frequency application suspension zone at either an initial stage or a last stage of the heating process.

For instance, as described in the embodiment 2, in case of baking the starchy and watery mixture and making molded articles, it is not preferable to apply a very large output of high frequency, since an electrical property of the raw materials (property of high frequency) changes significantly at an initial stage of heating and molding. In other words, at an initial stage of the heating process, water included in the starchy and watery mixture is so much (moisture content is high). If strong heating is applied through dielectric heating at an initial heating stage, the starchy and watery mixture rapidly changes the property. It results in poorer moldability of baked and molded articles (heated and molded articles) or weaker and fragile baked and molded articles, which gives problems of excessively light texture, for example, in case of the baked and molded articles such as edible containers or baked and molded confectioneries.

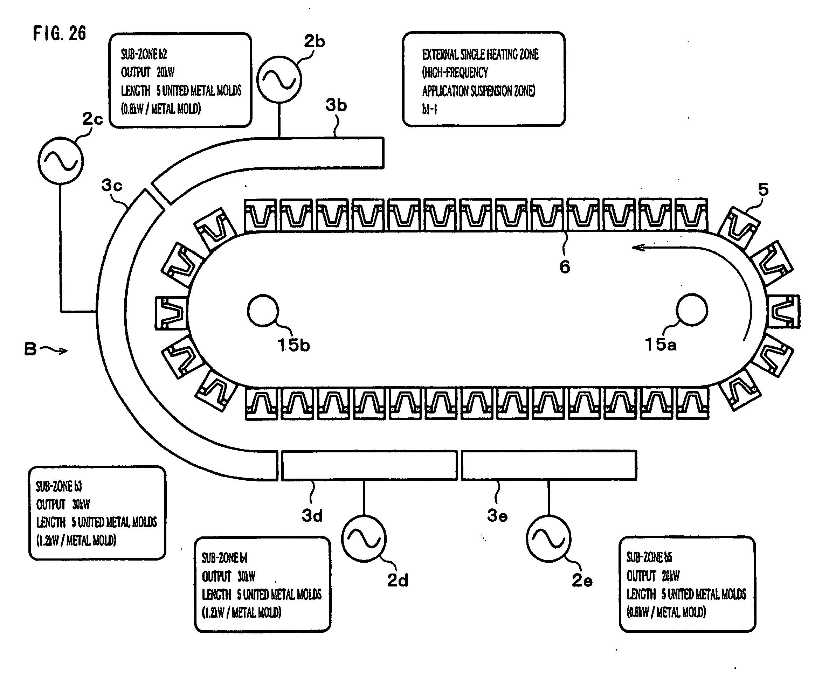

In Fig. 26, an area corresponding to the sub-zone b1 is provided as the high-frequency application suspension zone b1-1 without the power source section 2a and the power feeding section 3a. In other words, an external single heating zone b1-1 is provided at an initial heating stage.

It is possible to heat the raw materials 14 moderately by providing the external single heating zone at an initial stage of the heating process, whereby the raw materials 14 are stabilized in the united metal molds 5 (metal molds 7). Even if the raw materials 14 are the above starchy and watery mixture containing much water, it is possible to prevent a reduction of moldability or strength of the molded articles. In result, it is possible not only to further improve quality of the molded articles, but also to adjust properties (strength or texture etc.) of the molded articles to obtain target properties.

Similarly, for example, in case that molded articles are manufactured by baking the above starchy and watery mixture, a heating and drying process is almost completed at a last stage of heating and molding. Therefore, applying much heat causes overheating resulting in poorer properties of the molded articles. In other words, a last stage of the heating process corresponds to a last stage of drying the molded articles. If strong heating such as dielectric heating is performed, the molded articles get a scorch due to overheating for some kinds of raw materials and shapes of molded articles. The generation of a scorch deteriorates quality of the molded articles, and in some cases, generates a spark between an upper half and a lower half of the united metal mold 5 (refer to the inside metal mold half 5a and the outside metal mold halves 5b and 5b as shown in Fig.3 (a) and (b), or the upper metal mold half 5c and the lower metal mold half 5d as shown in Fig. 4 (a) and (b)), which may make it difficult to make the molded articles steadily.

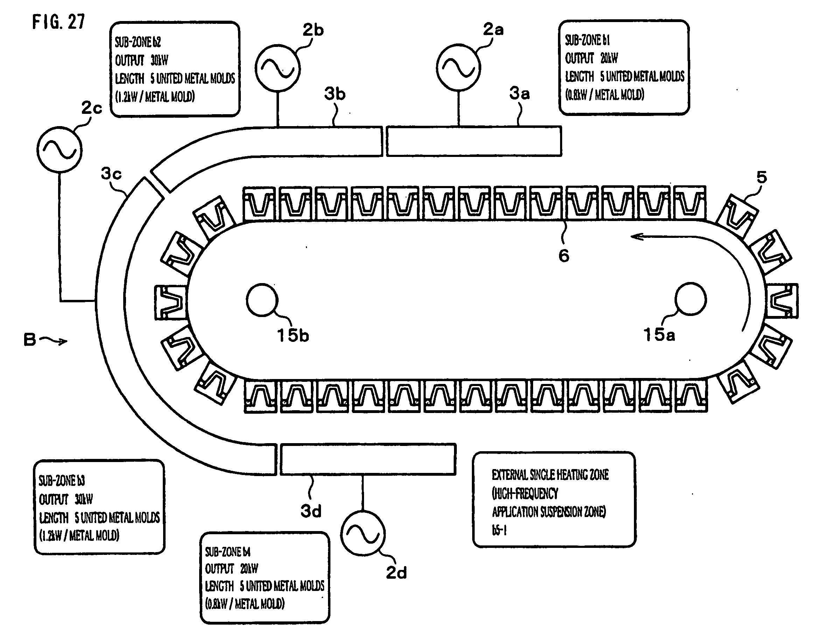

In Fig. 27, an area corresponding to the sub-zone b5 is provided as the high-frequency application suspension zone b1-1 without the power source section 2e or the power feeding section 3e. In other words, the external single heating zone b5-1 is provided at a last heating stage.

By providing the external single heating zone at a last stage of heating and molding, it is possible to moderately heat the molded articles at a finish of drying for the molded articles, and thereby to prevent overheating of the molded articles. In result, it is possible to prevent a scorch on the molded articles or a spark deriving from a scorch, thereby enabling steady production of high quality molded articles.

An output in the other sub-zones than the external single heating zone b1-1 at an initial stage or the external single heating zone b5-1 at a last stage is not specifically limited. In both examples in Fig. 26 and Fig. 27, the heating zone is practically divided into four sub-zones from a viewpoint of dividing a high-frequency output, as described above. Of course, a length in each of the sub-zones, the external single heating zones b1-1 and b5-1 are all equivalent to that of the five united metal molds 5.

As the example shown in Fig. 17, a higher output may be set in an area where more heat capacity is preferable, out of each of the sub-zones.

In the example shown in Fig. 26, the sub-zone b1 replaces the external single heating zone b1-1. In the sub-zone b2 just subsequent to the sub-zone b1, an output is set at 20 kW (an output to each of the metal molds 7 is 0.8 kW), where after external heating, dielectric heating is moderately performed. In the sub-zones b3 and b4 subsequent to the sub-zone b2, an output is set at 30 kW (an output to each of the metal molds 7 is 1.2 kW), where stronger heating is performed. Then, an output in the sub-zone b5 is set at 20 kW (the output to each of the metal molds 7 is 0.8 kW), where dielectric heating is moderately performed as a finish.

Also, in the example shown in Fig. 27, the sub-zone b5 replaces the external single heating zone b5-1. In the first sub-zone b1, an output is set at 20 kW (an output to each of the metal molds 7 is 0.8 kW), and moderate heating at an initial stage is performed. Then, in the sub-zones b2 and b3 subsequent to the sub-zone b1, an output is set at 30 kW (an output to each of the metal molds 7 is 1.2 kW), where stronger heating is performed. Then, in the sub-zone b4, the output is set at 20 kW (an output to each of the metal molds 7 is 0.8 kW) to switch strong heating to moderate heating. In the external heating zone b5-1, moderate heating is performed as a finish.

In the examples shown in Fig. 26 and Fig. 27, an output in each of the sub-zones may be all the same (not shown). For instance, in the example of Fig. 26, an output in the sub-zones b2, b3, b4 and b5 may be all preset at 25 kW (an output to each of the metal molds 7 is 1.0 kW). Similarly, in the example of Fig. 27, an output in the sub-zones b1, b2, b3, and b4, may be all set at 25 kW (an output to each of the metal molds 7 is 1.0 kW).

The method of setting up the high-frequency application suspension zone in this embodiment is not limited to those above. In other words, the sub-zone b3 or b4 may be the high-frequency application suspension zone, or high frequency may be applied only in the sub-zones b2, b3 and b4 by combining the external single heating zone b1-1 at an initial stage with the external single heating zone b5-1 at a last stage. Namely, the heating zone B in the present invention may be constructed so that desirable heating can be performed depending on the kinds of molded articles or raw materials 14, and it is not limited to the above examples. Of course, in some cases, an output may be just changed by the sub-zone in the above embodiment 2.

As described above, in this embodiment, the high-frequency application suspension zone is included in the heating zone, where moderate heating is performed through external heating in case of using both dielectric heating and external heating. It is thus possible to improve moldability and attain a desirable property of the finished products by setting up the high-frequency application suspension zone depending on the raw materials. Also, by setting up the high-frequency application suspension zone in an area where an electrical property of the raw materials changes most significantly, concentration of high-frequency energy can be prevented. In addition, since moderate heating can be performed through external heating before the sub-zone to apply the largest output of high frequency in the heating zone, it is possible to properly heat and mold the raw materials.

In this embodiment, in order to include the high-frequency application suspension zone, it is possible to design a manufacturing apparatus so that high frequency may not be applied to an area where high frequency is likely to be localized. It is thus possible to prevent concentration of high frequency energy more steadily.

Moreover, from the characteristics of external heating, it is possible to make the high-frequency application suspension zone of the external heating zone where external heating is only performed, whether the external heating means is provided in the high-frequency application suspension zone or not. Especially, if an area where it is difficult to provide the power feeding section or the external heating means is set up as the high-frequency application suspension zone, it is unnecessary to provide various heating means, thereby simplifying the structure of the manufacturing apparatus.

In addition, it is possible to perform heating depending on the raw materials, by providing the high-frequency application suspension zone at either an initial stage or at a last stage of the heating process, and thereby to improve quality of the molded articles attained or productivity. Especially, the method to install the high-frequency application suspension zone at an initial stage and at a last stage is preferably used in case of using the starchy and watery mixture with a high moisture content or in case of producing the molded articles which are likely to get a scorch such as the above baked and molded articles.

EMBODIMENT 4

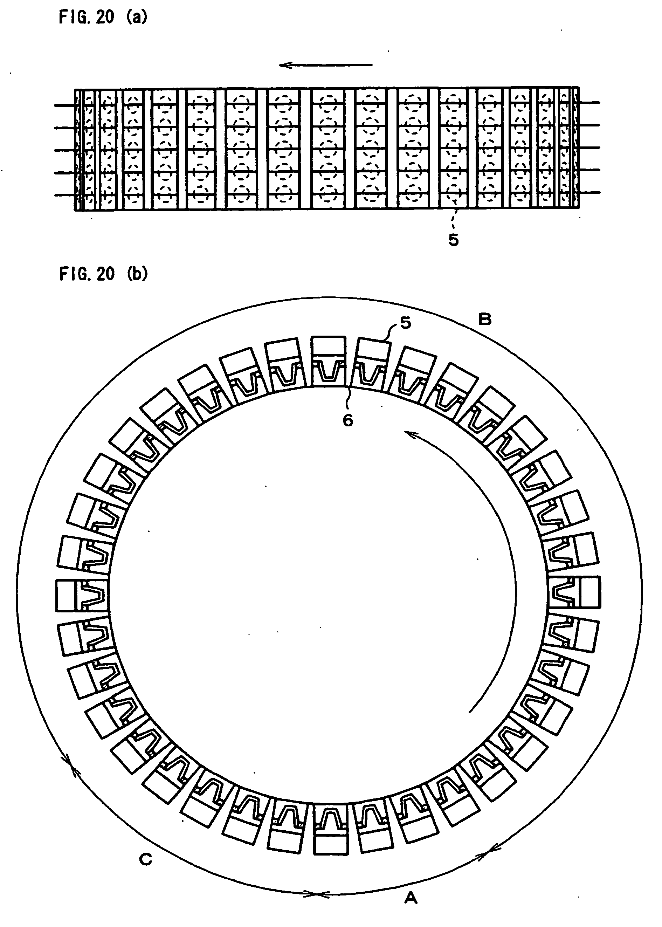

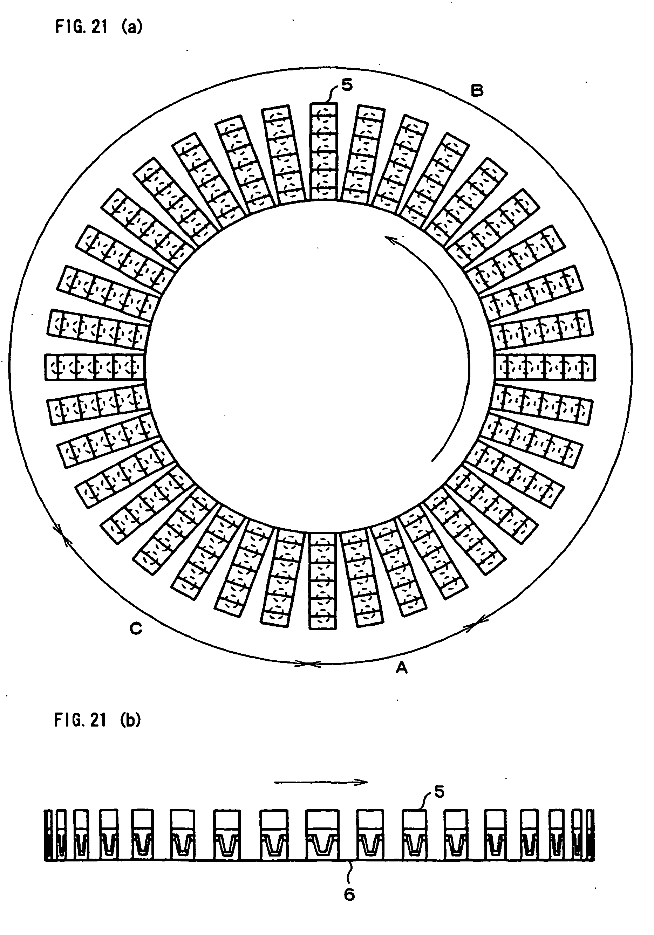

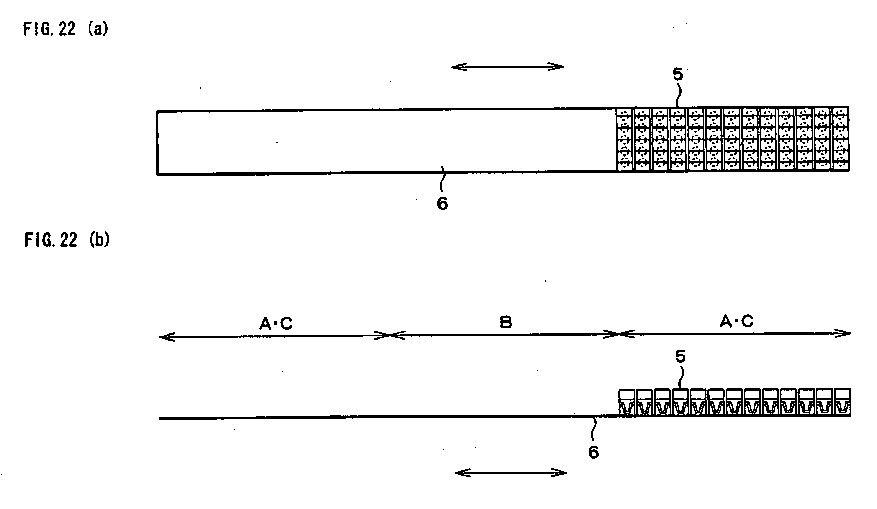

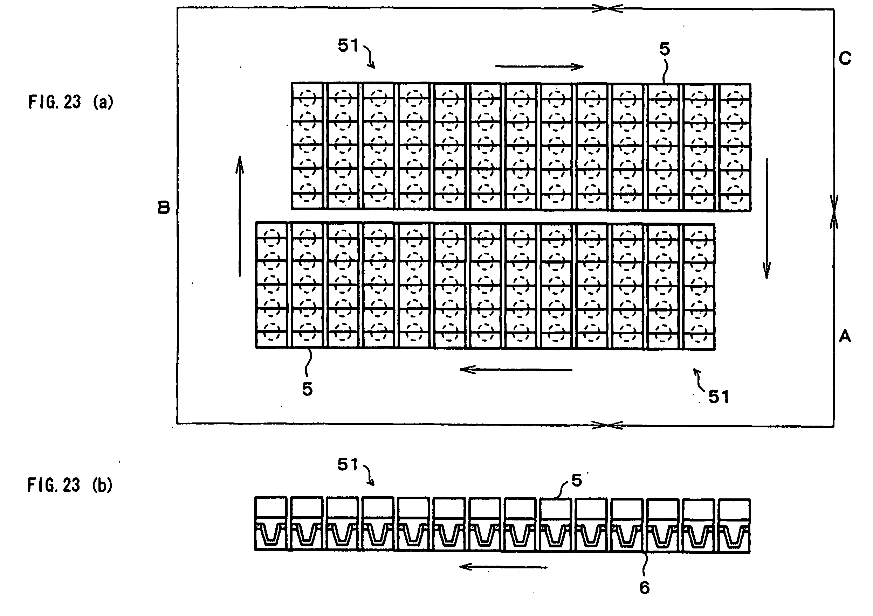

Still another embodiment of the present invention is described below referring to Fig. 20 to Fig. 23. The present invention is not limited to this embodiment. For convenience of explanation, the same numbers are shown for the members having the same function as the members used in the above embodiments 1 to 3 with the explanation left out.
In the above embodiments 1 to 3, the conveyer 6 has a layout of no-end plate type, while in this embodiment, another layout of the conveyer 6 is explained.
For example, as shown in Fig. 20 (a) and (b), the conveyer 6 has a layout of a Ferris wheel type disposed circularly and installed rotatively and vertically. Viewing from the top, as shown in Fig. 20 (a), the united metal molds 5 are rotatively transferred from an upper part to a lower part in the direction of the arrow. Viewing from the side, as shown in Fig. 20 (b), the united metal molds 5 are mounted entirely on an outer periphery of the cylindrical conveyer 6 and are rotatively transferred in the direction of the arrow.
As shown in Fig. 20 (a), this Ferris wheel type layout also has the raw material feeding zone A, the heating zone B, and the pickup zone C, as no-end plate-type layout. It is preferable that the raw material feeding zone A and the pickup zone C are provided in a lower area to smoothly feed the raw materials or pick up the molded articles, due to the layout.
Or, as shown in Fig. 21 (a) and (b), there may be a horizontal disc-type layout, disposed circularly and rotatively on a horizontal surface. Viewing from the top, as shown in Fig. 21 (a), the united metal molds 5 are radially disposed and rotatively transferred in the direction of the arrow. Viewing from the side, as shown in Fig. 21 (b), the above united metal molds 5 are radially mounted on the top surface of the circular conveyer 6 and rotatively transferred in the direction of the arrow.
As shown in Fig. 21 (b), in this horizontal disc-type layout, each of the process zones may be set up anywhere, since it is the same thing no matter where the raw material feeding zone A, the heating zone B, and the pickup zone C is provided on the conveyer 6.
In addition, as shown in Fig. 22 (a) and (b), there may be a straight type layout which makes a round-trip movement on a horizontal surface. Viewing from the top, as shown in Fig. 22 (a), for example, the thirteen united metal molds 5 are disposed in a row along the longitudinally extending sides of the conveyer, which can make a round trip movement in the direction of the arrow. Viewing from the side, as shown in Fig. 22 (b), the above united metal molds 5 are mounted on the top surface of the conveyer 6 disposed on the horizontal surface and rotatively transferred in the direction of the arrow.
As shown in Fig. 22 (b), it is preferable that in this straight type layout, the heating zone B is provided in the center, and both the raw material feeding zone A and the pickup zone C are provided on the ends of the conveyer 6 for both uses.
Or, as shown in Fig. 23 (a) and (b), there may be a partial tact type layout wherein the metal molds 5 disposed in rows along the longitudinally extending sides are arranged in two rows on parallel, and on both of the ends the united metal molds 5 are continuously moved to an adjacent straight disposition 51.
Viewing from the top, as shown in Fig. 23 (a), the straight disposition consists of the thirteen united metal molds 5, and each of the straight dispositions is adjacent each other by the metal mold 5 spaced apart. For example, in the left end of the figure showing the straight dispositions 51 and 51, the united metal molds 5 move upward from the lower straight disposition 51, and in the right end of the figure, the united metal molds 5 move downward from the upper straight disposition 51. Viewing from the side, as shown in Fig. 23 (b), the above united metal molds 5 are mounted on the top surface of the conveyer 6 and transferred in the direction of the arrow, and in both ends, the united metal molds 5 are moved adjacently to the straight disposition 51.
As shown in Fig. 23 (a), in the partial tact type layout, each of the process zones may be set up anywhere, since it is the same thing no matter where the raw material feeding zone A, the heating zone B, and the pickup zone C is provided on the conveyer 6.
The above layouts including the no-end plate-type layout are roughly divided into; a structure that the united metal molds 5 are mounted on an outer periphery of the conveyer 6 having no ends; and a structure that the united metal molds 5 are mounted on the top surface of the horizontally extended conveyer 6. However, a desirable layout or structure is not particularly limited since it depends on properties of the raw materials 14 and molded articles, or conditions of a place where the manufacturing apparatus is installed. The above layouts or structures are just examples and other layouts or structures can be used in the present invention.

As described above, in the manufacturing process in accordance with the present invention, the layout of the conveyer 6 is not limited, and it is possible to make a preferable layout depending on properties of the raw materials and molded articles, or conditions of a place where the manufacturing apparatus is installed.

EMBODIMENT 5

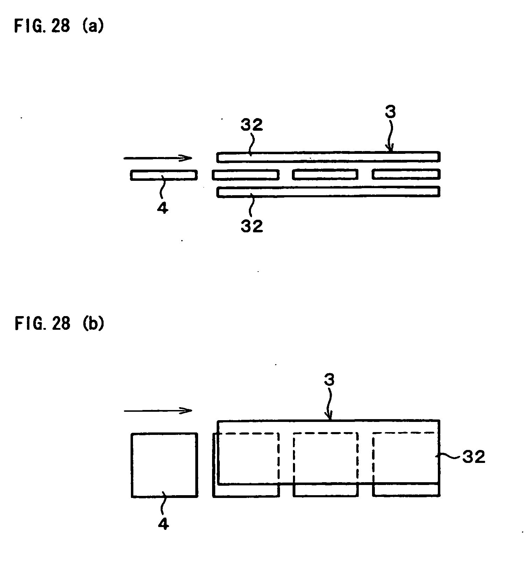

Still another embodiment of the present invention is described below referring to Fig. 28 to Fig. 33. The present invention is not limited to this embodiment. For convenience of explanation, the same numbers are shown for members having the same function as the members used in the above embodiments 1 to 4 with the explanation left out.

In the above embodiments 1 to 4, the structures of the heating zone B are explained in detail. In this embodiment, a preferable structure of the power feeding and receiving section is described in detail.

More specifically, as described in the embodiment 1, in the manufacturing apparatus used in the present invention, the heating section 1 includes the power feeding section 3 and the metal molds 7 (or united metal molds 5). (Refer to Fig. 2 etc.) The above power feeding section 3 has a rail shape, in correspondence with the plate-type power receiving sections 4 equipped with the metal molds 7 (refer to Fig. 10 (a) to (c)). In this structure, as shown in Fig. 28 (a) and (b), the plate-type power receiving sections 4 move in the direction of the arrow in the figure and they are inserted into the rail-shaped power feeding section 3 with no contact.

Usually, the rail-shaped power feeding section 3 has the same shape, for example, a rough U-shaped section, near an inlet to the power feeding section 3 and also at the other parts, shown in Fig. 28 (a) and (b). However, if a part near the inlet and the other parts have the same shape, power starts to be supplied rapidly from the power feeding section 3 to the power receiving sections 4, which may not be preferable for some kinds of raw materials 14 or molded articles.

As described in the above embodiments 2 and 3, for instance, an electrical property (property of high frequency) of the above starchy and watery mixture significantly changes at an initial stage of heating and molding. Accordingly, applying a very large output of high frequency is not preferable.

It is thus possible to gradually heat the raw materials 14 by changing a shape of the power feeding section 3 and gradually raising a power feeding level near the inlet to each of the sub-zones in the heating zone B. This stabilizes the raw materials 14 inside the united metal molds 5 (metal molds 7) and can prevent a reduction of moldability and strength of molded articles, even if the raw materials 14 contain much water as the above starchy and watery mixture. In result, it is possible not only to further improve quality of molded articles, but also to adjust properties of molded articles (strength or texture) to target properties.

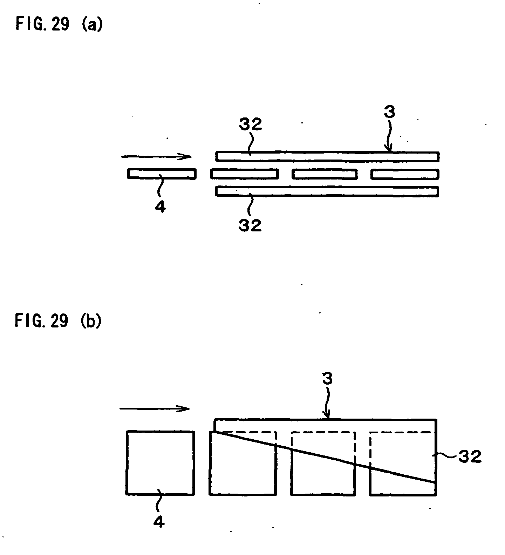

More specifically, as shown in Fig. 29 (a) and (b), the power feeding section 3 is constructed so that a pair of plate-type sides 32 and 32 wherein the plate-type power receiving sections 4 are inserted with no contact, may reduce an area toward the inlet, that is, that a rough triangle shape is formed having oblique sides upwardly inclined toward the moving direction of the united metal molds 5. Thus, an overlapped area formed by the power receiving sections 4 and the sides 32 and 32 inserting the power receiving sections 4 in between, gradually enlarges with the movement of the united metal molds 5. Then, a capacity of a condenser formed by the power receiving sections 4, the sides 32 and 32 and a space therein increases. In result, it is possible to gradually increase a power feeding level and to gradually heat the raw materials 14.

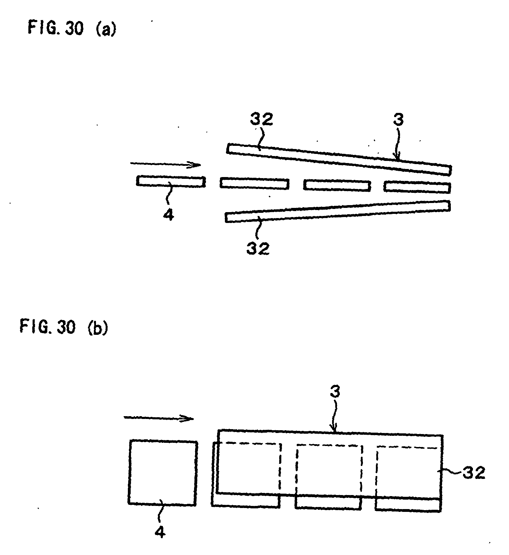

Or, as shown in Fig. 30 (a) and (b), the rail-shaped power feeding section 3 is constructed so that a distance between a pair of sides 32 and 32 (opposite distance) is extended toward the inlet, that is, a distance between the sides 32 and 32 is reduced toward the moving direction of the united metal molds 5. Since a space between the power receiving sections 4 and the sides 32 and 32 with the power receiving sections 4 in between is gradually reduced with the movement of the united metal molds 5, a capacity of a condenser formed by the power receiving sections 4, the sides 32 and 32, and a space therein increases. In result, it is possible to gradually heat the raw materials 14, by gradually increasing a power feeding level.

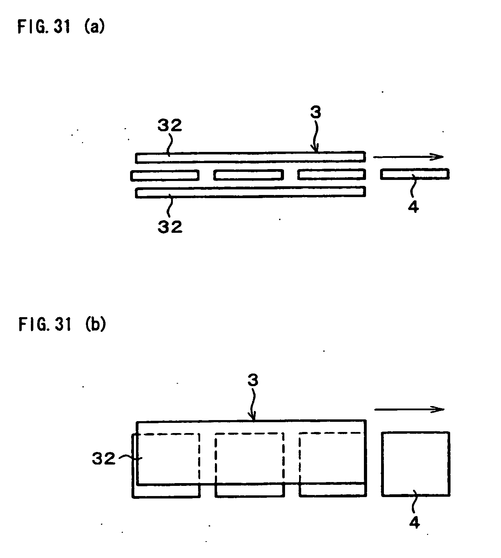

Similarly, the rail-shaped power feeding section 3 may have the same shape at a part near an outlet of the power feeding section 3 and also at the other parts shown in Fig. 31 (a) and (b). However, when a part near the outlet and the other parts have the same shape, power supply from the power feeding section 3 to the power receiving sections 4 suddenly finishes, which may not be preferable for some kinds of raw materials 14 or molded articles.

For example, as described in the above embodiments 2 and 3, for baked and molded articles made from the above starchy and watery mixture, in case that much heat is applied at a last stage of heating and molding, the molded articles get a scorch due to overheating, with a poorer property. In addition, a scorch may cause a spark.

If a power feeding level is gradually reduced by changing a shape of the power feeding section 3 near an outlet in each of the sub-zones in the heating zone B, it is possible to gradually reduce a level of heating the raw materials 14. Then, it is possible to moderately heat molded articles for a finish of drying the molded articles, and to prevent overheating of the molded articles. In result, it is possible to prevent a scorch on molded articles and a spark deriving therefrom, and to steadily produce high quality molded articles.

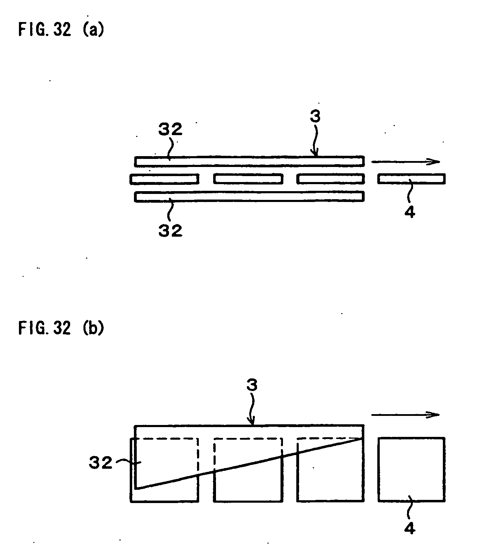

More specifically, as shown in Fig. 32 (a) and (b), the power feeding section 3 is constructed so that a pair of sides 32 and 32 gradually reduces an area toward the outlet, that is, a rough triangle shape is formed with oblique sides downwardly inclined toward the moving direction of the united metal molds 5. Thus, an overlapped area of the power receiving sections 4 with the sides 32 and 32 inserting the power receiving sections 4 in between is gradually reduced toward the moving direction of the united metal molds 5. A capacity of a condenser formed by the power receiving sections 4, the sides 32 and 32, and a space therein, is reduced. In result, it is possible to gradually decrease a power feeding level and to gradually decrease heating applied to molded articles.

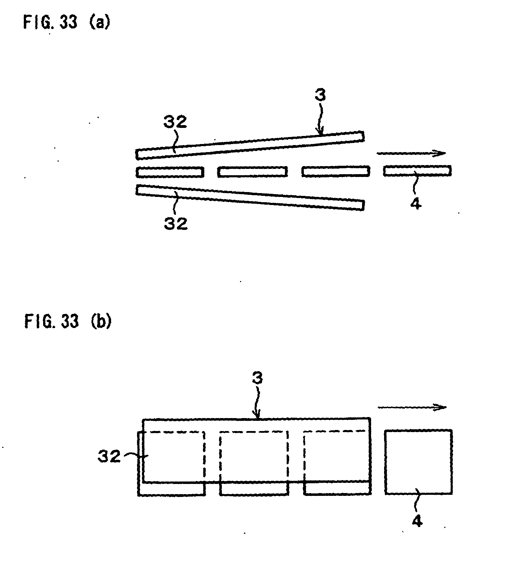

Or, as shown in Fig. 33 (a) and (b), the rail-shaped power feeding section 3 is constructed so that a distance between a pair of sides 32 and 32 (opposite distance) is extended toward the outlet, that is, a distance between the sides 32 and 32 is extended toward the moving direction of the united metal molds 5. Since a space between the power receiving sections 4 and the sides 32 and 32 with the power receiving sections 4 in between is gradually extended toward the moving direction of the united metal molds 5, a capacity of a condenser formed by the power receiving sections 4, the sides 32 and 32, and a space therein is decreased. In result, it is possible to gradually reduce a power feeding level and to gradually reduce heating applied to molded articles.

Thus, in this embodiment, the power feeding section 3 is constructed so that the overlapped area (opposite area) of the power receiving sections 4 with the side 32 (opposite side) of the power feeding section 3 may be changed along the moving direction of the united metal molds 5 (moving passage), or so that a distance (opposite distance) between the power receiving sections 4 and the sides 32 (the opposite side) of the power feeding section 3, may be changed along the moving direction (the moving passage) of the united metal molds 5, in order to gradually change a level of high frequency applied to the united metal molds 5. This can improve moldability of molded articles and can attain desirable properties of molded articles.

As a way of changing the opposite area, as mentioned above, it is preferable to change an area of the side (opposite side) 32 along the moving direction of the united metal molds 5. As a way of changing the opposite distance, as mentioned above, it is preferable to change a distance between a pair of sides (opposite sides) 32 and 32 along the moving direction of the united metal molds 5. However, the way is not limited to those above. Also, in the above example, the way of continuously changing the opposite area and the opposite distance is explained, but not limited to those. Namely, if an application level of high frequency can be changed, the distance between the side 32, that is, the opposite side, and the power receiving sections 4 can be changed in any way, for example, step by step.

In addition, this embodiment is constructed so that a shape of the power feeding section 3 is changed in order to change a level of applying high frequency, but the present invention is not limited to this. Especially, in case that the opposite area between the power feeding section 3 and the power receiving section 4 is changed, the shape of the power receiving section 4 may be changed instead of the power feeding section 3.

As mentioned above, in this embodiment, a power feeding level can be changed by making the rail-shaped power feeding section wherein the plate-type power receiving section is inserted or the power receiving section, which changes the shape along the moving passage of the power receiving section (i.e. moving passage of the metal molds) in the neighborhood of either an inlet or an outlet to the heating zone.

It is thus possible to adjust a heating level as the above embodiments 2 and 3, and to improve moldability of molded articles or attain desirable properties of finished articles. Especially, since step-by-step heating can be performed at an initial stage or a last stage of the heating process, it is possible to heat and mold the raw materials properly.

Also, it is possible to adjust a strength of heating at an optional position by combining the way to change the shape of the rail-shaped power feeding section in this embodiment, with the way to divide the heating zone, the way to change an output by the sub-zone and the way to set up the high-frequency application suspension zone shown in the above embodiments 1 to 3. For example, it is possible to perform proper heating based on a condition of raw materials and molded articles by changing a shape of the power feeding section near an inlet or an outlet to each of the sub-zones.

<u>EMBODIMENT 6</u>

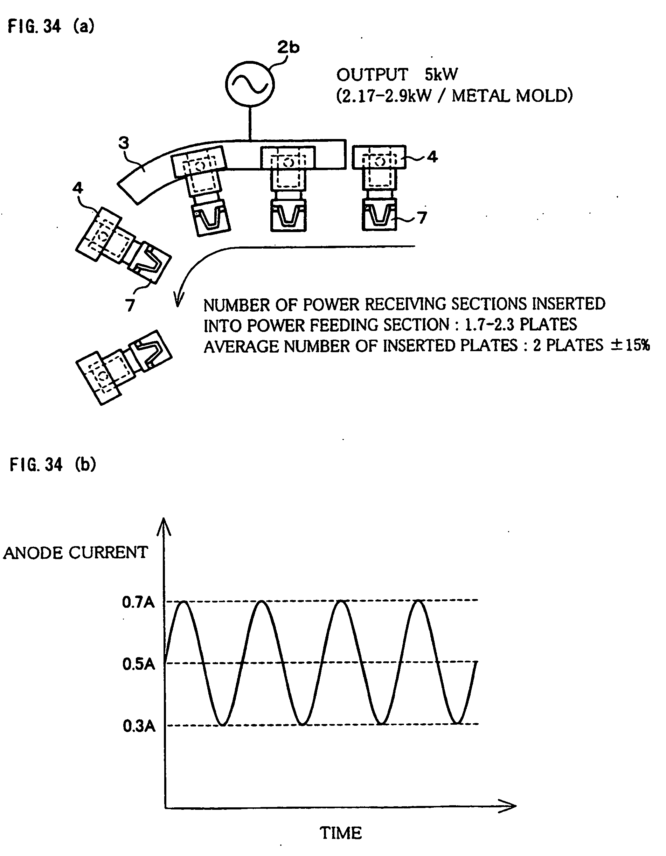

Still another embodiment of the present invention is described below referring to Fig. 34 to Fig. 36. The present invention is not limited to this embodiment. For convenience of explanation, the same numbers are shown for the members having the same function as the members used in the above embodiments 1 to 5 with the explanation left out.

In the above embodiments 1 to 5, the structure of the heating zone B and the power feeding and receiving section is explained. In this embodiment, a preferable method to transfer the power receiving sections, that is, the metal molds, to the heating zone is explained in detail.

More specifically, as illustrated in the embodiments 1 to 3, a layout of the conveyer 6 is no-end plate type, curved in an arc near the supporting axes 15a and 15b stretching the conveyer 6 (refer to Fig. 1 or Fig. 14.). The power feeding section 3 is curvedly disposed to fit the curved area (R-area) of the conveyer 6. When the metal molds 7 are transferred, there is a difference in the distance where the metal molds 7 are transferred within a definite period of time in a straight area and in the R-area of the conveyer 6.

For example, as shown in Fig. 34 (a), if the power feeding section 3 is a high-frequency application zone (e.g. sub-zone b2 shown in Fig. 14) including both the straight area and the R-area, the number of the power receiving sections inserted into the power feeding section 3 (placed between the sides 32 and 32) always varies. In other words, the number of the metal molds 7 to be dielectrically heated in the above high-frequency application zone always varies. In the example shown in Fig. 34 (a), the number of the power receiving sections 4 (i.e. metal molds 7) inserted into the power feeding section 3 varies from 1.7 plates to 2.3 plates, 2 plates on average, and a rate of variation is $\pm$15%, that is, 1/4 plates. In this case, if an output from the power source section 2 is 5 kW, an output to each of the metal molds 7 varies from 2.17 kW to 2.94 kW.

As mentioned above, if the number of the plate-type power receiving sections 4, that is, the united metal molds 5, inserted into the power feeding section 3 is not fixed, matching of high frequency becomes unsteady. Then, as shown in Fig. 34 (b), timing of high anode current and timing of low anode current periodically appears. In other words, a change deriving from proper matching and a change deriving from improper matching are alternately repeated, which results in a condition of high anode current and a condition of low anode current alternately. In the example of Fig. 34 (a), anode current varies from 0.3A at minimum to 0.7A at maximum, as shown in Fig. 34 (b), which largely varies compared with the average of 0.5A.

Especially, at an initial stage of heating process (initial stage), a condition of the raw materials 14 changes most significantly, and at a last stage of heating process, a moisture content of the raw materials 14 is the lowest, whereby matching of high frequency is more likely to become unsteady and the anode current is likely to vary most extremely. Therefore, if the number of the plate-type power receiving sections 4, that is, if the number of the metal molds 7, inserted into the power feeding section 3 at an initial stage and a last stage of heating process, is not fixed, heating efficiency is likely to be reduced and a spark may be generated when the matching is improper.

In addition, it is necessary to adjust an output from the power source section 2 to a maximum (peak) value of anode current. In the examples shown in Fig. 34 (a) and (b), an output from the power source section 2 is 5 kW, that is, 0.5 A of anode current on average can be only applied. Accordingly, it is necessary to use the power source section 2 having an additional output, resulting in increased production cost of molded articles. In addition, to control the matching of high frequency at a consistent level gives a problem that a very high-speed adjustment of electrostatic capacity or inductance is necessary.

Of course, the above problem that matching of high frequency becomes unsteady may not much affect for some kinds of the raw materials 14 and molded articles. However, it is preferable to stabilize the matching of high frequency in case that baked and molded articles are manufactured using the starchy and watery mixture.

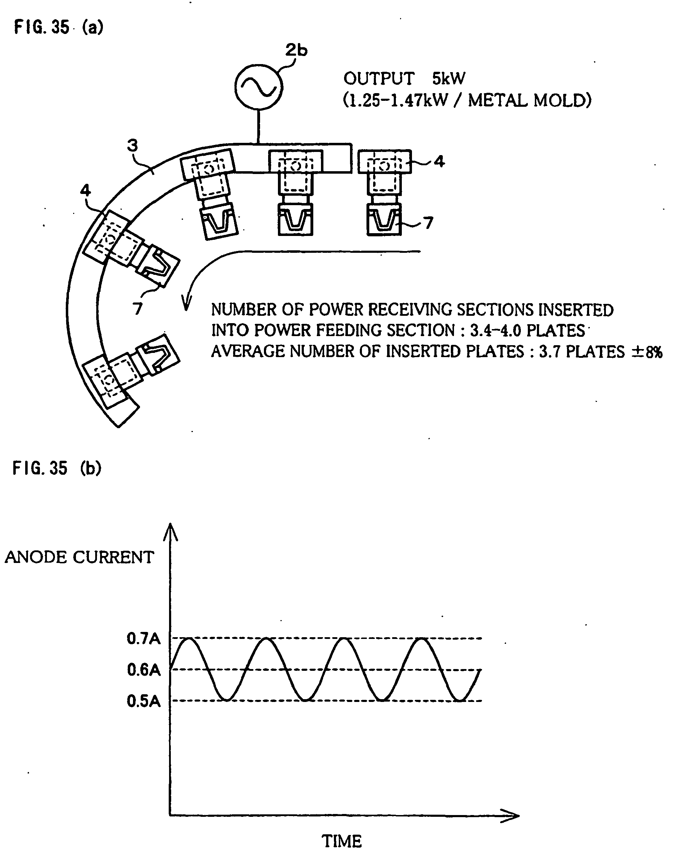

As shown in Fig. 35 (a), if the high-frequency application zone includes the straight area and the R-area as the example of Fig. 34 (a), a length of the high-frequency application zone is extended.

More specifically, as shown in Fig. 35 (a), viewing from the moving direction of the metal molds 7, the rail-shaped power feeding section 3 is extended from a position around which R-area starts to curve, to a position before which the curve finishes. Therefore, the number of the power receiving sections 4 inserted into the power feeding section 3 changes 3.4 plates to 4.0 plates. The variation in the number of the metal molds 7 to be heated is $\pm$0.25 plates. Though the variation in the number of metal molds 7 remains the same and the average is 3.7 plates, a rate of variation changes to $\pm$ 8 %, which is obviously lower than the example in Fig 34 (a).

In addition, the output to each of the metal molds 7 varies from 1.25 kW to 1.47 kW, which is lower than the example shown in Fig. 34 (a). Moreover, as shown in Fig. 35 (b), though the anode current varies, the variation is held down at from 0.5 A at minimum to 0.7 A at maximum, that is, approaches toward 0.6 A. In this example, though the output from the power source 2 is 5 kW as the example shown in Fig. 34 (a), 0.6 A of anode current on average can be applied with improved energy efficiency.

Thus, in the present invention, it is preferable to extend a length of the high frequency application zone if it includes the straight area and the R-area. In result, it is possible to reduce a rate of variation in the number of metal molds to be heated in one of the sub-zones, thereby reducing a variation in matching of high frequency and relatively stabilizing anode current. It is thus possible to improve energy efficiency of dielectric heating by applying high frequency and to reduce a risk of a spark.

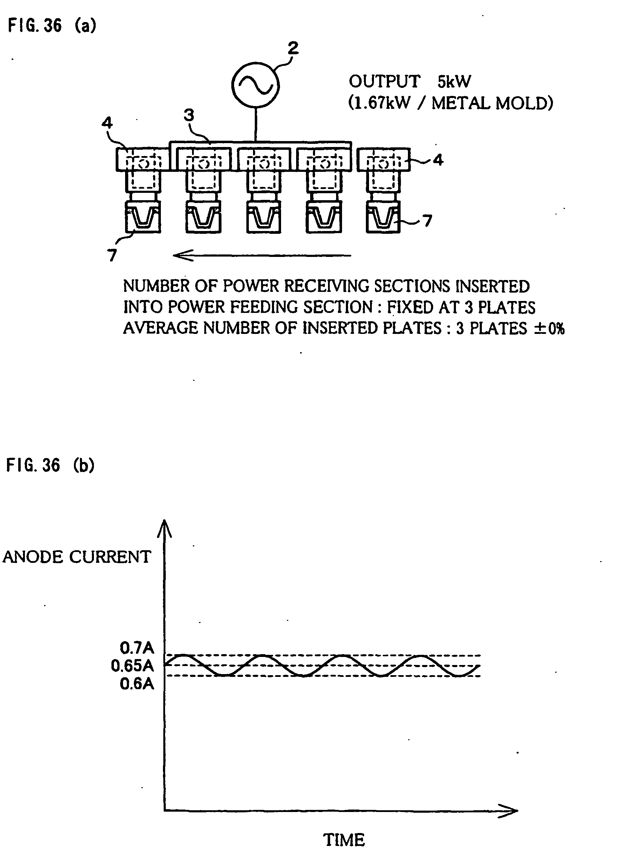

In addition, as shown in Fig.36 (a), the high-frequency application zone may be composed of the straight area only. In this case, since the R-area is not included, the number of power receiving sections 4 inserted into the power feeding section 3 is almost fixed at 3 plates, averaging 3 plates, and the variation in the number of metal molds 7 to be heated is almost $\pm$0. In addition, the output to each of the metal molds is almost fixed at 1.65kW. As shown in Fig. 36 (b), a variation in anode current is held down at from 0.6 A at minimum to 0.7 A at maximum, approaching toward 0.65 A. Namely, in this example, though an output from the power source section 2 is 5 kW as the examples shown in Fig. 34 (a) and Fig. 35 (a), 0.65 A of anode current on average can be applied. Therefore, the matching of high frequency becomes much stabilized and energy efficiency is further improved.

In case that the heating zone B is designed depending on the kinds of raw materials 14 and molded articles, if the R-area is set up as the high-frequency application suspension zone and high frequency is applied in the straight area only (refer to Fig. 18), it is possible to stabilize matching of high frequency, increase energy efficiency, and prevent a spark.

The heating zone B must be constructed so that preferable heating can be performed depending on a change in condition of the raw materials 14 or the kind of molded articles attained. Especially, as explained in the above embodiments 3 and 5, if high frequency is applied at an initial stage and a last stage when the raw materials 14 significantly changes a state, it is preferable to design the high-frequency application zone to minimize a variation in anode current.

However, in designing the heating zone B, considering a change in condition of the raw materials 14 or the kind of molded articles attained, the high-frequency application zone cannot be always composed of the above-mentioned straight area only. Even if the high-frequency application zone is composed of the above straight area only, the number of power receiving sections 4 inserted into the power feeding section 3 may not be fixed in some cases.

Moreover, as shown in Fig. 36 (b), even if the number of power receiving sections 4 inserted into the power feeding section 3 is fixed, the anode current practically varies within from 0.6A to 0.7A, because the condition of the raw materials 14 in the metal molds 7 newly entering into the high-frequency application zone (the power feeding section 3 in the sub-zone) is different from the condition of the raw materials 14 in the metal molds 7 leaving the high-frequency application zone.

In this embodiment, whether the high-frequency application zone includes the R-area or the straight area only, a rate of variation in the number of metal molds 7 to be heated in one of the high-frequency application zones (the sub-zones) is set within a given range, based on which a length of high-frequency application zone is determined.

More specifically, in this embodiment, if the rate of variation in the number of the metal molds 7 to be heated is indicated as C, the rate of variation C can be determined by the following formula. $N_{max}$ is the maximum number of the power receiving sections 4 inserted into the power feeding section 3, Nmin is the minimum number of the power receiving sections 4 inserted into the power feeding section 3, and Nave is the average number of the power receiving sections 4 inserted into the power feeding section 3.

$$C = \{(N_{max} - N_{min}) \diagup 2\} \diagup N_{ave}$$

In other words, the rate of variation C in the number of metal molds 7 is calculated by dividing the difference between the maximum number and the minimum number of the power receiving sections 4 inserted into the power feeding section 3 by 2 and then dividing the result by the average number of the power receiving sections 4.

In this embodiment, it is preferable to determine a length of the high-frequency application zone so that the above rate of variation C may be more than 0 to less than 0.5 ($0 \leqq C < 0.5$). Especially, it is preferable to determine a length of the high-frequency application zone so that the above rate of variation C may be 0 or more than 0 to less than 0.1 ($0 \leqq C < 0.1$).

As mentioned above, in the sub-zone applying high frequency included in the heating zone (high-frequency application zone), a length is determined so that the number of the power receiving sections inserted into the power feeding section may be fixed as much as possible. It is thus possible to reduce a variation in the number of metal molds to be dielectrically heated by applying high frequency in one of the sub-zones, thereby stabilizing matching of high frequency and reducing a variation in anode current. In result, it is possible not only to improve energy efficiency but also to prevent a spark.

Based on the embodiments, comparative examples, and conventional arts, the method for manufacturing heated and molded articles in accordance with the present invention is explained below in more detail, but the present invention is not limited to those above. In the following explanation, weight ratio is simply referred to as ratio, and weight % is simply referred to as %. Out of various properties, including a rate of sparking by applying high frequency in the heating zone, moldability of the raw materials and properties of the molded articles attained and other various properties given to the molded articles by performing both dielectric heating and external heating, emergent effects from additives and baked condition are evaluated based on the following methods.

## RATE OF SPARKING

In the heating zone B, as mentioned above, high frequency energy is likely to be concentrated and to generate a spark due to localized high frequency. The generation of a spark is evaluated based on a rate of sparking. The double circle indicates that a spark is not generated at all. The single circle indicates that a spark is not almost generated. The triangle indicates that a spark is sometimes generated. The cross mark indicates that a spark is generated very often.

MOLDABILITY OF RAW MATERIALS

Moldability of the raw materials 14 is totally evaluated for separatability from the metal molds 7 (the united metal molds 5) and holding a shape of molded articles. The double circle indicates the molded articles can be completely separated from the metal molds and hold a good shape. The single circle indicates that the molded articles are almost completely molded though there are slight difficulties in separatability from the metal molds and holding a shape of molded articles. The triangle indicates that molding is possible though there are some difficulties in separatability from the metal molds and holding a shape of molded articles, and some improvements are necessary. The cross mark indicates that molding is impossible.

PROPERTIES OF MOLDED ARTICLES

Properties of molded articles are totally evaluated based on appearance, hue and texture to check strength and a structure of the molded articles attained. The double circle indicates "excellent". The single circle indicates "good". The triangle indicates "rather good" enough to use the molded articles. The cross mark indicates that the molded articles cannot be used due to some defects.

EMERGENT EFFECT FROM ADDITIVES

An emergent effect from additives is evaluated using a red coloring and a flavoring. The double circle indicates that molded articles have a slightly brownish red color with an excellent coloration. The single circle indicates a good coloration. The triangle indicates that a red color is colored a little poorly with a slightly poor coloration. The cross mark indicates that the molded articles have a brownish color due to a very poor red coloring and a poor coloration.
Similarly, for flavorings, the double circle indicates that an excellent flavor is left in the molded articles. The single circle indicates that a good flavor is left. The triangle indicates that a slightly poor flavor is left. The cross mark indicates that the flavor is not almost left.

BAKED CONDITION

A baked condition is evaluated for a baked color and a roast smell of molded articles. For a baked color, the double circle indicates "enough dark". The single circle indicates "dark". The triangle indicates "light". The cross mark indicates "very light". For a roast smell, the double circle indicates "very strong", single circle indicates "strong", the triangle indicates "hardly smells" ("slightly smells"), and the cross marks indicates "no smell".

PREPARATION OF RAW MATERIALS

To make the composition shown in Table 1, flour and/or starch as main ingredients, and sub ingredients "a" or "b" are added to water, and then by fully agitating and mixing, starchy and watery mixtures A to F (hereinafter referred to as raw materials A to F) are prepared. The solids and viscosity of each of the raw materials are shown in Table 1. The raw materials A to C as well as E and F containing the sub ingredients "a" are the raw materials 14 for edible containers. The raw materials D containing the sub ingredient "b" are the raw materials 14 for biodegradable molded articles.

TABLE 1

| | | Raw materials (weight ratio) | | | | | |
|---|---|---|---|---|---|---|---|
| | | A | B | C | D | E | F |
| Main ingredients | Flour | 100 | 100 | 100 | 0 | 100 | 100 |
| | Corn starch | 15 | 20 | 20 | 0 | 15 | 20 |
| | Sweet potato starch | 5 | 0 | 0 | 0 | 5 | 0 |
| | Potato starch | 0 | 0 | 0 | 100 | 0 | 0 |

(continued)

| | | Raw materials (weight ratio) | | | | | |
|---|---|---|---|---|---|---|---|
| | | A | B | C | D | E | F |
| Sub ingredients "a" | Salt | 0 | 1 | 0.5 | - | 0.5 | 1.5 |
| | Sugar | 5 | 5 | 60 | - | 5 | 5 |
| | Flavor enhancer | 0 | 0 | 5 | - | 0 | 0 |
| | Inflating agent | 0.5 | 0.5 | 0.5 | - | 1 | 0.5 |
| | Colorings | 1 | 1 | 1 | - | 1 | 1 |
| | Flavorings | 1 | 1 | 1 | - | 1 | 1 |
| | Oil and fat, Emulsifier | 2 | 2 | 2 | - | 2 | 2 |
| Sub ingredients "b" | Diatomaceous earth | - | - | - | 1 | - | - |
| | Locust bean gum | - | - | - | 2 | - | - |
| | Stearin | - | - | - | 1 | - | - |
| Total solids | | 129.5 | 130.5 | 190 | 104.0 | 130.5 | 131 |
| Water | | 130 | 130 | 190 | 100 | 160 | 130 |
| Content of solids (%) | | 49.9 | 50.1 | 50.0 | 50.9 | 44.9 | 50.2 |
| Viscosity (cP) | | 2700 | 2700 | 3300 | 3500 | 1200 | 2700 |

The corn starch in Table 1 includes not only general corn starch, but also waxy corn starch, high-amylose corn starch, industrially-modified a corn starch, cross-linked corn starch. The composition of starch is optional and determined accordingly.

SHAPE OF MOLDED ARTICLES

For a shape of molded articles, in case of edible containers, a conical cone cup 8a shown in Fig. 5 (a) and (b) or a flat waffle cone 8b shown in Fig. 6 (a) and (b), may be used. The size of the cone cup 8a is 54 mm in maximum diameter and 120 mm in height, and 2.0 mm in thickness. The size of the waffle cone 8b is 150 mm in diameter, and 2.0 mm in thickness.

On the other hand, for biodegradable containers, a tray 8c of a square shape with flanges on the periphery shown in Fig. 7 (a) and (b) is used. The size of the tray 8c is 220 mm in length, 220 mm in width, 21.5 mm in height and 3.5 mm in thickness.

STRUCTURE OF MANUFACTURING APPARATUS

In the examples and comparative examples shown below, a manufacturing apparatus of the following specifications is basically used:

As shown in Fig. 8, the conveyer 6 has a no-end plate-type layout stretched horizontally. In the conveyer 6, tongues (united metal molds 5) are mounted on the entire periphery of the conveyer 6. The tongue consists of the five metal molds 7 continuously disposed in one line. It is possible to continuously move the metal molds 7 by transferring the tongues. In the conveyer 6, the raw material feeding zone A, the heating zone B, and the pickup zone C are provided in the order from the neighborhood of one end (end at the side of the supporting axis 15a) along the direction of the rotative movement of the tongues.

In the heating zone B, the high-frequency heating part including the power source section 2 and the power feeding section 3 as well as the gas heating section 9 (external heating section) are provided. A high-frequency output in the entire high-frequency heating part is 100 kW. The temperature of the metal molds by external heating in the gas heating section 9 is 180°C unless specified.

Also, the number of tongues (number of the united metal molds 5) that can be dielectrically heated in the entire heating zone B is also twenty-five. Accordingly, the number of the metal molds 7 that can be dielectrically heated is one hundred and twenty-five in the entire heating zone B.

In addition, the number of tongues on which external heating can be directly performed is also twenty-five (one hundred and twenty-five metal molds 7). However, in practice, both in the raw material feeding zone A and in the pickup zone C, the temperature of the metal molds through external heating does not almost lower, that is, it can be considered that external heating is performed on the entire manufacturing apparatus.

WAY TO DIVIDE HEATING ZONE

In the following example, the heating zone B is divided into sub-zones, each of which has a high-frequency application part (the power source section 2 and the power feeding section 3) to apply high frequency. A condition to divide the heating zone B, that is, a way to divide the heating zone B are explained by Division numbers shown below.

Divisions 1 to 3 are the ways to divide the heating zone B into two sub-zones b1 and b2 explained in the above embodiment 1. Divisions 1, 2 and 3 correspond to structures shown in Fig. 1, Fig. 12, and Fig. 13, respectively.

Divisions 4 to 6 are the ways to divide the heating zone B into more than two sub-zones. Divisions 4, 5 and 6 correspond to a structure divided into five sub-zones shown in Fig. 14, a structure divided into five sub-zones shown in Fig. 15, and a structure divided into three sub-zones shown in Fig. 16, respectively.

Divisions 7 and 8 are the ways to provide the high-frequency application suspension zone where no high frequency is applied, in the heating zone B. Divisions 7 and 8 correspond to structures shown in Fig. 17 and 18, respectively.

Divisions 9 and 10 are the ways to provide the external single heating zone b1-1 at an initial heating stage or the external single heating zone b5-1 at a last heating stage in the heating zone B, explained in the above embodiment 3. Divisions 9 and 10 correspond to the structures shown in Fig. 26 and Fig. 27, respectively. In this example, an output in the sub-zones b2, b3, b4, and b5 based on Division 9 and 10 is all set at 25 kW (an output to each of the metal molds 7 is 1.0 kW), which is different from the structures shown in Fig. 26 and 27.

Divisions 11 to 14 are the ways that are equipped with a structure to change a shape of the rail-shaped power feeding section receiving the plate-type power receiving section in the neighborhood of either an inlet or an outlet to the heating zone, explained in the embodiment 5. The way to divide into the sub-zones is the same as that of Division 4 divided into five sub-zones shown in Fig. 14.

Division 11 is a combination of shapes of the power feeding section shown in Fig. 29 (a) and (b) for the neighborhood of the inlet to the sub-zone b1 in Division 4. Division 12 is a combination of shapes of the power feeding section shown in Fig. 30 (a) and (b) for the neighborhood of the inlet to the sub-zone b1 in Division 4. Division 13 is a combination of shapes of the power feeding section shown in Fig. 29 (a) and (b) for the neighborhood of the inlet to the sub-zone b5 in Division 4. Division 14 is a combination of shapes of the power feeding section shown in Fig. 30 (a) and (b) for the neighborhood of the inlet to the sub-zone b5 in Division 4.

In comparative examples, a way that does not divide the heating zone B into sub-zones, is referred to as "No Division", which corresponds to the structure shown in Fig. 25.

Moreover, in all of the Divisions except for Division 8, the gas heating section 9 is disposed in the entire heating zone B shown in Fig. 9, constituting an external heating model 1. In Division 8, the gas heating section 9 is disposed in the sub-zones b1 and b2 only shown in Fig. 19, constituting an external heating model 2. Thus, the external heating models 1 and 2 are not referred in the following examples, since they are considered combined into each of the Divisions.

EXAMPLE 1

In the manufacturing apparatus of the above specifications, the heating zone B is divided into two to make the above Division 1 (refer to Fig. 1.). Using this manufacturing apparatus, the above raw materials A are heated and molded to make the cone cups 8a and to evaluate a rate of sparking, moldability of the raw materials 14 and properties of the molded articles. The results are shown in Table 2.

EXAMPLE 2

In the manufacturing apparatus of the above specifications, the heating zone B is divided into five to make the above Division 4 (refer to Fig. 14). Using this manufacturing apparatus, the above raw materials A are heated and molded to make the cone cups 8a and to evaluate a rate of sparking, moldability of the raw materials 14 and properties of the molded articles. The results are shown in Table 2.

EXAMPLE 3

In the manufacturing apparatus of the above specifications, the heating zone B is divided into five to make the above Division 5 (refer to Fig. 15). Using this manufacturing apparatus, the above raw materials A are heated and molded to make the cone cups 8a and evaluate a rate of sparking, moldability of the raw materials 14 and properties of the molded articles. The results are shown in Table 2.

EXAMPLE OF CONVENTIONAL ART

In accordance with the art disclosed in Patent No. Hei 10-230527 of the Japanese unexamined patent application publication, the above raw materials A are heated and molded to make the cone cups 8a. More specifically, as shown in Fig. 24, a basic structure of the conveyer 6 is the same as that of the examples 1 or 2. However, each of the tongues has just one metal mold 7 only. In the heating zone B, a high-frequency output is 9 kW, the number of tongues that can be dielectrically heated is nine, and the number of the metal molds 7 is also nine. In other words, the manufacturing apparatus is smaller as a whole.

By manufacturing molded articles in accordance with the conventional manufacturing apparatus and method, a rate of sparking, moldability of the raw materials 14, and properties of the molded articles are evaluated, as the example 1. The results are shown in Table 2.

COMPARATIVE EXAMPLE 1

Using the manufacturing apparatus of the above specifications with "No Division" structure that the heating zone B is not divided (refer to Fig. 25), the above raw materials A are heated and molded to make the cone cups 8a and evaluate a rate of sparking, moldability of the raw materials 14 and properties of the molded articles. The results are shown in Table 2.

TABLE 2

| Examples, comparative examples and conventional art | Example 1 | Example 2 | Example 3 | Conventional art | Comparative example |
|---|---|---|---|---|---|
| Division of heating zone | Division 1 | Division 2 | Division 5 | No division | No division |
| Raw materials | Raw Materials A | Raw Materials A | Raw Materials A | Raw Materials A | Raw Materials A |
| Molded articles | Cone cup | Cone cup | Cone cup | Cone cup | Cone cup |
| Rate of sparking | Δ | ○ | ◎ | ○ | × |
| Moldability of raw materials | Δ | ○ | ◎ | ○ | × |
| Properties of molded articles | Δ | ○ | ◎ | ○ | - |

As clarified from the results in Table 2, in the manufacturing method and apparatus in accordance with the present invention, even if the manufacturing apparatus is larger, it is possible to restrain or prevent localization of high frequency by dividing the heating zone B, thereby effectively preventing a spark, overheating and dielectric breakdown. Also, it is possible to attain excellent moldability of the raw materials 14 and properties of the molded articles.

Especially, as clarified from comparison of the examples 2 and 3, in case that the cone cups 8a are molded using the raw materials A, it is possible not only to improve moldability of the raw materials 14 and properties of the molded articles, but also to almost prevent a spark, by reducing an output in the sub-zone b1 where an electrical property of the raw materials 14 changes most significantly.

In addition, if an output is gradually raised from the sub-zone b1 to the sub-zone b3 as an electrical property of the raw materials A changes less, it is possible to perform efficient high-frequency heating, preventing generation of a spark. Moreover, if the output is gradually lowered from the sub-zone b3 to the sub-zone b5, it is possible to prevent overheating of molded articles, which improves moldability, reduces a spark, and can control a finish of the heating process more easily.

On one hand, if the heating equipment is small as the conventional art, high-frequency energy necessary for each of the metal molds 7 is smaller, and an output from the power source section 2 is also smaller. Therefore, even if the heating zone B is not divided, high frequency is not almost localized, and overheating or dielectric breakdown is not almost generated.

On the other hand, as the comparative example, if the heating zone B is not divided in a larger heating equipment, that is, if the conventional art disclosed in the above Japanese unexamined patent application publication is adopted to the large-scale heating equipment, an output from the power source section 2 increases. Thus, high frequency is more likely to be localized due to the extended heating zone B. Or, high frequency is more likely to be localized and concentrate on a certain part due to a change in a property of high frequency in the raw materials used as the raw materials 14. Accordingly, it is impossible to prevent overheating or dielectric breakdown.

EXAMPLE 4

In the manufacturing apparatus of the above specifications, the heating zone B is divided into three to make the above Division 6 (refer to Fig. 16). Using this manufacturing apparatus, the above raw materials D are heated and molded to make the trays 8c and to evaluate a rate of sparking, moldability of the raw materials 14 and properties of the molded articles. The results are shown in Table 3.

COMPARATIVE EXAMPLE 2

Using the manufacturing apparatus of the above specifications, having the above "No Division" structure that the heating zone B is not divided (refer to Fig. 25), the above raw materials D are heated and molded to make the trays 8c and to evaluate a rate of sparking, moldability of the raw materials 14 and properties of the molded articles. The results are shown in Table 3.

TABLE 3

| Example, comparative example | Example 4 | Comparative example 2 |
|---|---|---|
| Division of heating zone | Division 6 | No Division |
| Raw materials | Raw Materials D | Raw Materials D |
| Molded articles | Tray | Tray |
| Rate of sparking | ○ | × |
| Moldability of raw materials | ○ | × |
| Properties of molded articles | ○ | - |

As clarified from the results in Table 3, in the manufacturing method and apparatus in accordance with the present invention, even if the raw materials 14 and the molded articles attained are the raw materials D and the biodegradable trays 8c, respectively, it is possible to restrain or prevent localization of high frequency by dividing the heating zone B, thereby reducing a spark and effectively preventing overheating or dielectric breakdown. Also, in the manufacturing method in accordance with the present invention, excellent moldability and properties of the raw materials 14 can be attained.

EXAMPLES 5 TO 7

In the manufacturing apparatus of the above specifications, the heating zone B is divided into two to make Divisions 1, 2 or 3 (refer to Fig. 1, Fig. 12 or Fig. 13). Using this manufacturing apparatus, the above raw materials D are heated and molded to make the trays 8c and to evaluate a rate of sparking only. The results are shown in Table 4.

EXAMPLES 8 TO10

In the manufacturing apparatus of the above specifications, the heating zone B is divided into two to make the above Division 1, 2 or 3 (refer to Fig. 1, Fig. 12 or Fig. 13). Using this manufacturing apparatus, the above raw materials C are heated and molded to make the waffle cones 8b and to evaluate a rate of sparking only. The results are shown in Table 4.

TABLE 4

| Examples | Example 5 | Example 6 | Example 7 | Example 8 | Example 9 | Example 10 |
|---|---|---|---|---|---|---|
| Division of heating zone | Division 1 | Division 2 | Division 3 | Division 1 | Division 2 | Division 3 |

(continued)

| Examples | Example 5 | Example 6 | Example 7 | Example 8 | Example 9 | Example 10 |
|---|---|---|---|---|---|---|
| Raw materials | Raw Materials D | Raw Materials D | Raw Materials D | Raw Materials C | Raw Materials C | Raw Materials C |
| Molded articles | Tray | Tray | Tray | Waffle cone | Waffle cone | Waffle cone |
| Rate of sparking | ○ | ◎ | Δ | Δ | × | ○ |

As clarified from Table 4, even if the heating zone B is divided into two in the same way, it is possible to significantly reduce a rate of sparking by changing a way of division depending on the kinds of raw materials 14 and molded articles.

Especially, if the trays 8c are molded from the raw materials D, it is possible to restrain generation of a spark in the entire heating zone B by reducing an output in the sub-zone b1, shortening a length of the sub-zone b1, and reducing the number of tongues (metal molds 7) that can be heated in the sub-zone b1. On one hand, if the waffle cones 8b are molded from the raw materials C, it is possible to restrain generation of a spark in the entire heating zone B by reducing an output in the sub-zone b2, shortening a length of the sub-zone b2, and reducing the number of tongues (metal molds 7) that can be heated in the sub-zone b2.

EXAMPLES 11 AND 12

In the manufacturing apparatus of the above specifications, the heating zone B is divided to make the above Division 5 or 7 (refer to Fig. 15 or 17). Using this manufacturing apparatus, the raw materials B are heated and molded to make the above cone cups 8a and to evaluate a rate of sparking, moldability of the raw materials 14 and a property of the molded articles. The results are shown in Table 5.

TABLE 5

| Example | Example 11 | Example 12 |
|---|---|---|
| Division of heating zone | Division 5 | Division 7 |
| Raw materials | Raw Materials B | Raw Materials B |
| Molded articles | Cone cup | Cone cup |
| Rate of sparking | ○ | ◎ |
| Moldability of raw materials | ○ | ◎ |
| Properties of molded articles | ○ | ◎ |

As clarified from the results in Table 5, it is possible to mature (cure) the raw materials 14 (raw materials B) and to improve moldability of the raw materials 14 or properties of the finished articles, if the high-frequency application suspension zone b2-2 is provided in heating and molding process to moderately heat the raw materials 14 through external heating, etc., depending on the kinds of raw materials 14 and molded articles. Also, it is possible to effectively prevent localization of high frequency and to reduce a rate of sparking if external heating is performed in an area where an electrical property of the raw materials 14 (raw materials B) changes significantly.

EXAMPLES 13 TO 16

In the manufacturing apparatus of the above specifications, the heating zone B is divided to make the above Division 1 or 8. (Refer to Fig. 1 or Fig. 18.) Using this manufacturing apparatus, the raw materials B and the raw materials C are heated and molded to make the above cone cups 8a and waffle cones 8b, respectively, and to evaluate a rate of sparking, moldability of the raw materials 14 and properties of the molded articles. The results are shown in Table 6.

TABLE 6

| Examples | Example 13 | Example 14 | Example 15 | Example 16 |
|---|---|---|---|---|
| Division of heating zone | Division 1 | Division 1 | Division 8 | Division 8 |
| Raw Materials | Raw Materials B | Raw Materials C | Raw Materials B | Raw Materials C |
| Molded articles | Cone cup | Waffle cone | Cone cup | Waffle cone |
| Rate of sparking | × | Δ | Δ | ○ |
| Moldability of raw materials | Δ | Δ | ○ | ○ |
| Properties of molded articles | Δ | Δ | ○ | ○ |

As clarified from the results in Table 6, it is possible to effectively prevent localization of high frequency and to reduce a rate of sparking, by providing the high-frequency application suspension zone d in the heating and molding process depending on the kinds of raw materials 14 and molded articles. In addition, by moderately heating the raw materials 14 through external heating in the high-frequency application suspension zone d, it is possible to mature (cure) the raw materials 14 (raw materials B or C), which can improve the moldability of the raw materials and properties of the finished articles.

Especially, if a curved area corresponding to the R-area is set up as the high-frequency application zone d, it is possible not only to attain excellent molded articles, but also to reduce a rate of sparking and simplify the structure of the apparatus whether the high-frequency heating part or the gas heating section 9 is provided or not.

EXAMPLE 17

In the manufacturing apparatus of the above specifications, the heating zone B is divided to make the above Division 7 (refer to Fig. 17). In addition, external heating in the gas heating section 9 is adjusted so that the temperature of the metal molds may be 120˚C. Using this manufacturing apparatus, the raw materials A are heated and molded to make the above cone cups 8a and to evaluate the moldability of the raw materials 14, structure of the molded articles, emergent effects from additives and baked condition. The results are shown in Table 7.

EXAMPLES 18 AND 19 AND COMPARATIVE EXAMPLE 3

The raw materials A are heated and molded to make the cone cups 8a as the example 17, except that external heating in the gas heating section 9 is adjusted so that the temperature of the metal molds may be 160˚C, 200˚C, or 240˚C. The moldability of the raw materials 14, structure of the molded articles, emergent effects from additives and baked condition are evaluated. The results are shown in Table 7.

TABLE 7

| Examples and Comparative examples | | Example 17 | Example 18 | Example 19 | Comparative example 3 |
|---|---|---|---|---|---|
| Division of heating zone | | Division 7 | Division 7 | Division 7 | Division 7 |
| Raw Materials | | Raw Materials A | Raw Materials A | Raw Materials A | Raw Materials A |
| Molded articles | | Cone cup | Cone cup | Cone cup | Cone cup |
| Temperature of metal molds | | 120˚C | 160˚C | 200˚C | 240˚C |
| Moldability of raw materials | | Δ | ◎ | ◎ | × |
| Structure | Inner structure | Very dense | Dense | Slightly coarse | - |
| | Outer structure | Thin | Slightly thin | Thick | - |
| Emergent effects from additives | Colorings | ◎ | ○ | Δ | |
| | Flavorings | Δ | ○ | ◎ | - |
| Baked condition | Color | ◎ | ○ | Δ | - |
| | Roast smell | Δ | ○ | ◎ | - |

As clarified from the results in Table 7, from a viewpoint of moldability, if the temperature of the metal molds is 120°C or 240°C, external heating is not preferable or appropriate. If the temperature of the metal molds is 160°C or 200°C, external heating is appropriate.

More specifically, since the temperature of the metal molds is 120°C in the example 17, the ratio of external heating to high-frequency heating is too low. Accordingly, the raw materials A are not fully stabilized in the stabilizing zone and high-frequency application suspension zone d with fair but slightly poorer moldability. On one hand, in the comparative example 3, since the temperature of the metal molds is 240 °C, the ratio of external heating is too high. Therefore, the molded articles get too scorched to be molded and to be evaluated for various properties given by external heating.

On the other hand, in the examples 18 and 19, external heating and high-frequency heating are well balanced since the temperature of the metal molds is appropriate. Therefore, it is possible to fully stabilize the raw materials A in the stabilizing zone and the high-frequency application suspension zone d and to attain very excellent moldability.

Also, as clarified from the results in Table 7, from a viewpoint of various properties given by external heating, it is possible to change a structure, emergent effects from additives, and baked condition of the molded articles accordingly, by changing a ratio of external heating to high-frequency heating accordingly as the examples 17 to 19. It is thus possible to optionally change properties of the molded articles by changing a condition of external heating depending on a usage of the molded articles.

EXAMPLES 20 AND 21

In the manufacturing apparatus of the above specifications, the heating zone B is divided to make the above Division 4 or 9 (refer to Fig. 14 or Fig. 26). Using this manufacturing apparatus, the raw materials E are heated and molded to make the cone cups 8a and to evaluate a rate of sparking, moldability of the raw materials 14 and properties of the molded articles. The results are shown in Table 8.

TABLE 8

| Examples | Example 20 | Example 21 |
|---|---|---|
| Division of heating zone | Division 4 | Division 9 |
| Raw materials | Raw Materials E | Raw Materials E |
| Molded articles | Cone cup | Cone cup |
| Rate of sparking | ○ | ◎ |
| Moldability of raw materials | Δ | ◎ |
| Properties of molded articles | Δ | ◎ |

EXAMPLES 22 AND 23

In the manufacturing apparatus of the above specifications, the heating zone B is divided to make the above Division 4 or 10 (refer to Fig. 14 or Fig. 27). Using this manufacturing apparatus, the above raw materials F are heated and molded to make the cone cups 8a and to evaluate a rate of sparking only. The results are shown in Table 9.

TABLE 9

| Examples | Example 22 | Example 23 |
|---|---|---|
| Division of heating zone | Division 4 | Division 10 |
| Raw materials | Raw Materials F | Raw Materials F |
| Molded articles | Cone cup | Cone cup |
| Rate of sparking | Δ | ◎ |

As clarified from the results in Table 8 and Table 9, it is possible to perform more proper heating for the raw materials 14 and to improve quality of the molded articles, if the external single heating zone is provided at an initial stage or at a last stage of heating and molding, depending on the kinds of raw materials 14 and molded articles. Also, it is possible to reduce a rate of sparking, thereby further improving productivity of the molded articles.

EXAMPLES 24 TO 26

In the manufacturing apparatus of the above specifications, the heating zone B is divided to make the above Division 4, 11 or 12 (refer to Fig. 14, Fig. 29 (a) and (b), or Fig. 30 (a) and (b)). Using this manufacturing apparatus, the raw materials E are heated and molded to make the cone cups 8a and to evaluate a rate of sparking, moldability of the raw materials 14 and properties of the molded articles. The results are shown in Table 10.

TABLE 10

| Examples | Example 24 | Example 25 | Example 26 |
|---|---|---|---|
| Division of heating zone | Division 4 | Division 11 | Division 12 |
| Raw materials | Raw Materials E | Raw Materials E | Raw Materials E |
| Molded articles | Cone cup | Cone cup | Cone cup |
| Rate of sparking | ○ | ◎ | ◎ |
| Moldability of raw materials | Δ | ◎ | ◎ |
| Properties of molded articles | Δ | ◎ | ◎ |

As clarified from Table 10, it is possible to perform proper heating for the raw materials 14 and to improve quality of the molded articles by changing a shape of the rail-shaped power feeding section 3 where the plate-type power receiving sections 4 are inserted and gradually increasing a power feeding level.

EXAMPLES 27 TO 29

In the manufacturing apparatus of the above specifications, the heating zone B is divided to make the above Division 4, 13 or 14. (Refer to Fig. 14, Fig. 32 (a) and (b) or Fig. 33 (a) and (b).) Using this manufacturing apparatus, the raw materials F are heated and molded to make the cone cups 8a and to evaluate a rate of sparking only. The results are shown in Table 11.

TABLE 11

| Examples | Example 24 | Example 25 | Example 26 |
|---|---|---|---|
| Division of heating zone | Division 4 | Division 13 | Division 14 |
| Raw materials | Raw Materials F | Raw Materials F | Raw Materials F |
| Molded articles | Cone cup | Cone cup | Cone cup |
| Rate of sparking | Δ | ◎ | ◎ |

As clarified from the results in Table 11, it is possible to perform more proper heating for the raw materials 14 and to improve quality of the molded articles by changing a shape of the rail-shaped power feeding section 3 where the plate-type power receiving sections 4 are inserted and gradually increasing a power feeding level in the sub-zone corresponding to a last heating stage. This can prevent overheating at a last heating stage and can further reduce a rate of sparking, thereby still more improving productivity of the molded articles.
As mentioned above, in the method for manufacturing heated and molded articles in accordance with the present invention, wherein raw materials are fed into electrically conductive molds which are continuously transferred along a moving passage and high-frequency alternating current is continuously applied to the moving molds with no contact from a heating area provided along the moving passage in order to mold the raw materials through dielectric heating, the heating area is divided into sub-areas, each of which has power source means and power feeding means.
In the above method, when high-frequency alternating current (high frequency) is continuously applied to the continuously moving molds with no contact, the heating area wherein high frequency is applied, is divided into sub-areas, each of which has the power source means and the power feeding means, thereby restraining or preventing concentration of high-frequency energy in the heating area. In result, it is possible to effectively prevent overheating or dielectric breakdown, and to produce the heated and molded articles very efficiently and steadily.
In the above method for manufacturing heated and molded articles in accordance with the present invention, the high-frequency alternating current is applied to the molds in the sub-areas by the rail-shaped power feeding means continuously disposed along the moving passage, and the molds have the power-receiving means to receive the high-frequency alternating current from the rail-shaped power feeding means with no contact.

In the above method, the rail-shaped power feeding means is provided in the heating area and the power receiving means is provided in correspondence with the power feeding means. After the molds enter into the heating area by the moving means, the molds equipped with the power receiving means are transferred along the rail-shaped power feeding means with movement of the moving means. Accordingly, it is possible to continue a heating and drying process smoothly and steadily until the molds pass through the heating area, that is, until the power receiving means takes off the power feeding means.

In the above method for manufacturing heated and molded articles in accordance with the present invention, with the power receiving means shaped like a plate, the rail-shaped power feeding means has a surface opposite to the power receiving means, and high-frequency alternating current is applied with no contact by placing the plate-type power receiving means opposite to the surface.

In the above method, the power receiving means moves along the rail-shaped power feeding means with the surface of the power feeding means opposite to the plate-type power receiving means with no contact, forming a condenser by the power receiving means, the surface opposite thereto, and a space in between. In result, it is possible to supply power to continuously moving molds with no contact and to continue a heating and drying process smoothly and steadily.

In the above method for manufacturing heated and molded articles in accordance with the present invention, the rail-shaped power feeding means or power receiving means is constructed so that the opposite area may be varied along the moving passage of the molds to change a level of high-frequency alternating current applied to the molds through the power receiving means.

In the above method, it is possible to adjust a level of heating the molds by changing a power feeding level. In result, it is possible to prevent a scorch on molded articles or a spark by restraining overheating, and to improve moldability of the molded articles and attain desirable properties of the finished articles. Especially, by performing step-by-step heating at an initial stage or a last stage of heating and molding, it is possible to properly heat and mold the raw materials.

In the above method for manufacturing heated and molded articles in accordance with the present invention, the rail-shaped power feeding means is constructed so that an area of the opposite surface is changed along the moving passage.

In the above method, by changing an area of the opposite surface equipped with the power feeding means with the movement of the molds, the opposite area between the surface and the power receiving means changes. Accordingly, a capacity of a condenser formed between the power receiving means, the surface opposite thereto and a space in between changes. In result, it is possible to change heating applied to the heated and molded articles by changing a power feeding level, thereby improving moldability of the heated and molded articles and attaining desirable properties of the finished products.

In the above method for manufacturing heated and molded articles in accordance with the present invention, the rail-shaped power feeding means is constructed so that the opposite distance is changed along the moving passage of the molds to change a level of high-frequency alternating current applied to the molds through the power receiving means.

Also in the above method, it is possible to adjust a heating level applied to the molds by changing a power feeding level. In result, it is possible to prevent a scorch on molded articles and a spark by restraining overheating, and to improve moldability of the molded articles and attain desirable properties of the finished articles. Especially, since step-by-step heating can be performed at an initial heating stage or a last heating stage, it is possible to properly heat and mold the raw materials.

In the above method for manufacturing heated and molded articles in accordance with the present invention, a length of the sub-area is determined so that a rate of variation for the continuously moving molds to be heated in the entire sub-area may be less than 0.5.

In the above method, it is possible to reduce a variation in the number of molds to be dielectrically heated by high-frequency alternating current in one of the sub-areas, so that matching of high frequency can be stabilized and a variation in anodic amperage can be lessened. In result, it is possible not only to improve energy efficiency but also to prevent a spark.

In the above method for manufacturing heated and molded articles in accordance with the present invention, in case that the sub-area corresponds to an area at an initial stage or a last stage of heating the raw materials, a length of the sub-area is determined so that a rate of variation of the continuously moving molds may be less than 0.1.

In the above method, especially, it is possible to decrease a variation in the number of molds to be dielectrically heated at an initial stage or a last stage of heating and molding when matching of high frequency is likely to be unsteady. Therefore, it is possible to further stabilize matching of high frequency, and in result, it is possible to further improve energy efficiency or to steadily prevent generation of a spark.

In the above method for manufacturing heated and molded articles in accordance with the present invention, the mold consists of a plurality of mold halves, which can be divided into the feeder electrode block where power is supplied from the power feeding section, and the grounding electrode block grounded to the earth. These blocks are insulated from each other.

In the above method, the mold consists of a combination of the feeder electrode and the grounding electrode insulated from each other. It is thus possible to dielectrically heat the raw materials by applying high frequency from the feeder electrode, with the raw materials placed between the feeder electrode and the grounding electrode. In addition, the mold consists of a plurality of mold halves and can be always divided into the feeder electrode block and the grounding electrode block. Accordingly, by applying high frequency to the raw materials as the objects to be heated, it is possible to steadily perform dielectric heating on the raw materials.

In the above method for manufacturing heated and molded articles in accordance with the present invention, the mold is a united mold uniting a plurality of molds.

In the above method, since many molds are integrated into the united mold, it is possible to move many molds to the heating area once. In result, it is possible to improve production efficiency of molded articles.

In the above method for manufacturing heated and molded articles in accordance with the present invention, both dielectric heating by applying high-frequency alternating current and external heating by the external heating means are used in part of the heating area.

In the above method, since both dielectric heating and external heating are used in part of the heating area, rapid heating deriving from dielectric heating and moderate heating through thermal conduction deriving from the external heating are simultaneously performed on the raw materials. In result, it is possible to more steadily and fully heat the raw materials. Especially, in case that the present invention is used for baking the baked and molded confectioneries mentioned below, it is preferable to use both dielectric heating and external heating which can give a proper baked color and a roast smell to the baked and molded confectioneries.

In the above method for manufacturing heated and molded articles in accordance with the present invention, the heating area includes the high-frequency application suspension zone where no high-frequency alternating current is applied.

In the above method, since the heating area includes the high-frequency application suspension zone, it is not necessary to provide the power feeding means and other means to apply high frequency in the high-frequency application suspension zone. It is thus possible to design a heating equipment that does not apply high frequency to the part where high-frequency alternating current is likely to be localized, thereby restraining or preventing concentration of high-frequency energy still more steadily. Also, it is possible to further simplify a structure of the heating equipment by setting up the high-frequency application suspension zone at a part where it is relatively difficult to dispose the power feeding means and other means.

Moreover, in case that both dielectric heating and external heating are used, moderate heating through external heating is only performed in the high-frequency application suspension zone. Therefore, it is possible to improve moldability and attain desirable properties of the finished articles by setting up the high-frequency application suspension zone depending on properties of the raw materials.

Also, by setting up the high-frequency application suspension zone at a part where an electrical property of the raw materials changes most significantly, it is possible to prevent concentration of high-frequency energy. In addition, it is possible to perform moderate heating through external heating only at the part before the sub-area applying the largest output of high frequency in the heating area, thereby properly heating and molding the raw materials.

In the above method for manufacturing heated and molded articles in accordance with the present invention, the high-frequency application suspension zone included in the heating area is provided in an area corresponding to either an initial stage or a last stage of heating the raw materials.

In the above method, since the high-frequency application suspension zone is provided at either an initial stage or a last stage of heating and molding, it is possible to perform proper heating for the raw materials. In result, it is possible to improve quality of the heated and molded articles attained and to improve productivity.

In the above method for manufacturing heated and molded articles in accordance with the present invention, conditions of high-frequency alternating current applied to the molds in the heating area is differently specified by the sub-area.

In the above method, since high frequency is applied at a different condition by the sub-area, it is possible to perform heating at a different condition. Accordingly, it is possible not only to make a condition to restrain or prevent concentration of high-frequency energy for the entire heating area, but also to heat the molds at a better condition, thereby more properly heating and molding the raw materials.

In the above method for manufacturing heated and molded articles in accordance with the present invention, the condition for applying high-frequency alternating current includes at least one of the conditions; an output of high-frequency alternating current in the entire sub-area; an output of high-frequency alternating current applied to each of the molds; and a length of the sub-area.

In the above method, if at least one of the above conditions is differently specified by the sub-area, it is possible to change a heating condition by the sub-area. In result, it is possible not only to restrain or prevent concentration of high-frequency energy but also to more properly heat and mold the raw materials.

In the above method for manufacturing heated and molded articles in accordance with the present invention, the condition for applying high-frequency alternating current is specified depending on a property of the raw materials that changes by applying high-frequency alternating current.

In the above method, it is possible to apply high-frequency alternating current at a different condition by the sub-area depending on a property of the raw materials or the molded articles attained by heating. Therefore, it is possible not only to restrain or prevent concentration of high-frequency energy but also to add a heat capacity to the raw materials more properly, thereby heating and molding the raw materials still more properly.

In the above method for manufacturing heated and molded articles in accordance with the present invention, the raw materials include at least starch and water, and a starchy and watery mixture having fluidity or plasticity is used. Also, baked and molded articles are manufactured as heated and molded articles.

In the above method, when the above watery mixture containing starch and water is heated and molded to make baked and molded articles, the method for manufacturing heated and molded articles in accordance with the present invention is used, which can makes high quality baked and molded articles with higher production efficiency.

In the above method for manufacturing heated, and molded articles in accordance with the present invention, flour is used as starch in the starchy and watery mixture, and the baked and molded articles are molded and baked confectioneries mainly containing flour.

In the above method, when the starchy and watery mixture using flour as starch is baked and molded to make edible containers or molded and baked confectioneries such as cookies and biscuits, the method for manufacturing heated and molded articles in accordance with the present invention is used. Thus, it is possible to make high quality molded and baked confectioneries with higher production efficiency.

In the above method for manufacturing heated and molded articles in accordance with the present invention, the conveyer rotatably stretched by the supporting axes is used as the above moving means.

In the above method, since the molds can be efficiently transferred to the heating area, it is possible to improve production efficiency of molded articles. Also, since the molds can be continuously and rotatably transferred as an endless track, it is possible to reduce an installation space of the manufacturing equipment.

EMBODIMENT 7

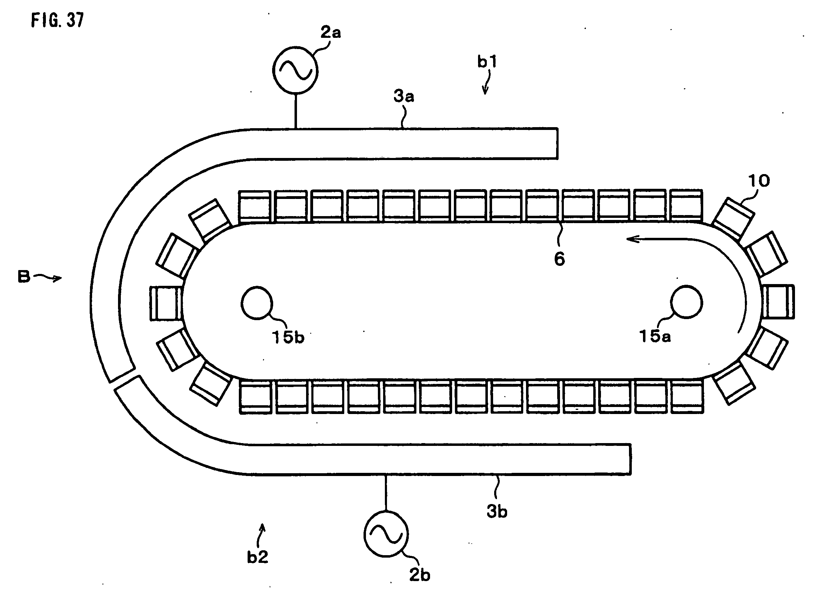

Still another embodiment of the present invention is described below referring to Fig. 37 to Fig. 40. The present invention is not limited to this embodiment. For convenience of explanation, the same numbers are shown for the members having the same function as the members used in the above embodiments 1 to 6 with the explanation left out.

In the above embodiments 1 to 6, a starchy and watery mixture is used as an object to be heated, and metal molds (united metal molds) are used as heating units. Of course, the present invention is not limited to those above.

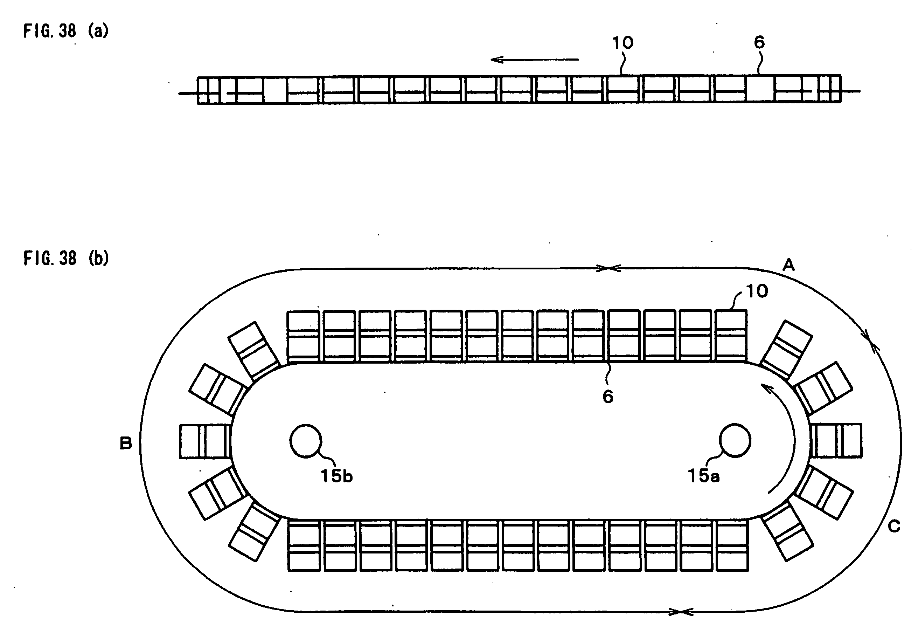

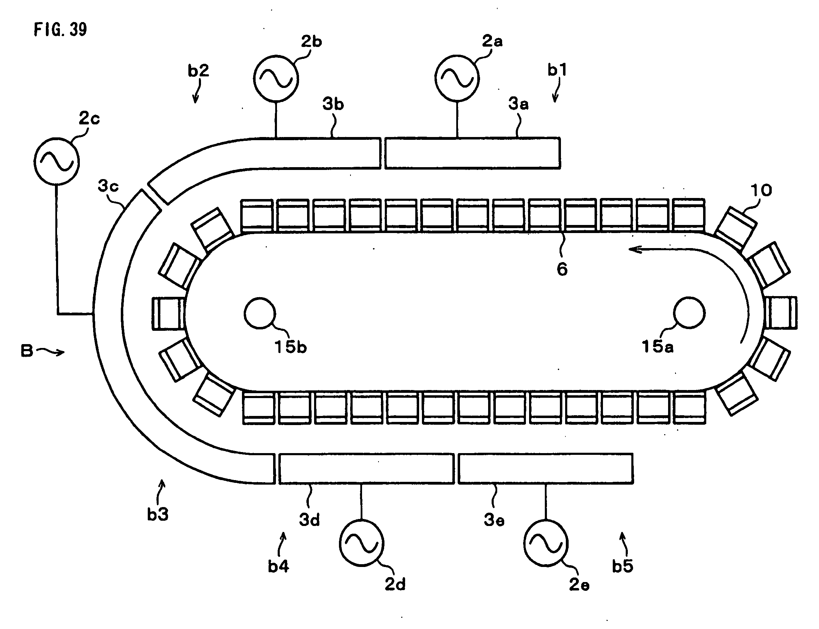

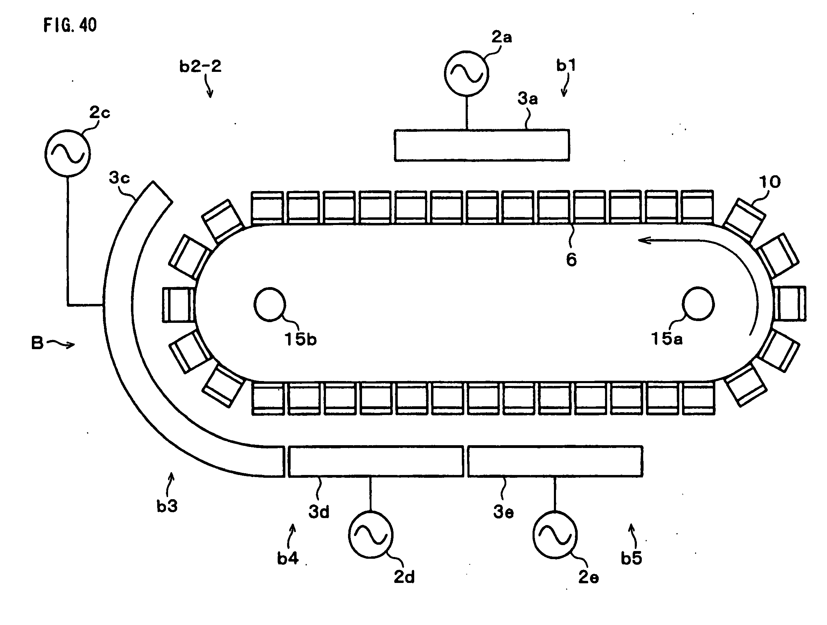

Namely, as shown in Fig. 37 or 38, instead of the united metal molds 5, the other type of heating units 10 may be used for the other purposes than for heating and molding baked and molded articles, in the examples shown in Fig. 1, Fig. 8 and Fig. 9 of the embodiment 1. Similarly, as shown in Fig. 39 and Fig. 40, the other type of heating units 10 may be used for the other purposes than for heating and molding baked articles, in the examples shown in Fig. 14 and Fig. 15 of the embodiment 2, and also in the examples shown in Fig. 17 of the embodiment 3. Of course, this is the same also for other examples in the embodiments 1 to 3 and in the embodiments 4 to 6.

For example, as described in the above embodiment 1, there are various usages including cooking, heat sterilization, defrosting, heat maturation and cure, drying, heat bonding and heat pressing, melting and bonding, and heat pressing and molding. The heating units 10 in the figure are schematically shown in correspondence with Fig. 2. It goes without saying that the shape or structure is determined based on the objects to be heated and it is not particular limited.

As mentioned above, in the continuous high-frequency heating apparatus in accordance with the present invention, having heating units wherein an object to be heated is placed between a pair of electrodes, moving means which continuously transfers the heating units along a moving passage, and power feeding means provided along the moving passage, and dielectrically heating the object to be heated by continuously applying high-frequency alternating current to the moving heating units from the power feeding means, the power feeding means are included, each of which has power source means, and a heating area is constituted by continuously disposing the power feeding means.

In the above structure, when high-frequency alternating current (high frequency) is continuously applied to the continuously moving heating units, the heating area where the high frequency is applied, is divided into sub-areas, each of which has the power source means and the power feeding means, thereby restraining or preventing concentration of high-frequency energy in the heating area. In result, it is possible to prevent overheating or dielectric breakdown effectively and to perform very high quality heat treatment.

In addition to the above structure, the continuous high-frequency heating apparatus in accordance with the present invention is constructed so that the above power feeding means apply high-frequency alternating current to the heating units with no contact.

In the above structure, since high frequency is applied with no contact, it is not necessary to directly contact on the electrodes between the heating units and the power feeding means forming the heating section. It is thus possible to prevent generation of a spark at the power feeding and receiving section in the heating area. In the present invention, the power supply with no contact means that the power feeding means and the electrodes do not contact directly, as mentioned below.

In addition to the above structure, the continuous high-frequency heating apparatus in accordance with the present invention is constructed so that the above power feeding means has a rail shape continuously disposed along the heating area in the moving passage and also the heating units have the power receiving section receiving alternating current with no contact from the rail-shaped power feeding means.

In the above structure, since the rail-shaped power feeding means is provided in the heating area and the power receiving means is provided in correspondence with the rail-shaped power feeding means, after the heating units enter into the heating area by the moving means, the heating units equipped with the power receiving means are transferred along the rail-shaped power feeding means with the movement of the moving means. Therefore, it is possible to continue a heating and drying process smoothly and steadily until the heating units pass through the heating area, that is, the power receiving means takes off the power feeding means.

In addition to the above structure, the continuous high-frequency heating apparatus in accordance with the present invention, is constructed so that the above power receiving section is formed like a plate, the rail-shaped power feeding means has a surface opposite to the power receiving means, and high-frequency alternating current is applied with no contact by placing the plate-type power receiving means opposite to the above surface.

In the above structure, with the surface on the power feeding means opposite to the plate-type power receiving means with no contact, the power receiving means moves along the rail-shaped power feeding means, forming a condenser by the power receiving means, the surface opposite thereto, and a space in between. In result, it is possible to supply power with no contact to the continuously moving heating units and to continue a heating and drying process smoothly and steadily.

In addition to the above structure, the continuous high-frequency heating apparatus in accordance with the present invention is constructed so that the rail-shaped power feeding means or power receiving means change the opposite area along the moving passage to change a level of high-frequency alternating current applied to the heating units through the power receiving means.

In the above structure, it is possible to adjust a level of heating the heating units by changing a power feeding level. In result, it is possible to prevent a scorch on the heating units and a spark by restraining overheating, and to improve quality of the objects to be heated and attain desirable properties of the finished articles. Especially, since step-by-step heating can be performed at an initial heating stage or a last heating stage, more proper heating is possible.

In addition to the above structure, in the continuous high-frequency heating apparatus in accordance with the present invention, the rail-shaped power feeding means is so constructed as to change an area of the opposite surface along the moving passage.

In the above structure, since the area of the opposite surface on the power feeding means is changed with the movement of the heating units, the opposite area between the above surface and the power receiving means changes. Then, a capacity of a condenser formed by the power receiving means, the surface opposite thereto, and a space in between changes. In result, it is possible to change a heating level by changing a power feeding level and to improve quality of objects to be heated and attain desirable properties of finished articles.

Further to the above structure, in the continuous high-frequency heating apparatus in accordance with the present invention, the rail-shaped power feeding means is constructed so that the opposite distance is changed along the moving passage of the heating units to change a level of the high-frequency alternating current applied to the heating units through the power receiving means.

Also in the above structure, it is possible to adjust a level of heating the heating units by changing a power feeding level. In result, it is possible to prevent a scorch on the heating units and a spark by restraining overheating, and to improve quality of objects to be heated and attain desirable properties of finished articles. Especially, since it is possible to perform step-by-step heating at an initial heating stage or a last heating stage, more proper heating can be performed.

Further to the above structure, in the continuous high-frequency heating apparatus in accordance with the present invention, a length of one of the power feeding means is determined so that a rate of variation of the continuously moving heating units to be heated by the entire power feeding means may be less than 0.5.

In the above structure, it is possible to reduce a variation in the number of heating units to be dielectrically heated with one of the power feeding sections by applying high-frequency alternating current. It is thus possible to stabilize matching of high frequency and to lessen an increase or a decrease in anodic amperage. In result, it is possible not only to improve energy efficiency but also to prevent generation of a spark.

Further to the above structure, in the continuous high-frequency heating apparatus in accordance with the present invention, when the power feeding means is provided in an area corresponding to either an initial heating stage or a last heating stage in the heating area, a length of the power feeding means is determined so that a rate of variation in the continuously moving heating units is less than 0.1.

In the above structure, it is possible to reduce a variation in the number of heating units to be dielectrically heated also at an initial stage or a last stage of heating and molding when matching of high frequency is likely to be unsteady for some objects to be heated. In result, it is possible to further improve energy efficiency and prevent generation of a spark more steadily.

Further to the above structure, in the continuous high-frequency heating apparatus in accordance with the present invention, a pair of electrodes equipped with the power receiving means, consist of a feeder electrode fed from the power feeding means and a grounding electrode grounded to the earth. The feeder electrode and the grounding electrode are insulated from each other.

In the above structure, a pair of electrodes constituting the heating unit consists of the feeder electrode and the grounding electrode insulated from each other. It is thus possible to dielectrically heat objects to be heated by applying high frequency from the feeder electrode with the objects placed between the feeder electrode and the grounding electrode.

Further to the above structure, in the continuous high-frequency heating apparatus in accordance with the present invention, the heating area includes the high-frequency application suspension zone where no high-frequency alternating current is applied.

In the above structure, the high-frequency application suspension zone is included in the heating area, where the power feeding means or other means to apply high frequency are not necessary. Therefore, it is possible to design a heating equipment that does not apply high frequency to the area where high-frequency alternating current is likely to be localized, thereby more steadily restraining or preventing concentration of high-frequency energy. Also, it is possible to simplify a structure of a heating apparatus by providing the high-frequency application suspension zone in an area where it is relatively difficult to dispose the power feeding means.

Further to the above structure, in the continuous high-frequency heating apparatus in accordance with the present invention, the high-frequency application suspension zone included in the heating area is provided in an area corresponding to either an initial heating stage or a last heating stage in the heating area.

In the above structure, since the high-frequency application suspension zone is provided at either an initial heating stage or a last heating stage, it is possible to perform proper heating depending on objects to be heated, thereby improving quality of the objects and productivity of heat treatment.

Further to the above structure, in the continuous high-frequency heating apparatus in accordance with the present invention, a conveyer rotatably stretched with a plurality of axes is used.

Enclosure 3

In the above structure, it is possible to improve production efficiency of molded articles since the molds can be efficiently transferred to the heating area. Also, due to a continuous and rotative movement of the molds as an endless track, it is possible to reduce an installation space of the heating apparatus.

INDUSTRIAL APPLICABILITY

Thus, the present invention can effectively restrain or prevent concentration of high frequency when continuously moving objects to be heated are heated through high-frequency heating in a large-scale apparatus to perform efficient and safety heating. Accordingly, as mentioned above, the present invention can be used in the field of continuously manufacturing baked and molded articles, more specifically, in various food industries manufacturing edible containers and molded and baked confectioneries, as well as cooking, heat sterilization, defrosting of frozen foods and materials, heat maturation and cure (for defrosting thick foods and materials); in the wood processing industry including drying wood, heat bonding and heat pressing; in various material industries including resinification, such as dissolution, melting and bonding, and molding of resin and production of biodegradable molded articles.

**Claims**

1. A method for manufacturing heated and molded articles, comprising the steps of:

      - feeding raw materials (14) in electrically conductive molds (5, 7, 10);
      - continuously transferring the molds (5, 7, 10) along a moving passage; and

- dielectrically heating and molding the raw materials (14) by continuously and contactless applying high-frequency alternating current to the moving molds (5, 7, 10), in a heating area (B) provided along the moving passage,
- the heating area being divided into sub-areas, each of which has at least power source means and power feeding means (3).

2. The method for manufacturing heated and molded articles according to claim 1, **characterized in that** the high-frequency alternating current is applied to the molds (5, 7, 10) by rail-shaped power feeding means (3) continuously disposed along the moving passage in the sub-areas, and each of the molds is equipped with power receiving means (4) and contactless receives the high-frequency alternating current from the rail-shaped power feeding means (3).

3. The method for manufacturing heated and molded articles, according to claim 2, **characterized in that** the power receiving means (4) is shaped like a plate, the rail-shaped power feeding means (3) has a surface opposite to the power receiving means (4), and the high-frequency alternating current is contactless applied by placing the plate-shaped power receiving means opposite to said surface.

4. The method for manufacturing heated and molded articles according to claim 3, comprising the steps of defining an area where the rail-shaped power feeding means (3) and the power receiving means (4) oppose each other, and changing said area along the moving passage of the molds (5, 7, 10), to change a level of said high-frequency alternating current applied to the molds (5, 7, 10) through the power receiving means (4).

5. The method for manufacturing heated and molded articles according to claim 4, comprising the step of defining said area on the rail-shaped power feeding means (3).

6. The method for manufacturing heated and molded articles according to claim 3, comprising the step of changing a distance between the rail-shaped power feeding means (3) and the power receiving means (4), along the moving passage of the molds (5, 7, 10), to change a level of the high-frequency alternating current applied to the molds (5, 7, 10) through the power receiving means.

7. The method for manufacturing heated and molded articles according to claim 1, comprising the steps of determining a length of each of the sub-areas and limiting to less than 0.5 a rate of variation of the continuously moving molds (5, 7, 10) to be heated in the entire sub-area, by adapting said length.

8. The method for manufacturing heated and molded articles according to claim 7, wherein the step of limiting comprises limiting said rate of variation to less than 0.1, in case that one of the sub-areas corresponds to either an initial stage or a last stage of heating the raw materials (14).

9. The method for manufacturing heated and molded articles according to claim 1, comprising the further steps of providing, for each mold (5, 7, 10), a plurality of mold halves including a feeder electrode block receiving power supply from the power feeding means and a grounding electrode block grounded to the earth, and insulating each of said blocks from each other.

10. The method for manufacturing heated and molded articles according to claim 9, comprising the step of providing each of the molds (5, 7, 10), as a united mold integrating a plurality of molds (5a,5b,5c,5d;7a,7b).

11. The method for manufacturing heated and molded articles according to claim 1, comprising both applying a dielectric heating, by applying the high-frequency alternating current, and a external heating, by external heating means, at least in part of the heating area.

12. The method for manufacturing heated and molded articles according to claim 1, further comprising the step of including an application suspension zone (b2-2) in the heating area, no high-frequency alternating current being applied in said zone.

13. The method for manufacturing heated and molded articles according to claim 12, comprising defining the application suspension zone included in the heating area in an area corresponding to at least either an initial stage or a last stage of heating the raw materials (14).

**14.** The method for manufacturing heated and molded articles according to claim 1, comprising differently specifying conditions of applying the high-frequency alternating current to the molds in each of the sub-areas.

**15.** The method for manufacturing heated and molded articles according to claim 14, wherein the step of differently specifying the conditions includes the step of applying at least one of the following conditions: an output of high-frequency alternating current in each of the sub-areas, an output of high-frequency alternating current applied to each of the molds (5, 7, 10), and a length of each of the sub-areas.

**16.** The method for manufacturing heated and molded articles according to claim 14, wherein the step of differently specifying the conditions includes the step of specifying said conditions depending on properties of the raw materials which changes by applying said high-frequency alternating current.

**17.** The method for manufacturing heated and molded articles according to claim 1, wherein the step of feeding the raw materials (14) comprises feeding said molds with a starchy and watery mixture including at least starch and water and having fluidity or plasticity, and baked and molded articles are made as heated and molded articles.

**18.** The method for manufacturing heated and molded articles according to claim 17, comprising using flour as starch in the starchy and watery mixture, and the baked and molded articles are molded and baked confectioneries mainly containing flour.

**19.** The method for manufacturing heated and molded articles according to claim 1, wherein the step of continuously transferring the molds along the moving passage comprises:

- providing molds moving means (5,7) including a conveyer (6), and
- rotatably stretching said conveyer (6) by axes.

**20.** The method for manufacturing heated and molded articles according to claim 1, wherein the step of dielectrically heating and molding the raw materials (14) comprises contactless applying said high-frequency alternating current to the electrically conductive molds from the power feeding means.

**21.** A continuous high-frequency heating apparatus comprising:

- a plurality of electrically conductive molds (5, 7, 10) where the raw materials (14) to be heated are disposed between a pair of electrodes (12, 13),
- mold moving means (9) adapted for continuously transferring the molds (5, 7, 10) along a moving passage, and
- a plurality of power feeding means (3) provided along the moving passage, each of said power feeding means being adapted for continuously and contactless applying high frequency alternating current to the moving molds (5, 7, 10) to dielectrically heat said raw materials (14) said apparatus being **characterized in that**:
- the power feeding (3) means are continuously disposed along the moving passage,
- a heating area (B) is defined by said continuously disposed power feeding means (3), and
- each of said power feeding means has power source means (2).

**22.** The continuous high-frequency heating apparatus according to claim 21, **characterized in that** the power feeding means (3) and the molds (5, 7, 10) are contactless from each other.

**23.** The continuous high-frequency heating apparatus according to claim 22, **characterized in that**:

- the power feeding means (3) is shaped like a rail continuously disposed along the heating area of the moving passage, for providing the molds (5, 7, 10) with alternating current,
- the molds (5, 7, 10) are equipped with power receiving means, and
- said power receiving means (4) and rail-shaped power feeding means are disposed contactlees from each other,

so that said high-frequency alternating current is contactless received by the molds (5, 7, 10) from said rail-shaped power feeding means.

**24.** The continuous high-frequency heating apparatus according to claim 23, **characterized in that**:

- the power receiving means is shaped like a plate,
- the rail-shaped power feeding (3) means has a surface opposite to the power receiving means (4), and
- the plate-shaped power receiving means is placed opposite to the surface, so that the high-frequency alternating current is contactless applied to the heating units.

25. The continuous high-frequency heating apparatus according to claim 24, wherein:

- the rail-shaped power feeding means and the plate-shape power receiving means have respectively opposite surfaces,
- the rail-shaped power feeding means or the plate-shape power receiving means has a structure defining an area which is changed between said opposite surfaces along the moving passage of the molds (5, 7, 10) to change a level of the high-frequency alternating current applied to the molds (5, 7, 10) through the power receiving means.

26. The continuous high-frequency heating apparatus according to claim 25, wherein the rail-shaped power feeding means (3) is provided with said area between the opposite surfaces along said moving passage.

27. The continuous high-frequency heating apparatus according to claim 24, wherein, on the rail-shaped power feeding means (3), is a structure where a distance between the power receiving means (4) and the power feeding means (3) is changed along the moving passage of the molds (5, 7, 10) to change a level of the high-frequency alternating current applied to the molds (5, 7, 10) through the power receiving means (4)

28. The continuous high-frequency heating apparatus according to claim 21, wherein each of the sub-areas has such a length that a rate of variation of the continuously moving molds (5, 7, 10) heated by the entire power feeding means is less than 0.5.

29. The continuous high-frequency heating apparatus according to claim 28, wherein:

- the heating area comprises successive heating stage zones including an initial heating stage zone and a last heating stage zone,
- the power feeding means (3) are disposed in the zone of the heating area corresponding to at least either said initial heating stage zone or said last heating stage zone, and
- the length of the power feeding means is determined for limiting the rate of variation of the continuously moving molds (5, 7, 10) to less than 0.1.

30. The continuous high-frequency heating apparatus according to claim 23, wherein a pair of electrodes (12,13) have power receiving means consisting of a power feeder electrode receiving power supply from the power feeding means and a grounding electrode grounded to the earth, said power feeder and grounding electrodes being insulated from each other.

31. The continuous high-frequency heating apparatus according to claim 21, wherein the heating area includes an application suspension zone free of high-frequency alternating current.

32. The continuous high-frequency heating apparatus according to claim 31, wherein:

- the heating area comprises successive heating stage zones including an initial heating stage zone and a last heating stage zone, and,
- the application suspension zone included in the heating area is provided in an area corresponding to at least either said initial heating stage zone or said last heating stage zone.

33. The continuous high-frequency heating apparatus according to claim 21, wherein the molds (5, 7, 10) moving means comprise a conveyer (6) rotatably stretched by axes.

34. The continuous high-frequency heating apparatus according to claim 33, wherein the objects to be heated include raw materials (14) fed in electrically conductive molds (5, 7, 10), each of which comprises a plurality of mold halves (5a,5b,5c,5d;7a,7b) including a feeder electrode block (12,13) receiving power supply (4) from the power feeding means (3) and a grounding electrode block grounded to the earth, each of said blocks being insulated from each other.

**35.** The continuous high-frequency heating apparatus according to claim 34, wherein each of the molds (5, 7, 10) is a united mold integrating a plurality of molds.

**Patentansprüche**

**1.** Verfahren zur Herstellung von erwärmten und geformten Gegenständen, mit den Schritten:

Ausgangsmaterialien (14) werden in elektrisch leitende Formen (5, 7, 10) eingebracht;
die Formen (5, 7, 10) werden entlang einer Bewegungsbahn fortlaufend transportiert; und
die Ausgangsmaterialien (14) werden durch fortlaufendes und berührungsfreies Anlegen eines hochfrequenten Wechselstroms an die sich bewegenden Formen (5, 7, 10) in einem Erwärmungsbereich (B), der entlang der Bewegungsbahn vorgesehen ist, dielektrisch erwärmt und geformt,
wobei der Erwärmungsbereich in Unterbereiche unterteilt ist, von denen jeder zumindest ein Stromquellenmittel und ein Stromversorgungsmittel (3) aufweist.

**2.** Verfahren zur Herstellung von erwärmten und geformten Gegenständen nach Anspruch 1, **dadurch gekennzeichnet, dass** der hochfrequente Wechselstrom an die Formen (5, 7, 10) mit Hilfe eines schienenförmigen Stromversorgungsmittels (3) angelegt wird, das in den Unterbereichen durchgehend entlang der Bewegungsbahn angeordnet ist, und dass jede der Formen mit Stromaufnahmemitteln (4) ausgestattet ist und den hochfrequenten Wechselstrom von dem schienenförmigen Stromversorgungsmittel (3) berührungsfrei aufnimmt bzw. erhält.

**3.** Verfahren zur Herstellung von erwärmten und geformten Gegenständen nach Anspruch 2, **dadurch gekennzeichnet, dass** das Stromaufnahmemittel (4) wie eine Platte geformt ist, das schienenförmige Stromversorgungsmittel (3) eine dem Stromaufnahmemittel (4) gegenüber liegende Oberfläche aufweist und der hochfrequente Wechselstrom **dadurch** berührungsfrei angelegt wird, dass das plattenförmige Stromaufnahmemittel gegenüber liegend der Oberfläche angeordnet wird.

**4.** Verfahren zur Herstellung von erwärmten und geformten Gegenständen nach Anspruch 3, mit den Schritten des Festlegens eines Bereichs, in welchem das schienenförmige Stromversorgungsmittel (3) und das Stromaufnahmemittel (4) einander gegenüber liegen, und des Veränderns des Bereichs entlang der Bewegungsbahn der Formen (5, 7, 10), um die Amplitude des an die Formen (5, 7, 10) angelegten hochfrequenten Wechselstroms mit Hilfe des Stromaufnahmemittels (4) zu ändern.

**5.** Verfahren zur Herstellung von erwärmten und geformten Gegenständen nach Anspruch 4, mit dem Schritt des Festlegens des Bereichs auf dem schienenförmigen Stromversorgungsmittel (3).

**6.** Verfahren zur Herstellung von erwärmten und geformten Gegenständen nach Anspruch 3, mit dem Schritt, dass ein Abstand zwischen dem schienenförmigen Stromversorgungsmittel (3) und dem Stromaufnahmemittel (4) entlang der Bewegungsbahn der Formen (5, 7, 10) geändert wird, um die Amplitude des an die Formen (5, 7, 10) angelegten hochfrequenten Wechselstroms mit Hilfe des Stromaufnahmemittels zu verändern.

**7.** Verfahren zur Herstellung von erwärmten und geformten Gegenständen nach Anspruch 1, mit den Schritten einer Bestimmung der Länge von jedem der Unterbereiche und des Begrenzens der Änderungsrate der in dem gesamten Unterbereich zu erwärmenden und sich fortlaufend bewegenden Formen (5, 7, 10) durch Anpassen der Länge auf weniger als 0,5.

**8.** Verfahren zur Herstellung von erwärmten und geformten Gegenständen nach Anspruch 7, bei dem der Schritt des Begrenzens eine Begrenzung der Änderungsrate auf weniger als 0,1 umfasst, und zwar für den Fall, dass einer der Unterbereiche entweder einem Anfangsstadium oder einem Endstadium des Erwärmens der Ausgangsmaterialien (14) entspricht.

**9.** Verfahren zur Herstellung von erwärmten und geformten Gegenständen nach Anspruch 1, mit den weiteren Schritten, dass für jede Form (5, 7, 10) eine Mehrzahl von Formhälften bereitgestellt wird, die einen Versorgungselektrodenblock, der von dem Stromversorgungsmittel elektrische Energie aufnimmt bzw. erhält, und einen auf Masse geerdeten Erdungselektrodenblock aufweisen, und dass jeder der Blöcke zueinander elektrisch isoliert ist.

**10.** Verfahren zur Herstellung von erwärmten und geformten Gegenständen nach Anspruch 9, mit dem Schritt, dass jede der Formen (5, 7, 10) als eine vereinigte bzw. zusammen gefügte Form bereitgestellt wird, die eine Mehrzahl von Formen (5a, 5b, 5c, 5d; 7a, 7b) miteinander vereint.

11. Verfahren zur Herstellung von erwärmten und geformten Gegenständen nach Anspruch 1, bei dem sowohl ein dielektrischer Erwärmungsvorgang, und zwar durch Anlegen des hochfrequenten Wechselstroms, als auch ein externer Erwärmungsvorgang, und zwar mit Hilfe eines externen Erwärmungsmittels, zumindest in einem Teil des Erwärmungsbereichs angewendet wird.

12. Verfahren zur Herstellung von erwärmten und geformten Gegenständen nach Anspruch 1, weiterhin umfassend den Schritt, dass in dem Erwärmungsbereich eine Anwendungs-Ruhezone (b2-2) beinhaltet ist, wobei in dieser Zone kein hochfrequenter Wechselstrom angelegt wird.

13. Verfahren zur Herstellung von erwärmten und geformten Gegenständen nach Anspruch 12, wobei die in dem Erwärmungsbereich vorgesehene Anwendungs-Ruhezone in einem Bereich festgelegt wird, der zumindest entweder einem Anfangsstadium oder einem Endstadium des Erwärmens der Ausgangsmaterialien (14) entspricht.

14. Verfahren zur Herstellung von erwärmten und geformten Gegenständen nach Anspruch 1, wobei in den Unterbereichen unterschiedliche Bedingungen des Anlegens des hochfrequenten Wechselstroms an die Formen festgelegt werden.

15. Verfahren zur Herstellung von erwärmten und geformten Gegenständen nach Anspruch 14, bei dem der Schritt des unterschiedlichen Festlegens der Bedingungen den Schritt umfasst, dass zumindest eine der nachfolgenden Bedingungen angewendet wird: eine Ausgangsgröße des hochfrequenten Wechselstroms in jedem der Unterbereiche, eine Ausgangsgröße des hochfrequenten Wechselstroms, der an jede der Formen (5, 7, 10) angelegt wird, und eine Länge von jedem der Unterbereiche.

16. Verfahren zur Herstellung von erwärmten und geformten Gegenständen nach Anspruch 14, bei dem der Schritt des unterschiedlichen Festlegens der Bedingungen den Schritt umfasst, dass die Bedingungen in Abhängigkeit von Eigenschaften der Ausgangsmaterialien festgelegt werden, die sich in Abhängigkeit von dem hochfrequenten Wechselstrom ändern.

17. Verfahren zur Herstellung von erwärmten und geformten Gegenständen nach Anspruch 1, bei dem der Schritt des Einbringens der Ausgangsmaterialien (14) umfasst, dass die Formen mit einer stärkehaltigen und wässrigen Mischung befüllt werden, die zumindest Stärke und Wasser enthält und über ein Fließvermögen oder eine Formbarkeit verfügt, und wobei gebackene bzw. erwärmte und geformte Gegenstände als erwärmte und geformte Gegenstände hergestellt werden.

18. Verfahren zur Herstellung von erwärmten und geformten Gegenständen nach Anspruch 17, wobei Mehl als Stärke in der stärkehaltigen und wässrigen Mischung verwendet wird und die gebackenen bzw. erwärmten und geformten Gegenstände geformte und gebackene Konfekte bzw. Mehlspeisen darstellten, die hauptsächlich Mehl enthalten.

19. Verfahren zur Herstellung von erwärmten und geformten Gegenständen nach Anspruch 1, bei dem der Schritt des fortlaufenden Transportierens der Formen entlang der Bewegungsbahn umfasst:

es werden Formbewegungsmittel (5, 7) bereitgestellt, einschließlich eines Förderbands (6), und
das Förderband (6) wird mit Hilfe von Achsen drehbeweglich gestreckt.

20. Verfahren zur Herstellung von erwärmten und geformten Gegenständen nach Anspruch 1, bei dem der Schritt des dielektrischen Erwärmens und Formens der Ausgangsmaterialien (14) ein berührungsfreies Anlegen des hochfrequenten Wechselstroms an die elektrisch leitenden Formen durch das Stromversorgungsmittel umfasst.

21. Hochfrequenzdurchlauferwärmungsvorrichtung, umfassend:

eine Mehrzahl von elektrisch leitenden Formen (5, 7, 10), wobei die zu erwärmenden Ausgangsmaterialien (14) zwischen einem Paar von Elektroden (12, 13) angeordnet sind,
ein Formen-Bewegungsmittel (9), das ausgelegt ist, um die Formen (5, 7, 10) fortlaufend entlang einer Bewegungsbahn zu transportieren, und
eine Mehrzahl von Stromversorgungsmitteln (3), die entlang der Bewegungsbahn vorgesehen sind, wobei jedes der Stromversorgungsmittel ausgelegt ist, um an die sich bewegenden Formen (5, 7, 10) einen hochfrequenten Wechselstrom fortlaufend und berührungsfrei anzulegen, um die zu erwärmenden Ausgangsmaterialien (14) dielektrisch zu erwärmen,

wobei die Vorrichtung **dadurch gekennzeichnet ist, dass**:

die Stromversorgungsmittel (3) durchgehend entlang der Bewegungsbahn angeordnet sind,

von den durchgehend angeordneten Stromversorgungsmitteln (3) ein Erwärmungsbereich (B) festgelegt ist, und

jedes der Stromversorgungsmittel ein Stromquellenmittel (2) aufweist.

22. Hochfrequenzdurchlauferwärmungsvorrichtung nach Anspruch 21, **dadurch gekennzeichnet, dass** das Stromversorgungsmittel (3) und die Formen (5, 7, 10) einander nicht berühren.

23. Hochfrequenzdurchlauferwärmungsvorrichtung nach Anspruch 22, **dadurch gekennzeichnet, dass**:

das Stromversorgungsmittel (3) schienenförmig ausgebildet ist und entlang des Erwärmungsbereichs der Bewegungsbahn durchgehend angeordnet ist, um die Formen (5, 7, 10) mit einem Wechselstrom zu versorgen, die Formen (10) mit Stromaufnahmemitteln versehen sind und die Stromaufnahmemittel (4) und schienenförmigen Stromversorgungsmittel einander nicht berühren, so dass der hochfrequente Wechselstrom von den schienenförmigen Stromversorgungsmitteln von den Formen berührungsfrei aufgenommen bzw. erhalten wird.

24. Hochfrequenzdurchlauferwärmungsvornchtung nach Anspruch 23, **dadurch gekennzeichnet, dass** das Stromaufnahmemittel plattenförmig ist, das schienenförmige Stromversorgungsmittel (3) eine Oberfläche aufweist, die dem Stromaufnahmemittel (4) gegenüber liegt und das plattenförmige Stromaufnahmemittel gegenüber liegend der Oberfläche angeordnet ist, so dass der hochfrequente Wechselstrom an die Erwärmungseinheiten berührungsfrei angelegt wird.

25. Hochfrequenzdurchlauferwärmungsvorrichtung nach Anspruch 24, wobei:

das schienenförmige Stromversorgungsmittel und das plattenförmige Stromaufnahmemittel jeweils einander gegenüber liegende Oberflächen aufweisen, das schienenförmige Stromversorgungsmittel oder das plattenförmige Stromaufnahmemittel eine Anordnung aufweist, die einen Bereich festlegt, der entlang der Bewegungsbahn der Formen (5, 7, 10) zwischen den einander gegenüber liegenden Oberflächen veränderlich ist, um eine Amplitude der über das Stromaufnahmemittel an die Formen angelegten hochfrequenten Wechselstroms zu ändern.

26. Hochfrequenzdurchlauferwärmungsvorrichtung nach Anspruch 25, bei der das schienenförmige Stromversorgungsmittel (3) mit dem Bereich zwischen den einander gegenüber liegenden Oberflächen entlang der Bewegungsbahn vorgesehen bzw. angeordnet ist.

27. Hochfrequenzdurchlauferwärmungsvorrichtung nach Anspruch 24, wobei sich auf dem schienenförmigen Stromversorgungsmittel (3) eine Anordnung befindet, wo sich der Abstand zwischen dem Stromaufnahmemittel (4) und dem Stromversorgungsmittel (3) entlang der Bewegungsbahn der Formen verändert, um eine Amplitude des über das Stromaufnahmemittel (4) an die Formen (5, 7, 10) angelegten hochfrequenten Wechselstroms zu verändern.

28. Hochfrequenzdurchlauferwärmungsvorrichtung nach Anspruch 21, wobei jeder der Unterbereiche eine solche Länge aufweist, dass eine Änderungsrate der sich fortlaufend bewegenden Formen (5, 7, 10), die von dem gesamten Stromversorgungsmittel erwärmt werden, weniger als 0,5 beträgt.

29. Hochfrequenzdurchlauferwärmungsvorrichtung nach Anspruch 28, wobei:

der Erwärmungsbereich aufeinander folgende Erwärmungsstadium-Zonen umfasst, einschließlich einer Anfangs-Erwärmungsstadium-Zone und einer End-Erwärmungsstadium-Zone, die Stromversorgungsmittel (3) in der Zone des Erwärmungsbereichs angeordnet sind, die zumindest entweder der Anfangs-Erwärmungsstadium-Zone oder der End-Erwärmungsstadium-Zone entspricht, und die Länge des Stromversorgungsmittels **dadurch** bestimmt bzw. festgelegt ist, dass die Änderungsrate der sich fortlaufend bewegenden Formen (5, 7, 10) weniger als 0,1 beträgt.

**30.** Hochfrequenzdurchlauferwärmungsvorrichtung nach Anspruch 23, wobei ein Paar von Elektroden (12, 13) Stromaufnahmemittel aufweisen, die aus einer Stromversorgungselektrode, die von dem Stromversorgungsmittel elektrische Energie empfängt bzw. aufnimmt, und einer auf Masse geerdete Erdungselektrode besteht, wobei die Stromversorgungs- und Erdungselektrode gegeneinander elektrisch isoliert sind.

**31.** Hochfrequenzdurchlauferwärmungsvorrichtung nach Anspruch 21, wobei der Erwärmungsbereich eine Anwendungs-Ruhezone beinhaltet, die frei von dem hochfrequenten Wechselstrom ist.

**32.** Hochfrequenzdurchlauferwärmungsvorrichtung nach Anspruch 31, wobei
der Erwärmungsbereich aufeinander folgende Erwärmungsstadium-Zonen umfasst, einschließlich einer Anfangs-Erwärmungsstadium-Zone und einer End-Erwärmungsstadium-Zone, und
die in dem Erwärmungsbereich beinhaltete Anwendungs-Ruhezone in einem Bereich vorgesehen ist, der zumindest entweder der Anfangs-Erwärmungsstadium-Zone oder der End-Erwärmungsstadium-Zone entspricht.

**33.** Hochfrequenzdurchlauferwärmungsvorrichtung nach Anspruch 21, wobei das Formen-Bewegungsmittel (5, 7, 10) ein Förderband (6) umfasst, das von Achsen drehbeweglich gestreckt ist.

**34.** Hochfrequenzdurchlauferwärmungsvorrichtung nach Anspruch 33, wobei die zu erwärmenden Objekte Rohmaterialien (14) umfassen, die in elektrisch leitende Formen (5, 7, 10) eingebracht sind, von denen jede eine Mehrzahl von Formhälften (5a, 5b, 5c, 5d; 7a, 7b) umfasst, einschließlich eines Versorgungselektrodenblocks (12, 13), der von dem Stromversorgungsmittel (3) elektrische Energie (4) aufnimmt bzw. erhält, und eines Erdungselektrodenblocks, der auf Masse geerdet ist, wobei jeder der Blöcke gegeneinander elektrisch isoliert ist.

**35.** Hochfrequenzdurchlauferwärmungsvorrichtung nach Anspruch 34, wobei jede der Formen (5, 7, 10) eine vereinigte bzw. zusammen gefügte Form ist, die eine Mehrzahl von Formen miteinander vereint.

**Revendications**

**1.** Procédé pour fabriquer des articles chauffés et moulés, comprenant les étapes consistant à :

- alimenter en matières premières (14) des moules conducteurs de l'électricité (5, 7, 10) ;
- transférer de manière continue les moules (5, 7, 10) le long d'un passage de déplacement ; et
- chauffer et mouler de manière diélectrique les matières premières (14), en appliquant de manière continue et sans contact un courant alternatif à haute fréquence aux moules en ' déplacement (5, 7, 10) dans une zone de chauffage (B) prévue le long du passage de déplacement,

la zone de chauffage étant divisée en zones secondaires, dont chacune comporte au moins un moyen formant source de puissance et un moyen formant alimentation de puissance (3).

**2.** Procédé pour fabriquer des articles chauffés et moulés selon la revendication 1, **caractérisé en ce que** le courant alternatif à haute fréquence est appliqué aux moules (5, 7, 10) par des moyens de fourniture de puissance en forme de rail (3) disposés de manière continue le long du passage de déplacement dans les zones secondaires, et chacun des moules est équipé avec des moyens de réception de puissance (4) et reçoit sans contact le courant alternatif à haute fréquence provenant des moyens de fourniture de puissance en forme de rail (3).

**3.** Procédé pour fabriquer des articles chauffés et moulés selon la revendication 2, **caractérisé en ce que** les moyens de réception de puissance (4) sont formés comme une plaque, les moyens de fourniture de puissance en forme de rail (3) comportent une surface située en face des moyens (4) de réception de puissance, et le courant alternatif à haute fréquence est appliqué sans contact en plaçant les moyens de réception de puissance en forme de plaque en face de ladite surface.

**4.** Procédé pour fabriquer des articles chauffés et moulés selon la revendication 3, comprenant les étapes consistant à définir une zone dans laquelle les moyens de fourniture de puissance en forme de rail (3) et les moyens de réception de puissance (4) sont opposés les uns aux autres, et à modifier ladite zone le long du passage de déplacement des moules (5, 7, 10) pour modifier un niveau dudit courant alternatif à haute fréquence appliqué aux moules (5, 7, 10) par le biais des moyens de réception de puissance (4).

**5.** Procédé pour fabriquer des articles chauffés et moulés selon la revendication 4, comprenant l'étape consistant à définir ladite zone sur les moyens de fourniture de puissance en forme de rail (3).

**6.** Procédé pour fabriquer des articles chauffés et moulés selon la revendication 3, comprenant les étapes consistant à modifier une distance entre les moyens de fourniture de puissance en forme de rail (3) et les moyens de réception de puissance (4), le long du passage de déplacement des moules (5, 7, 10), pour modifier un niveau du courant alternatif à haute fréquence appliqué aux moules (5, 7, 10) par le biais des moyens de réception de puissance.

**7.** Procédé pour fabriquer des articles chauffés et moulés selon la revendication 1, comprenant les étapes consistant à déterminer une longueur de chacune des zones secondaires et à limiter à moins de 0,5 un taux de variation des moules se déplaçant de manière continue (5, 7, 10) à chauffer dans la zone secondaire entière, en adaptant ladite longueur.

**8.** Procédé pour fabriquer des articles chauffés et moulés selon la revendication 7, dans lequel l'étape de limitation comprend la limitation dudit taux de variation à moins de 0,1 %, dans le cas où une des zones secondaires correspond à un étage initial ou à un étage final du chauffage des matières premières (14).

**9.** Procédé de fabrication d'articles chauffés et moulés selon la revendication 1, comprenant les étapes supplémentaires de produire, pour chaque moule (5, 7, 10), une pluralité de moitiés de moule comprenant un bloc d'électrode d'alimentation recevant une fourniture de puissance depuis les moyens de fourniture de puissance et un bloc d'électrode de terre relié à la terre, et isolant chacun desdits blocs les uns des autres.

**10.** Procédé pour fabriquer des articles chauffés et moulés selon la revendication 9, comprenant l'étape consistant à produire chacun des moules (5, 7, 10) comme un moule unifié intégrant une pluralité de moules (5a, 5b, 5c, 5d ; 7a, 7b).

**11.** Procédé pour fabriquer des articles chauffés et moulés selon la revendication 1, comprenant à la fois l'application d'un chauffage diélectrique, en appliquant le courant alternatif à haute fréquence, et un chauffage externe, par des moyens de chauffage externes, au moins dans une partie de la zone de chauffage.

**12.** Procédé pour fabriquer des articles chauffés et moulés selon la revendication 1, comprenant en outre l'étape consistant à inclure une zone de suspension d'application (b2-2) dans la zone de chauffage, aucun courant alternatif à haute fréquence n'étant appliqué dans ladite zone.

**13.** Procédé pour fabriquer des articles chauffés et moulés selon la revendication 12, comprenant la définition de la zone de suspension d'application comprise dans la zone de chauffage comme une zone correspondant à au moins un étage initial ou un étage final de chauffage des matières premières (14).

**14.** Procédé pour fabriquer des articles chauffés et moulés selon la revendication 1, comprenant la spécification de manière différente des conditions d'application du courant alternatif à haute fréquence aux moules dans chacune des zones secondaires.

**15.** Procédé pour fabriquer des articles chauffés et moulés selon la revendication 14, dans lequel l'étape de spécification de manière différente des conditions comprend l'étape consistant à appliquer au moins une des conditions suivantes : une sortie de courant alternatif à haute fréquence dans chacune des zones secondaires, une sortie de courant alternatif à haute fréquence appliqué à chacun des moules (5, 7, 10) et une longueur de chacune des zones secondaires.

**16.** Procédé de fabrication d'articles chauffés et moulés selon la revendication 14, dans lequel l'étape de spécification de manière différente des conditions comprend l'étape consistant à spécifier lesdites conditions en fonction de propriétés des matières premières qui sont modifiées en appliquant ledit courant alternatif à haute fréquence.

**17.** Procédé de fabrication d'articles chauffés et moulés selon la revendication 1, dans lequel l'étape consistant à fournir les matières premières (14) comprend l'alimentation desdits moules avec un mélange aqueux de féculent comprenant au moins de l'amidon et de l'eau et ayant une fluidité ou une plasticité, et des articles cuits et moulés sont fabriqués comme des articles chauffés et moulés.

**18.** Procédé de fabrication d'articles chauffés et moulés selon la revendication 17, comprenant l'utilisation de farine comme amidon dans le mélange aqueux de féculent, et les articles cuits et moulés sont des confiseries moulées et cuites contenant principalement de la farine.

19. Procédé de fabrication d'articles chauffés et moulés selon la revendication 1, dans lequel l'étape de transfert de manière continue des moules le long du passage de déplacement comprend :

- la fourniture de moyens de déplacement de moule (5, 7) comprenant un transporteur (6), et
- le fait de tendre de manière rotative ledit transporteur (6) par des axes.

20. Procédé de fabrication d'articles chauffés et moulés selon la revendication 1, dans lequel l'étape de chauffage de manière diélectrique et de moulage des matières premières (14) comprend l'application sans contact dudit courant alternatif à haute fréquence aux moules conducteurs de l'électricité à partir des moyens de fourniture de puissance.

21. Appareil de chauffage en continu à haute fréquence comprenant :

- une pluralité de moules conducteurs de l'électricité (5, 7, 10) dans lesquels les matières premières (14) à chauffer sont disposées entre une paire d'électrodes (12, 13),
- des moyens de déplacement de moules (9) adaptés à transférer de manière continue les moules (5, 7, 10) le long d'un passage de déplacement, et
- une pluralité de moyens de fourniture de puissance (3) prévus le long du passage de déplacement, chacun desdits moyens de fourniture de puissance étant adapté pour :

    appliquer de manière continue et sans contact un courant alternatif à haute fréquence aux moules en déplacement (5, 7, 10) pour chauffer de manière diélectrique lesdites matières premières (14), ledit appareil étant **caractérisé en ce que** :

- les moyens de fourniture de puissance (3) sont disposés de manière continue le long du passage de déplacement,
- une zone de chauffage (B) est définie par lesdits moyens de fourniture de puissance disposés de manière continue (3), et
- chacun desdits moyens de fourniture de puissance comporte un moyen formant source de puissance (2).

22. Appareil de chauffage en continu à haute fréquence selon la revendication 21, **caractérisé en ce que** les moyens de fourniture de puissance (3) et les moules (5, 7, 10) n'ont pas de contact les uns avec les autres.

23. Appareil de chauffage en continu à haute fréquence selon la revendication 22, **caractérisé en ce que** :

- les moyens de fourniture de puissance (3) sont formés comme un rail disposé de manière continue le long de la zone de chauffage du passage de déplacement, pour alimenter les moules (5, 7, 10) en courant alternatif,
- les moules (5, 7, 10) sont équipés de moyens de réception de puissance, et
- lesdits moyens de réception de puissance (4) et les moyens de fourniture de puissance en forme de rail sont disposés sans contact les uns avec les autres,

de telle sorte que ledit courant alternatif à haute fréquence est reçu sans contact par les moules (5, 7, 10) à partir des moyens de fourniture de puissance en forme de rail.

24. Appareil de chauffage en continu à haute fréquence selon la revendication 23, **caractérisé en ce que** :

- les moyens de réception de puissance sont formés comme une plaque,
- les moyens de fourniture de puissance en forme de rail (3) présentent une surface située en face des moyens de réception de puissance (4), et
- les moyens de réception de puissance en forme de plaque sont placés en face de la surface, de telle sorte que le courant alternatif à haute fréquence est appliqué sans contact aux unités de chauffage.

25. Appareil de chauffage en continu à haute fréquence selon la revendication 24, dans lequel :

- les moyens de fourniture de puissance en forme de rail et les moyens de réception de puissance en forme de plaque ont des surfaces respectivement opposées,

- les moyens de fourniture de puissance en forme de rail ou les moyens de réception de puissance en forme de plaque ont une structure définissant une zone qui est modifiée entre lesdites surfaces opposées le long du passage de déplacement des moules (5, 7, 10) pour modifier un niveau du courant alternatif à haute fréquence appliqué aux moules (5, 7, 10) par le biais des moyens de réception de puissance.

26. Appareil de chauffage en continu à haute fréquence selon la revendication 25, dans lequel les moyens de fourniture de puissance en forme de rail (3) sont munis de ladite zone entre les surfaces opposées le long dudit passage de déplacement.

27. Appareil de chauffage en continu à haute fréquence selon la revendication 24, dans lequel, sur les moyens de fourniture de puissance en forme de rail (3), se trouve une structure dans laquelle une distance entre les moyens de réception de puissance (4) et les moyens de fourniture de puissance (3) est modifiée le long du passage de déplacement des moules (5, 7, 10) pour modifier un niveau du courant alternatif à haute fréquence appliqué aux moules (5, 7, 10) par le biais des moyens de réception de puissance (4).

28. Appareil de chauffage en continu à haute fréquence selon la revendication 21, dans lequel chacune des zones secondaires a une longueur telle qu'un taux de variation des moules (5, 7, 10) se déplaçant de manière continue chauffés par les moyens de fourniture de puissance entiers est inférieur à 0,5.

29. Appareil de chauffage en continu à haute fréquence selon la revendication 28, dans lequel :

- la zone de chauffage comprend des zones d'étages de chauffage successifs comprenant une zone d'étage de chauffage initial et une zone d'étage de chauffage final,
- les moyens de fourniture de puissance (3) sont disposés dans la zone de la zone de chauffage correspondant à au moins ladite zone d'étage de chauffage initial ou ladite zone d'étage de chauffage final, et
- la longueur des moyens de fourniture de puissance est déterminée pour limiter le taux de variation des moules (5, 7, 10) se déplaçant de manière continue pour qu'il soit inférieur à 0,1.

30. Appareil de chauffage en continu à haute fréquence selon la revendication 23, dans lequel une paire d'électrodes (12, 13) comportent des moyens de réception de puissance consistant en une électrode de fourniture de puissance recevant une fourniture de puissance depuis les moyens de fourniture de puissance et une électrode de terre reliée à la terre, lesdites électrodes de fourniture de puissance et de terre étant isolées l'une de l'autre.

31. Appareil de chauffage en continu à haute fréquence selon la revendication 21, dans lequel la zone de chauffage comprend une zone de suspension d'application dépourvue de courant alternatif à haute fréquence.

32. Appareil de chauffage en continu à haute fréquence selon la revendication 31, dans lequel :

- la zone de chauffage comprend des zones d'étages de chauffage successifs comprenant une zone d'étage de chauffage initial et une zone d'étage de chauffage final, et
- la zone de suspension d'application comprise dans la zone de chauffage est prévue dans une zone correspondant à au moins ladite zone d'étage de chauffage initial ou ladite zone d'étage de chauffage final.

33. Appareil de chauffage en continu à haute fréquence selon la revendication 21, dans lequel les moyens de déplacement de moule (5, 7, 10) comprennent un transporteur (6) tendu de manière rotative par des axes.

34. Appareil de chauffage en continu à haute fréquence selon la revendication 33, dans lequel les objets à chauffer comprennent des matières premières (14) alimentées dans des moules conducteurs de l'électricité (5, 7, 10) dont chacun comprend une pluralité de moitiés de moule (5a, 5b, 5c, 5d ; 7a, 7b) comprenant un bloc d'électrode de fourniture (12, 13) recevant une fourniture de puissance (4) depuis les moyens de fourniture de puissance (3) et un bloc d'électrode de terre relié à la terre, chacun desdits blocs étant isolé l'un de l'autre.

35. Appareil de chauffage en continu à haute fréquence selon la revendication 34, dans lequel chacun des moules (5, 7, 10) est un moule unifié intégrant une pluralité de moules.

FIG. 1

2a

SUB-ZONE b1
OUTPUT 50kW
LENGTH 12.5 UNITED METAL MOLDS
(0.8kW / METAL MOLD)

3a

5

B

6

15b

15a

3b

2b

SUB-ZONE b2
OUTPUT 50kW
LENGTH 12.5 UNITED METAL MOLDS
(0.8kW / METAL MOLD)

EP 1 386 710 B1

FIG. 2

FIG. 3 (a)

FIG. 3 (b)

EP 1 386 710 B1

FIG. 4 (a)

FIG. 4 (b)

EP 1 386 710 B1

FIG. 5 (a)

FIG. 5 (b)

FIG. 6 (a)

E

E

8b

FIG. 6 (b)

8b

FIG. 7 (a)

FIG. 7 (b)

FIG. 8 (a)

FIG. 8 (b)

EP 1 386 710 B1

FIG. 9 (a)

FIG. 9 (b)

FIG. 10 (a)

FIG. 10 (b)

FIG. 10 (c)

FIG. 11 (a)

FIG. 11 (b)

FIG. 12

SUB-ZONE b1
OUTPUT 361W
LENGTH 9 UNITED METAL MOLDS
(0.81W / METAL MOLD)

SUB-ZONE b2
OUTPUT 641W
LENGTH 16 UNITED METAL MOLDS
(0.81W / METAL MOLD)

2a

3a

5

6

15b

15a

B

3b

2b

EP 1 386 710 B1

FIG. 13

SUB-ZONE b1
OUTPUT 64kW
LENGTH 16 UNITED METAL MOLDS
(0.8kW / METAL MOLD)

2a

3a

5

6

15b

15a

B →

SUB-ZONE b2
OUTPUT 9kW
LENGTH 9 UNITED METAL MOLDS
(0.8kW / METAL MOLD)

2b

3b

FIG. 14

SUB-ZONE b2
OUTPUT 20kW
LENGTH 5 UNITED METAL MOLDS
(0.8kW / METAL MOLD)

2b

2a

SUB-ZONE b1
OUTPUT 20kW
LENGTH 5 UNITED METAL MOLDS
(0.8kW / METAL MOLD)

3b

3a

2c

3c

5

6

B →

15b

15a

SUB-ZONE b3
OUTPUT 20kW
LENGTH 5 UNITED METAL MOLDS
(0.8kW / METAL MOLD)

3d

3e

SUB-ZONE b4
OUTPUT 20kW
LENGTH 5 UNITED METAL MOLDS
(0.8kW / METAL MOLD)

2d

2e

SUB-ZONE b5
OUTPUT 20kW
LENGTH 5 UNITED METAL MOLDS
(0.8kW / METAL MOLD)

FIG. 15

SUB-ZONE b2
OUTPUT 20kW
LENGTH 5 UNITED METAL MOLDS
(0.8kW / METAL MOLD)

SUB-ZONE b1
OUTPUT 5kW
LENGTH 5 UNITED METAL MOLDS
(0.2kW / METAL MOLD)

2b

2a

2c

3b

3a

3c

5

6

15b

15a

B

SUB-ZONE b3
OUTPUT 50kW
LENGTH 5 UNITED METAL MOLDS
(2.0kW / METAL MOLD)

3d

3e

SUB-ZONE b4
OUTPUT 20kW
LENGTH 5 UNITED METAL MOLDS
(0.8kW / METAL MOLD)

2d

2e

SUB-ZONE b5
OUTPUT 5kW
LENGTH 5 UNITED METAL MOLDS
(0.2kW / METAL MOLD)

EP 1 386 710 B1

FIG. 16

SUB-ZONE b2
OUTPUT 90kW
LENGTH 15 UNITED METAL MOLDS
(1.2kW / METAL MOLD)

2a

3a

SUB-ZONE b1
OUTPUT 5kW
LENGTH 5 UNITED METAL MOLDS
(0.2kW / METAL MOLD)

2b

3b

5

6

B

15b

15a

3c

2c

SUB-ZONE b3
OUTPUT 50kW
LENGTH 5 UNITED METAL MOLDS
(2.0kW / METAL MOLD)

EP 1 386 710 B1

63

FIG. 17

HIGH-FREQUENCY
APPLICATION SUSPENSION ZONE b2-2

LENGTH 5 UNITED METAL MOLDS

2a

SUB-ZONE b1
OUTPUT 5kW
LENGTH 5 UNITED METAL MOLDS
(0.2kW / METAL MOLD)

2c

3a

3c

5

6

15b

15a

B →

SUB-ZONE b3
OUTPUT 50kW
LENGTH 5 UNITED METAL MOLDS
(2.0kW / METAL MOLD)

3d

3e

SUB-ZONE b4
OUTPUT 40kW
LENGTH 5 UNITED METAL MOLDS
(1.6kW / METAL MOLD)

2d

2e

SUB-ZONE b5
OUTPUT 5kW
LENGTH 5 UNITED METAL MOLDS
(0.2kW / METAL MOLD)

EP 1 386 710 B1

FIG. 18

SUB-ZONE b1
OUTPUT 50kW
LENGTH  9 UNITED METAL MOLDS
(1.1kW / METAL MOLD)

2a

3a

5

B

6

HIGH-FREQUENCY
APPLICATION SUSPENSION ZONE d

LENGTH  5 UNITED METAL MOLDS

15b

15a

HEATING ZONE b2
OUTPUT 50kW
LENGTH  11 UNITED METAL MOLDS
(0.9kW / METAL MOLD)

3b

2b

FIG. 19 (a)

5

6

9a(9)

7

FIG. 19 (b)

A

9a(9)

5

6

9a(9)

15b

9b(9)

15a

B

C

9b(9)

EP 1 386 710 B1

66

FIG. 20 (a)

5

FIG. 20 (b)

FIG. 21 (a)

FIG. 21 (b)

FIG. 22 (a)

FIG. 22 (b)

EP 1 386 710 B1

FIG. 23 (a)

FIG. 23 (b)

FIG. 24

BACKGROUND ART

HEATING ZONE B
OUTPUT 9kW
LENGTH 11 (RAITED)METAL MOLDS
(0.9kW / METAL MOLD)

FIG. 25

BACKGROUND ART

FIG. 26

SUB-ZONE b2
OUTPUT 20kW
LENGTH 5 UNITED METAL MOLDS
(0.8kW / METAL MOLD)

2b

2c

3b

EXTERNAL SINGLE HEATING ZONE
(HIGH-FREQUENCY
APPLICATION SUSPENSION ZONE)
b1-1

3c

5

6

B →

15b

15a

SUB-ZONE b3
OUTPUT 30kW
LENGTH 5 UNITED METAL MOLDS
(1.2kW / METAL MOLD)

3d

3e

2d

2e

SUB-ZONE b4
OUTPUT 30kW
LENGTH 5 UNITED METAL MOLDS
(1.2kW / METAL MOLD)

SUB-ZONE b5
OUTPUT 20kW
LENGTH 5 UNITED METAL MOLDS
(0.8kW / METAL MOLD)

EP 1 386 710 B1

FIG. 27

SUB-ZONE b1
OUTPUT 20kW
LENGTH 5 UNITED METAL MOLDS
(0.8kW / METAL MOLD)

SUB-ZONE b2
OUTPUT 30kW
LENGTH 5 UNITED METAL MOLDS
(1.2kW / METAL MOLD)

SUB-ZONE b3
OUTPUT 30kW
LENGTH 5 UNITED METAL MOLDS
(1.2kW / METAL MOLD)

SUB-ZONE b4
OUTPUT 20kW
LENGTH 5 UNITED METAL MOLDS
(0.8kW / METAL MOLD)

EXTERNAL SINGLE HEATING ZONE
(HIGH-FREQUENCY
APPLICATION SUSPENSION ZONE)
b5-1

FIG. 28 (a)

FIG. 28 (b)

FIG. 29 (a)

FIG. 29 (b)

FIG. 30 (a)

FIG. 30 (b)

FIG. 31 (a)

FIG. 31 (b)

FIG. 32 (a)

FIG. 32 (b)

FIG. 33 (a)

FIG. 33 (b)

FIG. 34 (a)

**2b**

OUTPUT 5kW
(2.17-2.9kW / METAL MOLD)

3

4

4

7

7

NUMBER OF POWER RECEIVING SECTIONS INSERTED
INTO POWER FEEDING SECTION : 1.7-2.3 PLATES
AVERAGE NUMBER OF INSERTED PLATES : 2 PLATES ±15%

FIG. 34 (b)

ANODE CURRENT

0.7A

0.5A

0.3A

TIME

FIG. 35 (a)

2b

OUTPUT 5kW
(1.25-1.47kW / METAL MOLD)

3

4

7

NUMBER OF POWER RECEIVING SECTIONS INSERTED
INTO POWER FEEDING SECTION : 3.4-4.0 PLATES
AVERAGE NUMBER OF INSERTED PLATES : 3.7 PLATES ±8%

FIG. 35 (b)

ANODE CURRENT

0.7A

0.6A

0.5A

TIME

FIG. 36 (a)

2

OUTPUT 5kW
(1.67kW / METAL MOLD)

4
3

4

7

7

NUMBER OF POWER RECEIVING SECTIONS INSERTED
INTO POWER FEEDING SECTION : FIXED AT 3 PLATES
AVERAGE NUMBER OF INSERTED PLATES : 3 PLATES ±0%

FIG. 36 (b)

ANODE CURRENT

0.7A
0.65A
0.6A

TIME

FIG. 37

FIG. 38 (a)

FIG. 38 (b)

EP 1 386 710 B1

FIG. 39

EP 1 386 710 B1

FIG. 40

EP 1 386 710 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI1142755 B
- US 5591491 A
- JP HEI10230527 B
- US 4906172 A